(19) Europäisches Patentamt
European Patent Office
Office européen des brevets

(11) EP 2 721 768 B1

(12) **EUROPEAN PATENT SPECIFICATION**

(45) Date of publication and mention
of the grant of the patent:
**18.12.2019 Bulletin 2019/51**

(51) Int Cl.:
*H04L 9/32* (2006.01)       *H04L 9/00* (2006.01)
*G09C 5/00* (2006.01)       *G06F 21/16* (2013.01)

(21) Application number: **12718653.4**

(22) Date of filing: **02.05.2012**

(86) International application number:
**PCT/EP2012/058033**

(87) International publication number:
**WO 2012/171712 (20.12.2012 Gazette 2012/51)**

(54) **DYNAMIC TARDOS TRAITOR TRACING SCHEMES**

DYNAMISCHE TARDOS VERRÄTER-VERFOLGUNGS-SCHEMEN

SCHEMAS DYNAMIQUES DE TRAÇAGE DE TRAITRES DE TYPE TARDOS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2011 GB 201110254**

(43) Date of publication of application:
**23.04.2014 Bulletin 2014/17**

(73) Proprietor: **Irdeto B.V.**
**2132 LS Hoofddorp (NL)**

(72) Inventors:
• **ROELSE, Peter**
**NL-2132 LS Hoofddorp (NL)**
• **DOUMEN, Jeroen**
**NL-2132 LS Hoofddorp (NL)**
• **LAARHOVEN, Thijs**
**NL-2132 LS Hoofddorp (NL)**

(74) Representative: **Boult Wade Tennant LLP**
**Salisbury Square House**
**8 Salisbury Square**
**London EC4Y 8AP (GB)**

(56) References cited:
**EP-A1- 2 249 507      US-A1- 2009 049 558**

• **STEFAN KATZENBEISSER ET AL: "Combining
Tardos Fingerprinting Codes and Fingercasting",
11 June 2007 (2007-06-11), INFORMATION
HIDING; [LECTURE NOTES IN COMPUTER
SCIENCE], SPRINGER BERLIN HEIDELBERG,
BERLIN, HEIDELBERG, PAGE(S) 294 - 310,
XP019137033, ISBN: 978-3-540-77369-6
paragraph [0003] - paragraph [0004]**
• **TEDDY FURON ET AL: "On the Design and
Optimization of Tardos Probabilistic
Fingerprinting Codes", 19 May 2008 (2008-05-19),
INFORMATION HIDING; [LECTURE NOTES IN
COMPUTER SCIENCE], SPRINGER BERLIN
HEIDELBERG, BERLIN, HEIDELBERG, PAGE(S)
341 - 356, XP019109700, ISBN: 978-3-540-88960-1
paragraphs [0002], [0003], [0004]**
• **PETER ROELSE: "Dynamic subtree tracing and
its application in pay-TV systems",
INTERNATIONAL JOURNAL OF INFORMATION
SECURITY, vol. 10, no. 3, 1 June 2011
(2011-06-01), pages 173-187, XP55001384, ISSN:
1615-5262, DOI: 10.1007/s10207-011-0126-5**

## Description

### Field of the invention

The present invention relates to a fingerprinting method and an apparatus and computer program arranged to carry out the fingerprinting method.

### Background of the invention

Digital watermarking of content is very well known. The content may comprise any type of information, and may include one or more of audio data, image data, video data, textual data, multimedia data, a web page, software products, security keys, experimental data or any other kind of data. There are many methods for performing digital watermarking of content but, in general, they all involve adding a watermark to an item of content. This involves embedding, or adding, watermark symbols (or a watermark codeword or payload data) into the original item of content to form a watermarked item of content. The watermarked item of content can then be distributed to one or more users (or recipients or receivers).

The method used for adding a watermark codeword to an item of content depends on the intended purpose of the watermark codeword. Some watermarking techniques are designed to be "robust", in the sense that the embedded watermark codeword can be successfully decoded even if the watermarked item of content has undergone subsequent processing (be that malicious or otherwise). Some watermarking techniques are designed to be "fragile", in the sense that the embedded watermark codeword cannot be successfully decoded if the watermarked item of content has undergone subsequent processing or modification. Some watermarking techniques are designed such that the difference between the original item of content and the watermarked item of content is substantially imperceptible to a human user (e.g. the original item of content and the watermarked item of content are visually and/or audibly indistinguishable to a human user). Other criteria for how a watermark is added to an item of content exist.

Digital forensic watermarking is increasingly being used to trace users who have "leaked" their content in an unauthorized manner (such as an unauthorized online distribution or publication of content). For this type of watermarking process, watermark codewords specific to each legitimate/authorized receiver are used. Each of the receivers receives a copy of the original item of content with their respective watermark codeword embedded therein. Then, if an unauthorized copy of the item of content is located, the watermark codeword can be decoded from that item of content and the receiver that corresponds to the decoded watermark codeword can be identified as the source of the leak.

However, even if we assume that the watermarking scheme itself is secure (i.e. the method by which the watermark codewords are embedded in the item of content and subsequently decoded is secure), there is still a powerful attack available against any digital forensic watermarking scheme: the so-called "collusion attack". In this type of attack, a number of users, each of whom has his own watermarked version of the item of content, form a coalition. As the watermarked versions are individually watermarked, and thus different, the coalition can spot the differences that arise from the individual watermarks in their collection of watermarked items of content. Thus, the coalition can create a forged copy of the item of content by combining bits and pieces from the various watermarked versions that they have access to. A good example of this would be by averaging these versions, or by interleaving pieces from the different versions.

Watermarking schemes alone cannot counter a collusion attack. Instead, the best way to withstand collusion attacks is by carefully selecting the sequences of watermark symbols that are used to form the watermark codewords that are then actually embedded and distributed. Such constructions are known in the literature as "traitor tracing schemes" or "fingerprinting schemes", and the watermark codewords are known as "fingerprint-codes" or sometimes simply "fingerprints". An important feature of such a scheme is the length of its fingerprint-codes, contrasted against the number of colluding users it can catch.

Various classes of traitor tracing schemes exist in the literature. One classification of traitor tracing schemes distinguishes between so-called "static" traitor tracing schemes and so-called "dynamic" traitor tracing schemes. For static traitor tracing schemes, it is assumed that the initial distributor of the watermarked items of content generates a single fingerprint-code for each receiver and distributes these to the receivers (as a watermark embedded within the item of content). Then, when the unauthorized copy (the "forgery") is found, a decoding/tracing algorithm is executed on that forgery to determine which receivers colluded to produce the forgery. This then ends the process. Static traitor tracing schemes are suitable for a single/one-off distribution of items of content (e.g. a single movie) to multiple receivers. In contrast, in a dynamic traitor tracing scheme, the distributor generates a fingerprint-code for each active/connected receiver and distributes the fingerprint-codes to these receivers (as a watermark embedded within an item of content). Then, when an unauthorized copy (the "forgery") is found, a decoding/tracing algorithm is executed on that forgery to try to identify one or more of the colluding receivers - if a member of the coalition is detected, then that receiver is deactivated/disconnected (in the sense that the receiver will receive no further watermarked items of content). Then, further fingerprint-codes are distributed to the remaining active/connected receivers (as a new watermark embedded within a new/subsequent item of content). The process continues in this way until all colluding receivers have been identified and disconnected. This may be viewed as operating over a series of rounds/stages, or at a series of time points, whereby at each stage the distributor will have more information on which to base his detection of colluding receivers and possibly eliminate one or more of those colluding receivers from subsequent rounds. This is suitable for scenarios in which a series of items of content are to be distributed to the population of receivers.

Another classification of traitor tracing schemes distinguishes between so-called "probabilistic" traitor tracing schemes and so-called "deterministic" traitor tracing schemes. A traitor tracing scheme is deterministic if, when the associated tracing algorithm identifies a receiver as being part of the coalition of receivers, then there is absolute certainty that that receiver's watermarked item of content was used to form the forgery. In contrast, a traitor tracing scheme is probabilistic if, when the associated tracing algorithm identifies a receiver as being part of the coalition of receivers, there is a non-zero probability (a so-called false positive probability) that that receiver's watermarked item of content was not actually used to form the forgery, i.e. that the receiver was not part of the coalition. A deterministic traitor tracing scheme will therefore never accuse any innocent receivers of helping to generate the forgery; a probabilistic traitor tracing scheme may accuse an innocent receiver of helping to generate the forgery, but this would happen with a small false positive probability.

A problem with deterministic traitor tracing schemes is that the size of the alphabet that is required is large - i.e. when generating the fingerprint-code for a receiver, each symbol in the fingerprint-code must be selectable from an alphabet made up of a large number of symbols. In general, watermarking schemes are more robust against forgery (e.g. by averaging different versions) if the alphabet size is small. It would therefore be desirable to have a fingerprinting scheme that makes use of a small (preferably binary) alphabet.

Current probabilistic static traitor tracing schemes can operate with a binary alphabet. However, current static traitor tracing schemes are only guaranteed to identify one of the colluding users, but not necessarily more or all of them. A solution is to iterate the scheme to identify all the colluding users, but this requires lengthy fingerprint-codes. It would be desirable to have a fingerprinting scheme that is guaranteed (at least with a certain probability) to identify all of the users who form the coalition generating forgeries and that has short fingerprint-codes.

Furthermore, current static traitor tracing schemes assume that the number of receivers who form the coalition is known beforehand (or at least an upper bound can be placed on this number). Then, when using static traitor tracing codes, this means that (in retrospect) often an unnecessarily long codeword has been used. For example, if only two people actually colluded, but one tailored the codeword to catch ten colluders, then the codewords and tracing time could be about 25 times longer than was actually necessary in that case.

Thus, current traitor tracing schemes are unable to trace any number of colluding receivers (i.e. a number that is unspecified in advance), with a small (i.e. practical) number of required watermarking symbols (i.e. a small alphabet), in a relatively short time with relatively short codewords, whilst ensuring that all the colluding receivers can be identified.

EP2249507 discloses a method for decoding a probabilistic anti-collusion code intended to identify at least one sequence of code present in a multimedia content having been used to create an illegal copy of this multimedia content, this method comprising a step of estimating the collusion strategy used to constitute the illegal copy associated with a step of identifying the sequences having been used in creating the illegal copy.

Stefan Katzenbeisser et al: "Combining Tardos Fingerprinting Codes and Fingercasting", 11 June 2007 (2007-06-11), Information Hiding; (lecture notes in computer science), Springer Berlin Heidelberg, Berlin, Heidelberg, pages 294 - 310 discloses a fingerprinting construction that provide collusion-resistance against a large coalition in a secure watermark embedding setting.

Teddy Furon et al: "On the Design and Optimization of Tardos Probabilistic Fingerprinting Codes", 19 May 2008 (2008-05-19), Information Hiding; (lecture notes in computer science), Springer Berlin Heidelberg, Berlin, Heidelberg, pages 341-356 discloses details for parameters of a Tardos fingerprinting scheme.

Peter Roelse: "Dynamic subtree tracing and its application in pay-TV systems", International Journal of Information Security, vol. 10, no. 3, 1 June 2011 (2011-06-01), pages 173-187 discloses a so-called "dynamic subtree tracing" traitor tracing algorithm.

## Summary of the invention

According to a first aspect of the invention, there is provided a fingerprinting method comprising, for each round in a series of rounds: providing to each receiver in a set of receivers a version of a source item of content, the source item of content corresponding to the round, wherein for the round there is a corresponding part of a fingerprint-code for the receiver, the part comprising one or more symbols, wherein the version provided to the receiver represents those one or more symbols; obtaining, from a suspect item of content one or more corresponding symbols as a corresponding part of a suspect-code; for each receiver in the set of receivers, updating a corresponding score that indicates a likelihood that the receiver is a colluding-receiver, wherein a colluding-receiver is a receiver that has been provided with a version of a source item of content that has been used to generate a suspect item of content, wherein said updating is based on the fingerprint-code for the receiver and the suspect-code; for each receiver in the set of receivers, if the score for the receiver exceeds a threshold, updating the set of receivers by removing the receiver from the set of receivers so that the receiver is not provided with a further version of a source item of content, wherein the threshold is set such that the probability that a receiver that is not a colluding-receiver has a score exceeding the threshold is at most a predetermined probability.

In essence, this involves obtaining a dynamic (or at least semi-dynamic) probabilistic fingerprinting scheme by adapting static probabilistic fingerprinting schemes to the dynamic setting. This provides improved performance over existing dynamic probabilistic fingerprinting schemes, in terms of having a reduced number of required watermarking symbols (i.e. a small alphabet) whilst making use of shorter codewords. Moreover, embodiments are able to ensure that all the colluding receivers can be identified. As the method operates over a series of rounds and may identify colluding receivers at each round, the method may be terminated early, in that the method may be stopped once a particular number (or all) of the colluding receivers have been identified - i.e. the full length of (static) fingerprint-codes does not always need to be used and provided to receivers. In other words, colluding receivers may be detected earlier than otherwise possible, making use of fewer fingerprint symbols.

In some embodiments, each symbol assumes a symbol value from a predetermined set of symbol values, and the i-th symbol of the fingerprint-code for a receiver is generated as an independent random variable such that, for each symbol value in the predetermined set of symbol values, the probability that the i-th symbol of the fingerprint-code for a receiver assumes that symbol value is a corresponding probability value set for the i-th symbol position of the fingerprint-codes for the receivers.

If an obtained symbol corresponds to the i-th symbol position in the fingerprint-codes then updating the score for a receiver may comprise incrementing the score if that obtained symbol matches the i-th symbol in the fingerprint-code for that receiver and decrementing the score if that obtained symbol does not match the i-th symbol in the fingerprint-code for that receiver.

In some embodiments, each symbol assumes a symbol value from a predetermined set of symbol values, the predetermined set comprising only two symbol values. In particular, a binary symbol alphabet may be used. This is particularly useful as watermarking schemes are able to better handle situations in which only binary symbols (e.g. a 1 or a 0) need to be embedded - the watermarking may be made more robust and less noticeable.

In some embodiments, the probability that the i-th symbol of a fingerprint-code for a receiver assumes a first symbol value is $p_i$ and the probability that the i-th symbol of a fingerprint-code for a receiver assumes a second symbol value is $1-p_i$, and if an obtained symbol corresponds to the i-th symbol position in the fingerprint-codes then updating the score for a receiver may comprise incrementing the score by $\sqrt{(1-p_i)/p_i}$ if that obtained symbol is the first symbol value and the i-th symbol in the fingerprint-code for that receiver is the first symbol value and decrementing the score by $\sqrt{p_i/(1-p_i)}$ if that obtained symbol is the first symbol value and the i-th symbol in the fingerprint-code for that receiver is the second symbol value. Additionally, if an obtained symbol corresponds to the i-th symbol position in the fingerprint-codes then updating the score for a receiver may comprise incrementing the score by $\sqrt{p_i/(1-p_i)}$ if that obtained symbol is the second symbol value and the i-th symbol in the fingerprint-code for that receiver is the second symbol value and decrementing the score by $\sqrt{(1-p_i)/p_i}$ if that obtained symbol is the second symbol value and the i-th symbol in the fingerprint-code for that receiver is the first symbol value.

In some embodiments, the probability that the i-th symbol of a fingerprint-code for a receiver assumes a first symbol value is $p_i$ and the probability that the i-th symbol of a fingerprint-code for a receiver assumes a second symbol value is $1-p_i$, wherein the value $p_i$ is generated as an independent random variable having a probability density function of:

$$f(p) = \frac{1}{(\pi - 4\delta')\sqrt{p(1-p)}} \text{ for } \delta \le p \le (1-\delta)$$

wherein $\delta' = \arcsin(\sqrt{\delta})$ such that $0 < \delta' < \pi/4$, $\delta = 1/(\delta_c c)$, c is an expected number of colluding-receivers, and $\delta_c$ is a predetermined constant.

In some embodiments, each symbol for each fingerprint-code is generated independent of an expected number of colluding-receivers. This means that the fingerprinting scheme does not need to know in advance an estimate on the number of colluding receivers (or have some form of upper bound set on it) - instead, these embodiments can cater for scenarios in which any number of colluding receivers may participate in a coalition to generate unauthorized copies of content.

In such an embodiment, the probability that the i-th symbol of a fingerprint-code for a receiver assumes a first symbol value may be $p_i$ and the probability that the i-th symbol of a fingerprint-code for a receiver assumes a second symbol value may be $1-p_i$, where the value $p_i$ is generated as an independent random variable having a probability density function of:

$$f(p) = \frac{1}{\pi\sqrt{p(1-p)}} \text{ for } 0 < p < 1$$

In embodiments each symbol for each fingerprint-code is generated independent of an expected number of colluding-receivers, updating a score for a receiver may comprise, for one or more collusion-sizes, updating a score for the receiver for that collusion-size that indicates a likelihood that the receiver is a colluding-receiver under the assumption that the number of colluding-receivers is that collusion-size; and the method may then comprise, for each receiver in the set of receivers, if a corresponding score for that receiver exceeds a threshold corresponding to the collusion-size for that score, updating the set of receivers by removing that receiver from the set of receivers, wherein the thresholds are set such that the probability that a receiver that is not a colluding-receiver has a score exceeding the corresponding threshold is at most the predetermined probability.

Updating the score for a collusion-size may comprise disregarding a symbol obtained for the i-th position of the suspect-code if symbols generated for the i-th position of the fingerprint-codes are invalid for that collusion-size.

Symbols generated for the i-th position of the fingerprint-codes may be considered invalid for a collusion-size c if the generation of symbols for the i-th position of the fingerprint-codes independent of an expected number of colluding-receivers used a parameter value that would be inapplicable when generating symbols for the i-th position of fingerprint-codes dependent on an expected collusion-size of c.

Symbols for the i-th position of the fingerprint-codes may be considered invalid for a collusion-size of c if $p_i$ lies outside of the range $[\delta, 1-\delta]$, where $\delta = 1/(\delta_c c)$ and $\delta_c$ is a predetermined constant.

In some embodiments, the method comprises generating a fingerprint-code for a receiver in advance of the series of rounds. Alternatively, in some embodiments, said providing comprises generating the part of the fingerprint-code for the receiver.

In some embodiments, the version of the source item of content provided to a receiver is formed by watermarking a copy of the source item of content with the part of the fingerprint-code for the receiver.

According to another aspect of the invention, there is provided an apparatus comprising a processor arranged to carry out a fingerprinting method, wherein the method comprises, for each round in a series of rounds: providing to each receiver in a set of receivers a version of a source item of content, the source item of content corresponding to the round, wherein for the round there is a corresponding part of a fingerprint-code for the receiver, the part comprising one or more symbols, wherein the version provided to the receiver represents those one or more symbols; obtaining, from a suspect item of content one or more corresponding symbols as a corresponding part of a suspect-code; for each receiver in the set of receivers, updating a corresponding score that indicates a likelihood that the receiver is a colluding-receiver, wherein a colluding-receiver is a receiver that has been provided with a version of a source item of content that has been used to generate a suspect item of content, wherein said updating is based on the fingerprint-code for the receiver and the suspect-code; for each receiver in the set of receivers, if the score for the receiver exceeds a threshold, updating the set of receivers by removing the receiver from the set of receivers so that the receiver is not provided with a further version of a source item of content, wherein the threshold is set such that the probability that a receiver that is not a colluding-receiver has a score exceeding the threshold is at most a predetermined probability.

According to another aspect of the invention, there is provided a computer program which, when executed by a processor, causes the processor to carry out a fingerprinting method comprising, for each round in a series of rounds: providing to each receiver in a set of receivers a version of a source item of content, the source item of content corresponding to the round, wherein for the round there is a corresponding part of a fingerprint-code for the receiver, the part comprising one or more symbols, wherein the version provided to the receiver represents those one or more symbols; obtaining, from a suspect item of content one or more corresponding symbols as a corresponding part of a suspect-code; for each receiver in the set of receivers, updating a corresponding score that indicates a likelihood that the receiver is a colluding-receiver, wherein a colluding-receiver is a receiver that has been provided with a version of a source item of content that has been used to generate a suspect item of content, wherein said updating is based on the fingerprint-code for the receiver and the suspect-code; for each receiver in the set of receivers, if the score for the receiver exceeds a threshold, updating the set of receivers by removing the receiver from the set of receivers so that the receiver is not provided with a further version of a source item of content, wherein the threshold is set such that the probability that a receiver that is not a colluding-receiver has a score exceeding the threshold is at most a predetermined probability.

The computer program may be carried on a data carrying medium.

## Brief description of the drawings

Embodiments of the invention will now be described, by way of example only, with reference to the accompanying drawings, in which:

Figure 1 schematically illustrates an overview of a fingerprinting (or traitor tracing) system/scheme according to an embodiment of the invention;
Figure 2 is a flow-chart illustrating an overview of a method of operating the system of figure 1 according to an embodiment of the invention;
Figure 3 schematically illustrates an example of the operation of the method illustrated in figure 2; and
Figure 4 schematically illustrates an example computer system.

## Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

### System overview

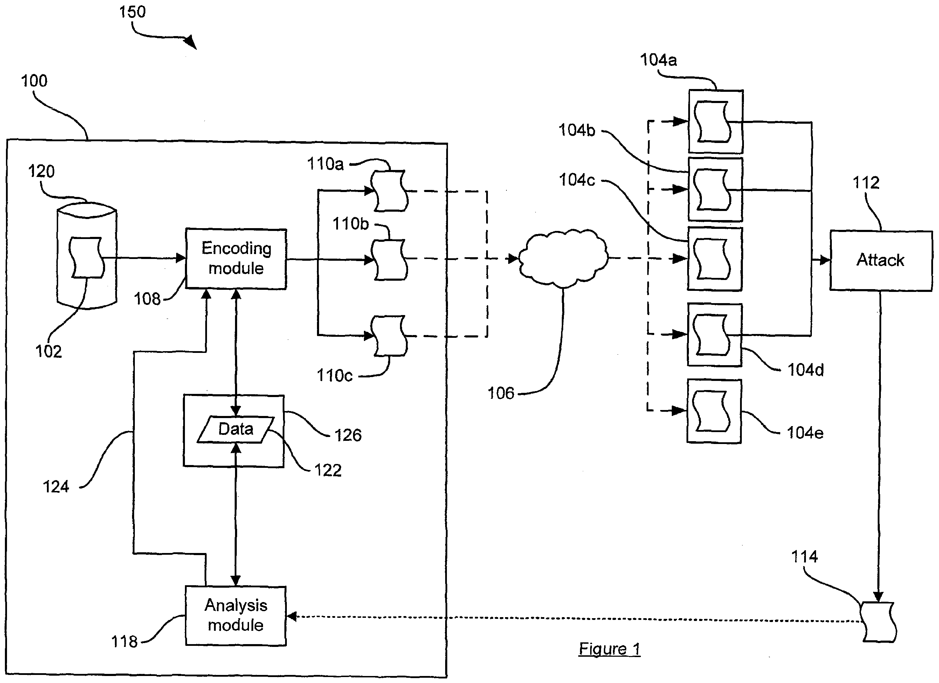

Figure 1 schematically illustrates an overview of a fingerprinting (or traitor tracing) system/scheme 150 according to an embodiment of the invention.
It will be useful, first, to provide a high-level summary of the operation of the fingerprinting scheme 150 before discussing the various components in more detail. The system 150 comprises a content distributor 100 and a plurality of receivers 104 (shown in figure 1 as receivers 104a-104e). The content distributor 100 has one or more items of content 102 for distribution to the plurality of receivers 104. As will be discussed later, each of the receivers 104 that is to receive a copy of the item of content 102 will have its own respective assigned fingerprint-code, where a fingerprint-code is a sequence or series of symbols that are taken from some symbol alphabet (the alphabet is a predetermined set of symbol values). As will become apparent later, embodiments of the invention concern managing the generation and use of fingerprint-codes.
The content distributor 100 comprises an encoding module 108 that is arranged to generate different versions (or copies) of items of content 110 (shown in figure 1 as items of content 110a-110c). Each generated version of an item of content 110 corresponds to a sequence of one or more fingerprint symbols. For example, the encoding module 108 may generate a version of an item of content 110 by embedding a sequence of one or more fingerprint symbols into a copy of the original item of content 102 using a watermarking encoding method - in this case, the sequence that has been embedded into the original item of content 102 to form one watermarked item of content 110 is different from the sequence that has been embedded in the original item of content 102 to form another watermarked item of content 110 and the watermarked items of content 110 are therefore different versions of the original item of content 102. Embodiments of the invention will be described below in which the encoding module 108 generates a version of an item of content 110 from a source item of content 102 by embedding a watermark representing a sequence of one or more symbols, and the versions shall therefore be referred to as watermarked items of content 110. However, it will be appreciated that other embodiments of the invention may make use of other methods of generating different versions and that, in general, each copy 110 is simply a particular version of the original item of content 102 that corresponds to a particular sequence of one or more fingerprint symbols or, put another way, each copy 110 is a modified version of the original item of content 102 where the modification represents a corresponding sequence of one or more fingerprint symbols.
The content distributor 100 then provides the watermarked items of content 110 to the respective receivers 104. This is carried out so that the watermarked item of content 110 provided to a particular receiver 104 has embedded therein (or at least corresponds to or represents) a sequence of fingerprint symbols that form at least a corresponding part of the fingerprint-code for that particular receiver 104.
An attack 112 may be carried out to generate a new item of content 114, which is a version of the original item of content 102. This new item of content shall be referred to, herein, as a "forgery" 114. The forgery 114 may be generated from (or based on) a single watermarked item of content 110 received by a receiver 110. Alternatively, the forgery 114 may generated from (or based on) two or more of the watermarked items of content 110 received by the receivers 104, in which case the attack comprises a so-called "collusion attack" - in figure 1, the forgery 114 is generated from the watermarked items of content 110 received by receivers 104a, 104b and 104d. Whilst a coalition of three colluding receivers 104 is illustrated in figure 1, it will be appreciated that a coalition may be formed from any other number of receivers 104. The receivers 104 whose received watermarked items of content 110 are used to create the forgery 114 shall be referred to, herein, as "pirates" 104.

The content distributor 100 may then receive, or somehow obtain, a copy of the forgery 114. The content distributor 100 also comprises an analysis module 118. The content distributor 100 uses the analysis module 118 to determine a sequence of one or more fingerprint symbols that corresponds to the received forgery 114. This processing is, essentially, an inverse operation to the method by which the encoding module generates a version 110 of a source item of content 102 that corresponds to a sequence of one or more fingerprint symbols. For example, the content distributor 100 may use a watermark decoding operation corresponding to the inverse of a watermark embedding operation carried out by the encoding module 108. The sequence of one or more fingerprint symbols that the analysis module 118 identifies as corresponding to (or having been embedded within) the received forgery 114 are used to form a suspect-code (or a part thereof). The analysis module 118 then uses the suspect-code to try to identify pirates 104, i.e. to identify which receivers 104 out of the plurality of receivers 104 were part of the coalition and received watermarked items of content 110 that were used (at least in part) to create the forgery 114.

The content distributor 100 may then distribute a further item of content 102, with different fingerprint symbols embedded therein, to the receivers 104 in the same way as set out above.

For static fingerprinting or traitor tracing schemes, the generation of fingerprint-codes and the provision of watermarked items of content 110 to receivers 104 does not depend on the results of the processing performed by the analysis module 118. In contrast, for dynamic fingerprinting or traitor tracing schemes, the generation of fingerprint-codes and the provision of watermarked items of content 110 to receivers 104 does depend on the results of the processing performed by the analysis module 118. As will be discussed in more detail below, in embodiments of the invention, once a receiver 104 has been identified as a pirate 104 by the analysis module 118, then the content distributor 100 may stop providing that pirate 104 with items of content 102 (or watermarked items of content 110), i.e. fingerprint-codes need no longer be generated for, and provided to, the identified pirates 104. This information from the analysis module 118 is illustrated as being provided as feedback 124 to the encoding module 108. Whilst embodiments of the invention will make use of this feedback 124, the system 150 illustrated in figure 1 is useful for understanding static fingerprinting or traitor tracing schemes (in which case the feedback 124 would not be present).

The item of content 102 may comprise any type of information, and may include one or more of audio data, image data, video data, textual data, multimedia data, a web page, software products, security keys, experimental data or any other kind of data which the content distributor 100 wishes to provide (or transmit or communicate or make available) to the receivers 104. Indeed, the item of content 102 may be any unit or amount of content. For example, the content distributor 100 may store video data for a movie, and each item of content 102 could comprise a number of video frames from the movie.

The content distributor 100 may be any entity arranged to distribute content to receivers 104. The content distributor 100 may have a database 120 of items of content 102, such as a repository of audio and video files. Additionally or alternatively, the content distributor 100 may generate the items of content 102 as and when required -for example, the items of content 102 may be decryption keys or conditional access information for decrypting or accessing segments of video, and these decryption keys or conditional access information may be generated as and when the segments of video are provided to the receivers 104, so that storage of the decryption keys or conditional access information in a database 120 may be unnecessary. Additionally or alternatively, the content distributor 100 may not necessarily be the original source of the items of content 102 but may, instead, receive the items of content 102 from a third party and may store and/or distribute those items of content 102 on behalf of the third party.

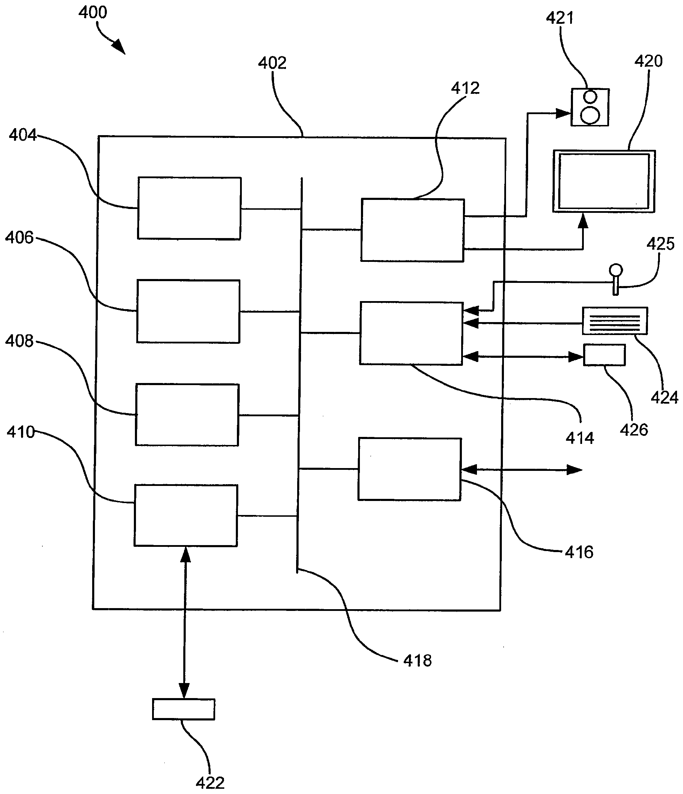

The content distributor 100 may comprise one or more computer systems, examples of which will be described later with reference to figure 4. The encoding module 108 and/or the analysis module 118 may be implemented in hardware, for example with one or more application specific integrated circuits (ASICs) and/or with one more or more field programmable gate arrays (FPGAs) and/or with one or more digital signal processors (DSPs) and/or with other types of hardware device. Additionally or alternatively, one or both of these modules may be implemented using one or more software modules and/or firmware modules, with the content distributor 100 storing corresponding computer programs in a memory 126 for subsequent loading and execution by a processor.

In figure 1, the content distributor 100 is shown as a unitary entity comprising both the encoding module 108 and the analysis module 118, but it will be appreciated that other configurations are possible. For example, the encoding module 108 and the analysis module 118 may be organised as parts of separate entities/systems, potentially operated by separate people/organizations. It will be appreciated that other configurations for the content distributor 100 are possible and that this is not important for implementing embodiments of the invention.

The encoding module 108 may need to make use of various configuration parameters and/or other data in order to carry out its processing. These configuration parameters and/or other data are illustrated in figure 1 as a part of data 122. The data 122 may be stored in the memory 126 of the content distributor 100. Some of these configuration parameters and/or other data may be predetermined (e.g. various constants) and the encoding module 108 may therefore be configured to read these data from the memory 126; other configuration parameters and/or other data may be generated by the encoding module 108 as part of its processing and the encoding module 108 may therefore be configured to write these data to the memory 126 for storage, in case these data are needed later on. Similarly, the analysis module 118 may need to make use of some or all of the configuration parameters and/or other data used by the encoding module 108 or, indeed, other configuration parameters and/or other data. The configuration parameters and/or other data used by the analysis module 118 are also shown in figure 1 as a part of the data 122. Again, some of these configuration parameters and/or other data may be predetermined (e.g. various constants) and the analysis module 118 may therefore be configured to read these data from the memory 126; other configuration parameters and/or other data may be generated by the analysis module 118 as part of its processing and the analysis module 118 may therefore be configured to write these data to the memory 126 for storage, in case these data are needed later on.

The encoding module 108 may embed symbols of a fingerprint-code into the item of content 102 by making use of any watermarking embedding technique. Such watermark embedding techniques are well-known in this field of technology. The particular choice of watermark embedding technique is not essential for carrying out embodiments of the invention, and, as the skilled person will be familiar with various watermarking embedding techniques, such techniques shall not be described in any detail herein. However, in preferred embodiments of the invention, the watermark embedding technique is capable of encoding a watermark codeword within the item of content 102 in a robust manner, so that the embedded watermark codeword is decodable from a watermarked item of content 110 even after various processing has been applied to the watermarked item of content 110, whether that is non-malicious processing (such as data compression for the purposes of transmitting the watermarked item of content 110 to the receiver 104 or the addition of noise/errors due to the transmission of the watermarked item of content 110 to the receiver 104) or malicious processing (in which modifications are deliberately made to the watermarked item of content 110 in order to try to make the embedded watermark codeword not decodable or, at the very least, more difficult to decode). Similarly, the analysis module 118 may decode symbols of an embedded fingerprint-code from an item of content by making use of any corresponding watermarking decoding technique, as are well-known in this field of technology. Again, we shall not describe such decoding techniques in any detail herein as the particular choice of watermark decoding technique is not essential for carrying out embodiments of the invention and the skilled person will be familiar with various watermarking decoding techniques.

The watermarked items of content 110 may be provided to the receivers 104 in a number of ways. For example, the content distributor 100 may transmit (or send or communicate) the watermarked items of content 110 to the receivers 104 via one or more networks 106, which may be one or more of the internet, wide area networks, local area networks, metropolitan area networks, wireless networks, broadcast networks, telephone networks, cable networks, satellite networks, etc. Any suitable communication protocols may be used. Additionally or alternatively, the content distributor 100 may store the watermarked items of content 110 so that the receivers 104 can contact the content distributor 100 and access watermarked items of content 110 directly from the content distributor 100. For example, the content distributor 100 could comprise a server storing the various watermarked items of content 110, and the content distributor could host a website with functionality to enable the receivers 104 to download watermarked items of content 110 from the server - in such a scenario, the content distributor 100 may generate the watermarked item of content 110 for a particular receiver 104 as and when that receiver 104 contacts the website to request and download a copy of the item of content 102. The watermarked items of content 110 may be provided to the receivers 104 as a single item of data (e.g. as a downloaded item of content) or they may be streamed to the receivers 104 (such as online video or audio streaming or video and audio broadcasting). Additionally or alternatively, watermarked items of content 110 may be provided to receivers via one or more physical media, such as data stored on a CD, a DVD, a BluRay disc, etc. Hence, the particular method by which the receivers 104 are provided with watermarked items of content 110 is not important for embodiments of the invention, and this provision is therefore shown generally by dashed lines in figure 1.

The receivers 104 may be any device (or client or subscriber system) capable of receiving items of content from the content distributor 100 (and to whom the content distributor 100 initially wishes to provide items of content). For example, a receiver may be a personal computer, a set-top box, a mobile telephone, a portable computer, etc. Examples of such data processing systems will be described later with reference to figure 4. A human user may have one or more receivers 104 and so, in theory, a coalition of receivers 104 may be formed by a single human user (so that the collusion attack is carried out by a single human user who has access to multiple different receivers 104). Whilst figure 1 illustrates there being five receivers 104a-e, it will be appreciated that there may be any number of receivers 104 and that, in practice, the number of receivers 104 may be significantly larger.

The attack 112 performed to generate the forgery 114 may be any form of attack. Indeed, the forgery 114 may be an exact copy of a single watermarked item of content 110 that has been provided to a pirate 104 (so that the attack 112 may be seen as a "null" attack). However, the attack 112 may involve carrying out various processing on the watermarked item(s) of content 110 that are used to generate the forgery 114 - this processing could include, for example, one or more of: data compression; addition of noise; geometric and/or temporal and/or frequency transformations;

deletion/removal of parts of the watermarked items of content 110; or other such processing.

If multiple pirates 104 are involved in the generation of the forgery 114, then the attack 112 is a collusion attack. The collusion attack 112 performed using the watermarked items of content 110 that the colluding receivers (i.e. pirates 104a, 104b and 104d in figure 1) have received may be any type of collusion attack 112. One possible attack is to average the respective watermarked items of content 110 of the colluding receivers 104 to form the forgery 114. Another possible attack is to form various parts of the forgery 114 by copying in corresponding parts from one of the colluding receiver's watermarked items of content 110. This may be seen as a simple form of weighted average of the respective watermarked items of content 110 of the colluding receivers 104 to form the forgery 114; other weighted averages or other weighted combinations of the respective watermarked items of content 110 of the colluding receivers 104 could be used instead. Indeed, other kinds of collusion attack 112 (either known now or developed in the future) could be used by the coalition.

The content distributor 100 may obtain the forgery 114 in a number of ways, such as by finding the forgery 114 at a location on a network, being sent a copy by a third party, etc. The exact manner is not important for embodiments of the invention and therefore this is illustrated in figure 1 simply as a dotted line.

It will be appreciated that various modifications may be made to the system shown in figure 1. For example, the content distributor 100 may provide the original item of content 102 to the receiver 104 as an encrypted (scrambled) item of content. The receiver 104 may then decrypt (descramble) the encrypted item of content and this decryption process may be arranged so that symbols of the fingerprint-code for the receiver 104 are embedded into the item of content 102 during the decryption process. In this way, the receiver 104 may comprise, and carry out, the watermark embedding functionality of the encoding module 108 instead of the content distributor 100. The content distributor 100 may still operate its own encoding module 108 to generate fingerprint-code symbols for the receivers 104 and provide those generated symbols to the receivers 104 in encrypted form along with the encrypted item of content 102, so that these symbols may be embedded when the receiver 104 performs the decryption process (or otherwise interacts with or accesses the encrypted item of content 102) to form the watermarked item of content 110 for the receiver 104. Alternatively, the receiver 104 may be arranged itself to generate symbols for the fingerprint-code for that receiver 104, instead of the encoding module 108 - in this case, when the receiver 104 decrypts the received encrypted item of content 102 (or otherwise interacts with or accesses the encrypted item of content 102), the decryption process may be arranged to both generate symbols of the fingerprint-code for the receiver 104 and embed those symbols into the decrypted item of content 102 to form the watermarked item of content 110 for the receiver 104. In an alternative embodiment, the content distributor 100 generates and encrypts the watermarked items of content 110, where each watermarked item of content 110 is encrypted using a key specific to that watermarked item of content 110. The content distributor 100 may then send all of the encrypted watermarked items of content 110 to each receiver 104. In this case, the content distributor 100 may provide each receiver 104 with a decryption key for just one of the encrypted watermarked items of content 110, so that the receiver 104 can access only one of the watermarked items of content 110 - this provides an alternative way of providing a specific watermarked item of content 110 to a receiver 104.

It will therefore be appreciated that embodiments of the invention may operate in a variety of ways with different components of the system being implemented in different ways and, potentially, by different entities (content distributor 100, receivers 104, etc.) within the system.

Notation

In the rest of this description, the following notation shall be used:

- For the j-th receiver 104, the fingerprint-code for that receiver is $\vec{x}_j$, so that the i-th symbol for the fingerprint-code for the j-th receiver is $\vec{x}_{j,i}$.
- The analysis module 118 generates a suspect-code $\vec{y}$ from one or more forgeries 114 that the content distributor 100 receives. The i-th symbol of the suspect-code is $y_i$.
- The number of receivers 104 shall be represented by the symbol n.

Example static probabilistic fingerprinting or traitor tracing schemes

Before describing embodiments of the invention that relate to dynamic (or semi-dynamic) fingerprinting schemes (i.e. in which the system 150 makes use of the feedback 124 shown in figure 1), it will be helpful to first discuss a couple of static probabilistic fingerprinting schemes.

A first "Tardos" fingerprinting scheme (referred to in the following as TAR1) is disclosed in "Optimal Probabilistic Fingerprint-codes" (Gabor Tardos, STOC'03: Proceedings of the thirty fifth annual ACM symposium on Theory of computing, 2003, pages 116-125). The TAR1 scheme operates as follows:

(a) Let the value $c \geq 2$ be an integer representing the maximum coalition size that the fingerprinting scheme is to cater for (i.e. the maximum number of pirates 104 who can generate a forgery 114). Let $\varepsilon_1 \in (0,1)$ be a desired upper bound on the probability of incorrectly identifying a receiver 104 as being a pirate 104, i.e. a false positive probability for the fingerprinting scheme.

(b) Set the length, l, of each receiver's 104 fingerprint-code to be $l = 100c^2k$, where $k = \lceil \log(n/\varepsilon_1) \rceil$. so that $\vec{x}_j = (x_{j1}, x_{j2}, \cdots, x_{jl})$. Set $\delta = 1/(300c)$. Set $Z = 20ck$. Set $\delta' = \arcsin\left(\sqrt{\delta}\right)$ such that $0 < \delta' < \pi/4$.

(c) For each $i = 1, \cdots, l$ choose a value $p_i$ independently from the range $[\delta, 1-\delta]$ according to a distribution with probability density function

$$f(p) = \frac{1}{(\pi - 4\delta')\sqrt{p(1-p)}} \text{ for } \delta \leq p \leq (1-\delta).$$

(d) For each $i = 1, \cdots, l$ and for each $j = 1, \cdots, n$, the i-th symbol in the fingerprint-code for the j-th receiver 104 (i.e. $x_{j,i}$) is generated as an independent random variable such that $P(x_{j,i} = 1) = p_i$ and $P(x_{j,i} = 0) = 1-p_i$, i.e. the probability that $x_{j,i}$ assumes a first predetermined value is $p_i$ and the probability that $x_{j,i}$ assumes a second predetermined value is $1-p_i$. Such an independent random variable is often referred to as a Bernoulli random variable (or as having a Bernoulli distribution), and may be represented by the notation: $\text{Ber}(p_i)$. The values 1 and 0 are used here for the first and second predetermined symbol values, but it will be appreciated that other symbol values could be used instead.

(e) Having received a suspect-code $\vec{y}$, then for each $j = 1, \cdots, n$, a score $S_j$ for the j-th receiver 104 is calculated according to $S_j = \sum_{i=1}^{l} S_{j,i}$, $S_j$ where

$$S_{j,i} = \begin{cases} g_1(p_i) & \text{if } x_{j,i} = 1 \text{ and } y_i = 1 \\ g_0(p_i) & \text{if } x_{j,i} = 0 \text{ and } y_i = 1 \\ 0 & \text{if } y_i = 0 \end{cases}$$

where

$$g_0(p) = -\sqrt{p/(1-p)} \text{ and } g_1(p) = \sqrt{(1-p)/p}.$$

(f) For each receiver 104, identify (or accuse) that receiver 104 as being a pirate 104 if that receiver's score exceeds the threshold value Z, i.e. the j-th receiver 104 is accused of being a pirate 104 if $S_j > Z$.

With this scheme, the probability of incorrectly identifying a receiver 104 as being a pirate 104 (i.e. the false positive probability) is at most $\varepsilon_1$, whilst the probability of not managing to identify any pirates 104 at all (which can be seen as a first type of false negative probability) is at most $\varepsilon_2 = (\varepsilon_1/n)^{\sqrt{c}/4}$.

A modified Tardos fingerprinting scheme (referred to in the following as TAR2) is disclosed in "Symmetric Tardos Fingerprinting Codes for Arbitrary Alphabet Sizes" (Boris Skoric et al., Des. Code Cryptography, 46(2), 2008, pages 137-166). The TAR2 scheme operates in the same way as the TAR1 scheme except that $S_{j,i}$ is defined as:

$$S_{j,i} = \begin{cases} g_1(p_i) & \text{if } x_{j,i} = 1 \text{ and } y_i = 1 \\ g_0(p_i) & \text{if } x_{j,i} = 0 \text{ and } y_i = 1 \\ g_0(1-p_i) & \text{if } x_{j,i} = 1 \text{ and } y_i = 0 \\ g_1(1-p_i) & \text{if } x_{j,i} = 0 \text{ and } y_i = 0 \end{cases}$$

With the TAR2 scheme, the length of the fingerprint-codes, l, can be 4 times smaller than that stipulated in the TAR1 scheme whilst maintaining the above false positive and false negative probabilities.

This document also considers symbol alphabets of size greater than 2 (i.e. non-binary alphabets), i.e it discloses how Tardos-based fingerprinting schemes may be implemented using a non-binary symbol alphabet. In particular, a symbol alphabet of size q may be used, so that the symbol alphabet may be, for example $\{v_1, \cdots, v_q\}$. Then, for each i = 1,···,l and for each j = 1,···,n, the i-th symbol in the fingerprint-code for the j-th receiver 104 (i.e. $x_{j,i}$) may be generated as an independent random variable such that $P(x_{j,i} = v_1) = p_{i,1}$, ..., $P(x_{j,i} = v_q) = p_{i,q}$ for values $p_{i,1}$, $p_{i,2}$, ... , $p_{i,q}$, i.e. the probability that the i-th symbol assumes the k-th symbol value in the symbol alphabet is $p_{i,k}$ (for k=1,...q). For each i = 1,···,l, the values $p_{i,1}$,..., $p_{i,q}$ may be chosen for the i-th symbol position independently according to a distribution which may be, for example, a Dirichlet distribution. This paper then discusses how the scores $S_{j,l}$ and the threshold Z should be adapted accordingly.

A further modified Tardos fingerprinting scheme (referred to in the following as TAR3) is disclosed in "Tardos Fingerprinting is better than we thought" (Boris Skoric et al., CoRR, abs/cs/0607131, 2006) which focuses on finding improvements for the parameters l, δ and Z

A further modified Tardos fingerprinting scheme (referred to in the following as TAR4) is disclosed in "Improved versions of Tardos' fingerprinting scheme" (Oded Blayer et al., Des. Codes Cryptography, 48, pages 79-103, 2008) which also focuses on finding improvements for the parameters l, δ and Z.

A further modified Tardos fingerprinting scheme (referred to in the following as TAR5) is disclosed in "Accusation Probabilities in Tardos Codes: the Gaussian Approximation is better than we thought" (Antonino Simone et al., Cryptology ePrint Archive, Report 2010/472, 2010).

A further modified Tardos fingerprinting scheme (referred to in the following as TAR6) is disclosed in "An Improvement of Discrete Tardos Fingerprinting Codes" (Koji Nuida et al., Designs, Codes and Cryptography, 52, pages 339-362, 2009), which focuses on optimizing l (and Z), for small predetermined values of c, by constructing different probability distributions f(p).

A further modified Tardos fingerprinting scheme (referred to in the following as TAR7) operates as follows:

(a) Let the value c ≥ 2 be an integer representing the maximum coalition size that the fingerprinting scheme is to cater for (i.e. the maximum number of pirates 104 who can generate a forgery 114). Let $\varepsilon_1 \in (0,1)$ be a desired upper bound on the probability of incorrectly identifying a receiver 104 as being a pirate 104, i.e. a false positive probability for the fingerprinting scheme.

(b) Let $d_\alpha$, r, s and g be positive constants with r > 1/2 and let $d_l$, $d_z$, $d_\delta$, $d_\alpha$, r, s, g and η be values satisfying the following four requirements:

$$d_\alpha \geq \frac{\sqrt{d_\delta}}{h(r)\sqrt{c}}$$

$$\frac{d_z}{d_\alpha} - \frac{rd_l}{d_\alpha^2} \geq 1$$

$$\frac{2 - (4/d_\delta)}{\pi} - \frac{h^{-1}(s)s}{\sqrt{d_\delta c}} \geq g$$

$$gd_l - d_z \geq \eta\sqrt{\frac{d_\delta}{s^2 c}}$$

where $h^{-1}$ is a function mapping from (1/2,∞) to (0,∞) according to $h^{-1}(x) = (e^x - 1 - x)/x^2$, and h is the inverse function mapping from (0,∞) to (1/2,∞).

(c) Set the length, l, of each receiver's 104 fingerprint-code to be $l = d_l c^2 k$, where $k = \lceil \log(n/\varepsilon_1) \rceil$. Set $\delta = 1/(d_\delta c)$. Set $Z = d_z ck$. Set $\delta' = \arcsin(\sqrt{\delta})$ such that 0 < δ' < π/4.

(d) For each i = 1,···,I choose a value $p_i$ independently from the range $[\delta, 1-\delta]$ according to a distribution with probability density function

$$f(p) = \frac{1}{(\pi - 4\delta')\sqrt{p(1-p)}} \text{ for } \delta \leq p \leq (1-\delta).$$

(e) For each i = 1,···,I and for each j = 1,···,n, the i-th symbol in the fingerprint-code for the j-th receiver 104 (i.e. $x_{j,i}$) is generated as an independent random variable such that $P(x_{j,i} = 1) = p_i$ and $P(x_{j,i} = 0) = 1-p_i$, i.e. the probability that $x_{j,i}$ assumes a first predetermined value is $p_i$ and the probability that $x_{j,i}$ assumes a second predetermined value is $1-p_i$. Again, the values 1 and 0 are used here for the first and second predetermined symbol values, but it will be appreciated that other symbol values could be used instead.

(f) Having received a suspect-code $\vec{y}$, then for each j = 1,···,n, a score $S_j$ for the j-th receiver 104 is calculated according to $S_j = \sum_{i=1}^{I} S_{j,i}$, where

$$S_{j,i} = \begin{cases} g_1(p_i) & \text{if } x_{j,i} = 1 \text{ and } y_i = 1 \\ g_0(p_i) & \text{if } x_{j,i} = 0 \text{ and } y_i = 1 \\ g_0(1-p_i) & \text{if } x_{j,i} = 1 \text{ and } y_i = 0 \\ g_1(1-p_i) & \text{if } x_{j,i} = 0 \text{ and } y_i = 0 \end{cases}$$

where

$$g_0(p) = -\sqrt{p/(1-p)} \text{ and } g_1(p) = \sqrt{(1-p)/p}.$$

(g) For each receiver 104, identify (or accuse) that receiver 104 as being a pirate 104 if that receiver's score exceeds the threshold value Z, i.e. the j-th receiver 104 is accused of being a pirate 104 if $S_j > Z$.

With this scheme, the probability of incorrectly identifying a receiver 104 as being a pirate (i.e. the false positive probability) is at most $\varepsilon_1$, whilst the probability of not managing to identify any pirates 104 at all (i.e. the first type of false negative probability) is again at most $\varepsilon_2$. The mathematical proofs of these false positive and false negative results are provided in chapters 8.3 and 8.4 of the appendix at the end of this description.

Other static probabilistic fingerprinting schemes exist (with binary and/or non-binary symbol alphabets), such as the one described in "Collusion-Secure Fingerprinting for Digital Data" (Dan Boneh et al., IEEE Transactions on Information Theory, pages 452-465, 1998) - referred to below as BER1.

All of these static probabilistic fingerprinting schemes operate as follows. For each receiver 104, the symbols for the entire fingerprint-code for that receiver are generated and the receiver 104 is then provided with the entire fingerprint-code (as has been described above with reference to figure 1). These fingerprint-codes are embedded as watermark payloads within items of content 102 for the receivers 104. Thus, the number of watermarked items of content 110 generated would have to be sufficient to provide each receiver 104 with its own specific watermarked item of content 110. When a forgery 114 is located, a suspect-code is extracted from the forgery by a watermarked decoding operation. The suspect-code is then compared against each receiver's 104 fingerprint-code (using the appropriate tracing schemes set out above). Based on these comparisons, a receiver 104 may be accused of being a pirate 104 who participated in the generation of the forgery 114. Subsequent items of content 102 may be distributed to the receivers 104, and when this is done, new fingerprint-codes are generated and provided to the receivers 104 accordingly, as set out above. However, this does not make use of any feedback 124 shown in the system 150 of figure 1.

Probabilistic fingerprinting schemes using feedback

As mentioned above, embodiments of the invention provide probabilistic fingerprinting schemes that make use of the feedback loop 124 of the system 150 illustrated in figure 1.

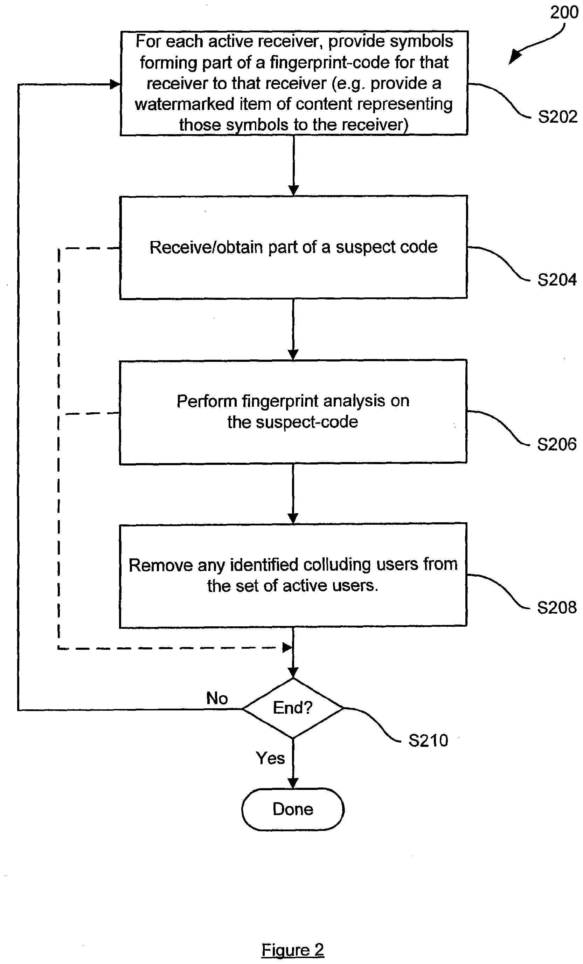

Figure 2 is a flow-chart illustrating an overview of a method 200 of operating the system 150 according to an embodiment of the invention. The method comprises a series of steps S202, S204, S206, S208 and S210 which together shall be referred to a "round" or a "stage", and which may be considered as different encoding/decoding periods or time points. As shown, the method generally involves a series of two or more rounds. At some point, at the step S210 in a current round, it is determined that the method 200 should terminate, so that no more rounds are performed.

The method 200 maintains a set of "active" receivers 104 (or "connected" receivers 104). The content distributor 100 may, for example, associate an active-flag with each receiver 104, where the active-flag for a receiver 104 indicates whether that receiver 104 is "active" or "inactive" (or "connected" or "disconnected") - these active-flags may be updated when a receiver 104 is changed from being an active receiver 104 to an inactive receiver 104. Alternatively, the content distributor 100 may maintain a list of identifiers of receivers 104 who are considered to be in the set of active receivers 104 - this list may be modified by removing an identifier of a receiver 104 when that receiver 104 changes from being an active receiver 104 to an inactive receiver 104. A receiver 104 is an active receiver if a copy of an item of content 102 should (or may) be distributed to that receiver 104; likewise, a receiver 104 is an inactive receiver 104 if an item of content 102 should (or may) not be distributed to that receiver 104. Thus, the set of active receivers is the collection of receivers 104, out of the entire population of n receivers 104, to whom items of content 102 should (or may) be distributed. As items of content 102 are to be distributed to a receiver 104 with one or more symbols of that receiver's 104 fingerprint-code embedded or contained therein, a receiver 104 may be viewed as an active receiver 104 if further symbols of the fingerprint-code for that receiver 104 should be distributed to that receiver 104; likewise, a receiver 104 may be viewed as an inactive receiver 104 if further symbols of the fingerprint-code for that receiver 104 should not be distributed to that receiver 104.

For the first round in the method 200, the set of active receivers 104 comprises all of the n receivers 104 in the population of receivers 104 of the system 150 (or at least all of those receivers 104 to whom the content distributor 100 initially wishes to provide items of content 102). However, as will be described shortly, during one or more rounds, one or more receivers 104 may be identified as being a pirate 104. When this happens, those identified pirates 104 are removed from the set of active receivers 104, i.e. the set of active receivers 104 is updated by removing any identified colluding receivers 104 from the set of active receivers 104. This may therefore be seen as de-activating receivers 104 that were initially active receivers 104. The content distributor 100 then no-longer provides items of content 102 to de-activated receivers 104 (i.e. to receivers 104 who are no longer in the set of active receivers 104).

The processing for each round is set out below.

At the step S202, each receiver 104 in the set of active receivers 104 is provided with one or more symbols as a (next) part of the fingerprint-code for the receiver 104. This part of the fingerprint-code corresponds to the current round - for the first round, the symbols provided to an active receiver 104 form a first/initial part of the fingerprint-code for that receiver 104; for subsequent rounds, the symbols provided to an active receiver 104 form a corresponding subsequent part of the same fingerprint-code for that receiver 104. Thus, the part of the fingerprint-code provided may be seen as a portion or subset of the fingerprint-code for the receiver 104 for the current round. In particular, if the symbols of the fingerprint-code $\vec{x}_j$ that have been provided so far in previous rounds to the j-th receiver 104 are $x_{j,1}$, $x_{j,2}$, ..., $x_{j,r}$, then at the step S202, the j-th receiver 104 is provided with further symbols $x_{j,(r+1)}$, ..., $x_{j,(r+w)}$ for some positive integer w as the next part of that fingerprint-code $\vec{x}_j$. Preferably, the number of symbols (i.e. w) is 1, as this means that the set of active receivers 104 can be updated more frequently for a given number of fingerprint-code symbols (e.g. an update for every fingerprint-code symbol position instead of an update for, say, every set of 10 fingerprint-code symbol positions) - this can thereby lead to earlier identification, and de-activation, of pirates 104. However, embodiments of the invention may make use of values of w greater than 1. The value of w may be a predetermined constant. However, in some embodiments of the invention, the value of w may change from one round to another round - this could be desirable because the watermark embedding module 108 may be able to embed a first number w1 of fingerprint symbols in a first item of content 102 during one round and may be able to embed a second number w2 of fingerprint symbols in a second item of content 102 during a subsequent round, where w1 is different from w2. This could be, for example, due to differing data sizes of the items of content 102.

As set out above, there are a number of ways in which these symbols may be provided to the receivers 104. Essentially, though, at the step S202, each receiver 104 is provided with a version of a source item of content (e.g. a watermarked item of content 110). The source item of content 102 corresponds to the current round - for example, the source item of content 102 may be the next number of video frames forming a part of a movie being provided to receivers 104 - and the version of the source item of content 110 provided to a receiver 104 corresponds to the next part of the fingerprint-code for that receiver 104 (e.g. the watermarked item of content 110 has embedded therein the next w symbols for the fingerprint-code for the receiver 104). For example, in the case where w is 1, the content distributor 100 may generate two versions of a source item of content, a first version having embedded therein 0 as a fingerprint symbol and a second version having embedded therein 1 as a fingerprint symbol. If the next symbol for the fingerprint-code for a particular active receiver 104 is a 0, then the content distributor 100 provides the first version to that receiver 104; if the next symbol for the fingerprint-code for a particular active receiver 104 is a 1, then the content distributor 100 provides the second version to that receiver 104.

The content distributor 100 may use its encoding module 108 to generate an entire fingerprint-code for a receiver 104 - the content distributor 100 may then store this generated fingerprint-code in the memory 126 (e.g. as part of the data 122) for later use. The content distributor 100 may then select and provide one or more symbols from that stored fingerprint-code to the corresponding receiver 104. Alternatively, the content distributor 100 may use its encoding module 108 to generate symbols for a part of a fingerprint-code for a receiver 104 as and when those symbols are needed (such as when the item of content 102 is to be provided to the receiver 104) - in this way, the content distributor 100 does not need to store an entire fingerprint-code for a receiver 104 in its memory 126. With this method, a fingerprint-code for a receiver 104 is generated in parts and "grows" as further symbols for the fingerprint-code are generated when required.

The generated symbols may then be provided to the receiver 104 in a number of ways. For example, the content distributor 100 could using its watermark encoding module 108 to embed the symbols as watermark payload data into an item of content 102 that is to be provided to receivers 104 for the current round, and then provide the watermarked item of content 110 to the receiver 104. Alternatively, the content distributor 100 could provide the symbols and the item of content 102 for the current round to the receiver 104, preferably in a secure manner such as an encrypted package, wherein the receiver 104 is arranged to embed the received symbols in the received item of content 102 (such as at the time the receiver 104 decrypts the received package or otherwise accesses the received item of content 102).

Alternatively, as mentioned above, the generation of the symbols forming a part of a fingerprint-code for a receiver 104 may be performed by the receiver 104. For example, the content distributor 100 may provide the item of content 102 to the receiver 104, preferably in a secure manner such as an encrypted package, wherein the receiver 104 is arranged to generate the fingerprint symbols and embed the received symbols in the received item of content 102 (such as at the time the receiver 104 decrypts the received package or otherwise accesses the received item of content 102).

In summary, then, the step S202 involves providing to each receiver 104 in the set of active receivers 104 one or more symbols $x_{j,i}$ as a (next) part of the fingerprint-code $\vec{x}_j$ for that receiver 104. Method for generating the particular one or more symbols $x_{j,i}$ shall be described shortly.

At the step S204, the content distributor 100 obtains one or more symbols forming a corresponding part of the suspect-code $\vec{y}$ (or a suspect fingerprint-code). In particular, if the symbols of the fingerprint-codes $\vec{x}_j$ that have been provided so far (in any previous rounds and the current round of the method 200) to currently active receivers 104 are made up of r symbols $x_{j,1}$, $x_{j,2}$, ..., $x_{j,r}$, then the content distributor 100 will, at the end of the step S204 have obtained a corresponding suspect-code $\vec{y}$ with symbols $y_1$, $y_2$, ..., $y_r$. In particular, for each symbol of the fingerprint-codes $\vec{x}_j$ that have been provided so far (in any previous rounds and the current round of the method 200) to currently active receivers 104, there is a corresponding symbol in the suspect-code. Therefore if, at the step S202 of the current round, the method 200 provided the currently active receivers 104 with w respective symbols $x_{j,(r-w+1)},...,x_{j,r}$, forming a part of the respective fingerprint-codes $\vec{x}_j$, then at the step S204 the content distributor obtains w corresponding symbols $y_{(r-w+1)},...,y_r$ as a corresponding part to add to, or extend, the suspect-code $\vec{y}$.

In particular, the content distributor 100 may receive a forgery 114 and use the analysis module 118 to decode a watermark payload from the forgery. The decoded watermark payload is a sequence of one or more fingerprint symbols that corresponds to (or is represented by) the received forgery 114. This processing is, essentially, an inverse operation to the method by which the encoding module generates a version 110 of a source item of content 102 that corresponds to a sequence of one or more fingerprint symbols. Hence, this watermark payload comprises the next symbols $y_{(r-w+1)},...,y_r$ that form the next part of the suspect-code $\vec{y}$. In this way, these symbols of the suspect-code may be obtained, or received, as a code embedded, or encoded, within the forgery 114. Moreover, the suspect-code $\vec{y}$ itself may be formed from, and grow out of, symbols obtained from a series of forgeries 114 that the content distributor 100 obtains or receives over the series of rounds.

At a step S206, the content distributor 100 uses the analysis module 118 to analyse the suspect-code $\vec{y}$. The analysis module 118 determines a likelihood (or an indication of a likelihood) that the suspect-code $\vec{y}$ has been formed using one or more of the symbols $x_{j,1}$, $x_{j,2}$, ..., $x_{j,r}$ that have been provided to the j-th receiver 104 so far. In otherwords, the analysis module 118 determines a likelihood (or an indication of a likelihood) that the j-th receiver 104 is a pirate 104, i.e. that one or more watermarked item of contents 110 provided to the j-th receiver 104 have been used, somehow, to generate one or more forgeries 114. This is done for each receiver 104 in the set of active receivers 104.

In particular, for each receiver 104 in the current set of active receivers 104, the analysis module 118 may maintain a corresponding score (represented by $S_j$ for the j-th receiver 104 in the following) that indicates a likelihood that the suspect-code $\vec{y}$ has been formed using one or more of the symbols that have been provided to that receiver 104 so far. The score, $S_j$, for the j-th receiver 104 thus represents a likelihood that the j-th receiver 104 is a colluding-receiver, where a colluding-receiver is a receiver 104 that has been provided with a version of a source item of content 110 that has been used to generate one of the forgeries 114 that have been received so far during the method 200. The analysis module 118, at the step S206, updates the score $S_j$ for each currently active receiver 104 based on the fingerprint-codes for the active receivers 104 and the suspect-code (and, in particular, on the newly obtained symbols $y_{(r-w+1)}$, ..., $y_r$ for the suspect-code). For example, if a newly obtained symbol $y_i$ matches the symbol $x_{j,i}$ of the fingerprint-code for the j-th receiver 104, then the score $S_j$ for the j-th receiver may be incremented; if the newly obtained symbol $y_i$ does not match the symbol $x_{j,i}$ of the fingerprint-code for the j-th receiver 104, then the score $S_j$ for the j-th receiver may be decremented. Particular methods for calculating and updating the scores $S_j$ shall be described shortly.

The scores $S_j$ may be stored in the memory 126 of the content distributor 100 as a part of the data 122.

The scores $S_j$ are initialized (e.g. to a value of 0) at the very beginning of the method 200 (i.e. before any of the rounds are started) and are updated/modified each round, i.e. they are not re-initialized when a new round commences or when pirates 104 that have been identified are deactivated.

At the step S208, the analysis module 118 uses these updated scores $S_j$, or likelihoods, to try to identify one or more pirates 104. In particular, for each receiver 104 in the set of active receivers 104, that receiver's 104 score $S_j$ is compared to a threshold Z and if the score $S_j$ exceeds that threshold Z, then that receiver 104 is identified as being a pirate 104. The analysis module 118 then updates the set of active receivers 104 by removing any identified pirates 104 from the set of active receivers 104 - i.e. any identified pirates 104 are de-activated, or disconnected, as described above. Thus, any identified pirates 104 are not provided with further fingerprint symbols in subsequent rounds of the method 200, i.e. any identified pirates 104 are not provided with further versions of items of content 110 in subsequent rounds of the method 200.

The threshold is set such that the probability of incorrectly identifying any innocent (non-colluding) receiver 104 as actually being a pirate (i.e. the false positive probability) is at most a predetermined probability. In other words, the threshold is set such that the probability that the current suspect-code $\vec{y}$ was not actually formed using one or more symbols that have been provided to a receiver 104 who has a score exceeding the threshold is at most the predetermined probability.

At the step S210, it is determined whether or not to terminate the method 200. The method 200 may be terminated if all of the different items of content 102 that are to be distributed have been distributed. Additionally or alternatively, the method 200 may be terminated if at least a predetermined number of symbols $x_{j,i}$ have been provided to the active receivers 104 at the step S202 - this predetermined number could be a calculated length I for the fingerprint-codes. Additionally or alternatively, the method 200 may be terminated if at least a predetermined number of pirates 104 have been identified at the step S206 across the rounds that have been carried out so far. Additionally or alternatively it is possible that the step S204 may fail to obtain further symbols for the suspect code (for example, a watermark decoding operation may indicate that it has failed to successfully decode a watermark payload from a forgery 114) - in this case, the processing for the current round may skip the steps S206 and S208 (as indicated by a dashed arrow connecting the steps S204 and S210 in figure 2) and move straight to the step S210 at which the method 200 is terminated. Other termination criteria may be applied.

If it is determined that the method is to continue, then the processing returns to the step S202. The method 200 therefore commences a next round, which is carried out based on the current set of active receivers 104 (which might have been updated at the step S208 of the previous round) and which involves providing those active receivers 104 with a further/new item of content 102 for the next round (and hence one or more further symbols as a further/next part of the fingerprint-codes for those receivers 104).

For example, the content distributor 100 may be able to embed 1 symbol $x_{j,i}$ in a single frame of video. The content distributor 100 receives corresponding frames of video as forgeries 114 produced by the coalition of pirates 104. In this case, each item of content 102 would correspond to a frame of video and the value of w would be 1, so that total amount of a receiver's fingerprint-code that has been provided to the receiver 104 grows by 1 symbol for each round of the method 200. Then, for every frame of pirate video received, the content distributor 100 carries out an analysis to try to identify one or more of the pirates 104 that are generating the pirate version - if any are identified, then they are deactivated. This leaves the coalition of pirates 104 with fewer members actually receiving copies of the video content - eventually, further pirates 104 will be identified until no more pirates 104 remain active.

As another example, the content distributor may be able to embed 2 symbols $x_{j,i}$ in a single frame of video, but may only be able to carry out a decoding operation once for every 5 frames of a received forgery 114. In this case, the each item of content 102 would correspond to a 5 frames of video and the value of w would be 10, so that total amount of a receiver's fingerprint-code that has been provided to the receiver 104 grows by 10 symbols for each round of the method 200. Then, for every 5 frames of video of a pirate version of the distributed video, the content distributor 100 carries out an analysis to try to identify one or more of the pirates 104 that are generating the pirate version - if any are identified, then they are deactivated. This leaves the coalition of pirates 104 with fewer members actually receiving copies of the video content - eventually, further pirates 104 will be identified until no more pirates 104 remain active.

It will be appreciated that if, at the step S206, no pirates 104 are identified (or it is determined that no further pirates 104 have been implicated), then the step S208 may be skipped over (as there are no additional pirates 104 to remove from the set of active receivers 104). This is illustrated in figure 2 by a dashed arrow from the step S206 to the step S210.

It will be appreciated that, at any stage during the method 200, one or more new receivers 104 may be added to the set of active receivers 104 (for example when a new subscriber joins a content distribution system).

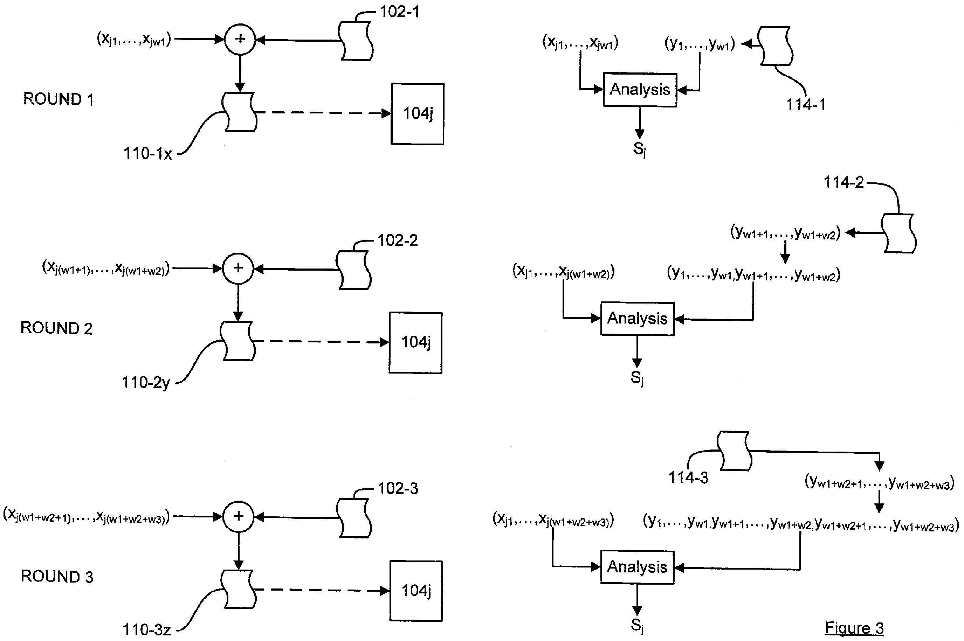

Figure 3 schematically illustrates an example of the operation of the method 200.

At a first round, a first part of the fingerprint-code $\vec{x}_j$ for the j-th receiver 104j is embedded as a watermark into a first item of content 102-1. This first part of the fingerprint-code $\vec{x}_j$ is made up of w1 symbols $(x_{j,1},...,x_{j,w1})$. The resulting watermarked item of content 110-1x is provided to the j-th receiver 104j, thereby providing that j-th receiver 104j with the set of w1 symbols $(x_{j,1},...,x_{j,w1})$. When the content distributor 100 obtains a forgery 114-1 of the first item of content 102-1, then corresponding symbols $(y_1,...,y_{w1})$ of the suspect-code are obtained by performing a watermark decoding operation on the received forgery 114-1. The score $S_j$ for the j-th receiver 104 is then updated to indicate a likelihood that the j-th receiver 104j is a pirate and the watermarked item of content 110-1x was used to create the forgery 114-1. In other words, the score $S_j$ for the j-th receiver 104 is updated to indicate a likelihood that the suspect-code $\vec{y}=(y_1,...,y_{w1})$ has been formed using one or more of the symbols $(x_{j,1},...,x_{j,w1})$ that were provided to the j-th receiver 104j. If $S_j$ exceeds a threshold, then the j-th receiver 104j is de-activated; otherwise, processing continues to the second round. The above is carried out for each currently active receiver 104.

At the second round, a second part of the fingerprint-code $\vec{x}_j$ for the j-th receiver 104j is embedded as a watermark into a second item of content 102-2. This second part of the fingerprint-code $\vec{x}_j$ is made up of w2 symbols $(x_{j,(w1+1)},...,x_{j,(w1+w2)})$. The resulting watermarked item of content 110-2y is provided to the j-th receiver 104j, thereby providing that j-th receiver 104j with the set of w2 symbols $(x_{j,(w1+1)},...,x_{j,(w1+w2)})$. When the content distributor 100 obtains a forgery 114-2 of the second item of content 102-2, then corresponding symbols $(y_{(w1+1)},...y_{(w1+w2)})$ of the suspect-code are obtained by performing a watermark decoding operation on the received forgery 114-2. The score $S_j$ for the j-th receiver 104 is then updated to indicate a likelihood that the j-th receiver 104j is a pirate and one or more of the watermarked items of content 110-1x, 110-2y were used to create one or more of the forgeries 114-1, 114-2. In other words, the score $S_j$ for the j-th receiver 104 is updated to indicate a likelihood that the suspect-code $\vec{y}=(y_1,...,y_{w1+w2})$ has been formed using one or more of the symbols $(x_{j,1},...,x_{j,(w1+w2)})$ that were provided to the j-th receiver 104j. This may involve taking the current score $S_j$ for the j-th receiver 104j and adding to that current score $S_j$ a value that results from a comparison (or processing) of the w2 received symbols $(y_{(w1+1)},...,y_{(w1+w2)})$ and the w2 symbols $(x_{j,(w1+1)},...,x_{j,(w1+w2)})$ of the fingerprint-code for the j-th receiver 104j, thereby obtaining a new score $S_j$. If $S_j$ exceeds a threshold, then the j-th receiver 104j is de-activated; otherwise, processing continues to the third round. The above is carried out for each currently active receiver 104.

At the third round, a third part of the fingerprint-code $\vec{x}_j$ for the j-th receiver 104j is embedded as a watermark into a third item of content 102-3. This third part of the fingerprint-code $\vec{x}_j$ is made up of w3 symbols $(x_{j,(w1+w2+1)},...,x_{j,(w1+w2+w3)})$. The resulting watermarked item of content 110-3z is provided to the j-th receiver 104, thereby providing that j-th receiver 104j with the set of w3 symbols $(x_{j,(w1+w2+1)},...,x_{j,(w1+w2+w3)})$. When the content distributor 100 obtains a forgery 114-3 of the third item of content 102-3, then corresponding symbols $(y_{(w1+w2+1)},...,y_{(w1+w2+w3)})$ of the suspect-code are obtained by performing a watermark decoding operation on the received forgery 114-3. The score $S_j$ for the j-th receiver 104 is then updated to indicate a likelihood that the j-th receiver 104 is a pirate and one or more of the watermarked items of content 110-1x, 110-2y, 110-3z were used to create one or more of the forgeries 114-1, 114-2, 114-3. In other words, the score $S_j$ for the j-th receiver 104j is updated to indicate a likelihood that the suspect-code $\vec{y}=(y_1,...,y_{w1+w2+w3})$ has been formed using one or more of the symbols $(x_{j,i1},...,x_{j,(w1+w2+w3)})$ that were provided to the j-th receiver 104j. This may involve taking the current score $S_j$ for the j-th receiver 104j and adding to that current score $S_j$ a value that results from a comparison (or processing) of the w3 received symbols $(y_{(w1+w2+1)},...,y_{(w1+w2+w3)})$ and the w3 symbols $(x_{j,(w1+w2+1)},...,x_{j,(w1+w2+w3)})$ of the fingerprint-code for the j-th receiver 104j, thereby obtaining a new score $S_j$. If $S_j$ exceeds a threshold, then the j-th receiver 104j is de-activated; otherwise, processing continues to the fourth round (not shown). The above is carried out for each currently active receiver 104.

In one embodiment of the invention, the symbols for the fingerprint-codes are generated for use in (or provision at) the step S202 as follows:

(a) Let the value $c \geq 2$ be an integer representing the maximum coalition size that the fingerprinting scheme is to cater for (i.e. the maximum number of pirates 104 who can generate a forgery 114). Let $\varepsilon_1 \in (0,1)$ be a desired upper bound on the probability of incorrectly identifying a receiver 104 as being a pirate 104, i.e. a false positive probability for the fingerprinting scheme.

(b) Set k =⌈log(2n/ε₁)⌉. Let $d_\alpha$, r, s and g be positive constants with r > 1/2 and let $d_l$, $d_z$, $d_\delta$, $d_\alpha$, r, s, g and η be values satisfying the following four requirements:

$$d_\alpha \geq \frac{\sqrt{d_\delta}}{h(r)\sqrt{c}}$$

$$\frac{d_z}{d_\alpha} - \frac{rd_l}{d_\alpha^2} \geq 1$$

$$\frac{2-(4/d_\delta)}{\pi} - \frac{h^{-1}(s)s}{\sqrt{d_\delta c}} \geq g$$

$$gd_l - d_z \geq \left(\eta + \frac{s}{k}\right)\sqrt{\frac{d_\delta}{s^2 c}}$$

where $h^{-1}$ is a function mapping from (1/2,∞) to (0,∞) according to $h^{-1}(x)=(e^x - 1 - x)/x^2$, and h is the inverse function mapping from (0,∞) to (1/2,∞).

(c) Set the length, l, of each receiver's 104 fingerprint-code to be $l = d_l c^2 k$. Set $\delta = 1/(d_\delta c)$. Set $Z = d_z ck$. Set

$$\delta' = \arcsin\left(\sqrt{\delta}\right)$$ such that $0 < \delta' < \pi/4$.

(d) For each j = 1,···,n, the i-th symbol in the fingerprint-code for the j-th receiver 104 (i.e. $x_{j,i}$) is generated as an independent random variable such that $P(x_{j,i} = 1) = p_i$ and $P(x_{j,i} = 0) = 1-p_i$, i.e. the probability that $x_{j,i}$ assumes a first predetermined value is $p_i$ and the probability that $x_{j,i}$ assumes a second predetermined value is $1-p_i$. Here, the value $p_i$ is chosen independently from the range [δ,1-δ] according to a distribution with probability density function

$$f(p) = \frac{1}{(\pi - 4\delta')\sqrt{p(1-p)}} \text{ for } \delta \leq p \leq (1-\delta).$$

Again, the values 1 and 0 are used here for the first and second predetermined symbol values, but it will be appreciated that other symbol values could be used instead.

With this embodiment, the analysis module 118 operates at the steps S204 and S206 as follows. As an initialisation step (not shown in figure 2) prior to any of the rounds of the method 200, all of the receiver's 104 scores $S_j$ are initialised to the value 0. After obtaining or receiving one or more symbols $y_i$ of the suspect-code at the step S204 in the current round, then at the step S206, if the j-th receiver 104 is an active receiver 104 then the score $S_j$ for the j-th receiver 104 is updated by adding the value $S_{j,i}$ to $S_j$, where

$$S_{j,i} = \begin{cases} g_1(p_i) & \text{if } x_{j,i} = 1 \text{ and } y_i = 1 \\ g_0(p_i) & \text{if } x_{j,i} = 0 \text{ and } y_i = 1 \\ g_0(1-p_i) & \text{if } x_{j,i} = 1 \text{ and } y_i = 0 \\ g_1(1-p_i) & \text{if } x_{j,i} = 0 \text{ and } y_i = 0 \end{cases}$$

where

$$g_0(p) = -\sqrt{p/(1-p)} \text{ and } g_1(p) = \sqrt{(1-p)/p}.$$

This is done for each active receiver 104 and each symbol $y_i$ of the suspect-code received at the step S204 of the current round.

The threshold used at the step S206 is the value Z, so that if, at any round of the method 200 a receiver's 104 score exceeds Z, then that receiver 104 is identified (or accused) of being a pirate 104.

The method 200 may terminate at the step S210 when I symbols of the fingerprint-code for a receiver 104 have been sent to that receiver 104 (i.e. so that the maximum length of fingerprint-code sent to a receiver 104 is I). However, at the step S210, the method 200 may terminate when c pirates 104 have been identified. Hence, it is possible to terminate the method 200 without actually having to distribute I fingerprint symbols to the receivers 104.

This embodiment essentially takes the above TAR7 static probabilistic fingerprinting scheme and adapts it so as to form a more dynamic probabilistic fingerprinting scheme - the similarity between the various equations and conditions is apparent, except that a number of modifications are present in order to be able to make the transition from TAR7's static nature to the more dynamic nature of embodiments of the invention.

With this embodiment, the probability of incorrectly identifying a receiver 104 as being a pirate (i.e. the false positive probability) is at most $\varepsilon_1$, whilst the probability of not managing to identify all pirates 104 (i.e. a second type of false negative probability, stronger than the above first type of false positive probability) is again at most $\varepsilon_2$. This applies when the value of w is 1, i.e. when a single symbol is provided/encoded at the step S202 and a single corresponding symbol is received at the step S204 for each round of the method 200. For other values of w, the false positive probability lies between $\varepsilon_1$ and the corresponding false positive probability for the TAR7 scheme mentioned above (which can be half the size of $\varepsilon_1$ of the present embodiment). The mathematical proofs of these false positive and false negative results are provided in chapters 9.3 and 9.4 of the appendix at the end of this description.

As mentioned above, this embodiment essentially takes the above TAR7 static probabilistic fingerprinting scheme and adapts it so as to form a more dynamic probabilistic fingerprinting scheme. It will be appreciated that, in embodiments of the invention, any of the other Tardos-based static probabilistic fingerprinting schemes TAR1-TAR6 (or indeed any others) could be used instead of TAR7 as the basis for forming a more dynamic probabilistic fingerprinting scheme, with their various parameters/settings/thresholds being modified so as to achieve the desired false positive and false negative probabilities in the dynamic scheme. Indeed, other non-Tardos-based static probabilistic fingerprinting schemes, such as the BER1 scheme, could be used in embodiments of the invention as the basis for forming a more dynamic probabilistic fingerprinting scheme. Additionally, embodiments of the invention may make use of binary or non-binary symbols alphabets (as discussed above, for example, with reference to the TAR2 scheme).

The threshold value Z used at the step S208 may remain constant throughout the processing of the method 200. However, in some embodiments, the value Z may be updated to cater for the fact that one or more pirates 104 have been identified. For example, when one or more pirates 104 are identified and de-activated, the threshold may be decreased to account for the fact that the set of active receivers 104 is now reduced.

One observation of note is that the above-mentioned embodiments of the invention, and the previously-mentioned static probabilistic fingerprinting schemes, use the value c (the maximum coalition size that the fingerprinting scheme is to cater for) in order to set up the various parameters and to generate the symbols of the fingerprint-codes. For example, in the TAR7 static fingerprinting scheme and in the above-described embodiment of the invention, each symbol $x_{j,i}$ is taken from a probability distribution with a probability density function that is dependent on the value of $p_i$, which is dependent on the value of $\delta'$, which is dependent on the value of $\delta$, which is dependent on the value of c.

In preferred embodiments of the invention, each symbol for each fingerprint-code is generated independent of an expected number of colluding-receivers (i.e. independent of the value of c).

In order to remove the dependency on c, the above-mentioned embodiment of the invention (which is based on the TAR7 static probabilistic scheme) may be modified so that the value of each $p_i$ is chosen independently from the

$$f(p) = \frac{1}{\pi\sqrt{p(1-p)}}$$

range (0,1) according to a distribution with probability density function $f(p) = \frac{1}{\pi\sqrt{p(1-p)}}$ for 0<p<1. This removes the dependency of each symbol $x_{j,i}$ on the value of c. The same (or similar) can be done for other embodiments of the invention, such as embodiments of the invention which are based on the other Tardos-style static fingerprinting schemes TAR1-TAR6. A similar approach can be used for embodiments of the invention which are based on BER1 scheme or that are based on other types of static fingerprinting schemes.

With such schemes that are independent of c, the method of updating the score $S_j$ for the active receivers 104 should be modified to account for the fact that the symbols of the fingerprint-codes provided to the receivers 104 are now taken from a different distribution (that is not dependent on c). For example, in the Tardos-based schemes, each $p_i$ was taken from the range $[\delta, 1-\delta]$ for some value $\delta$ (dependent on c) whereas now each $p_i$ is taken from the range (0,1). Thus, a value for $p_i$ may be valid for a particular collusion size c, i.e. whilst having been taken from the range (0,1), $p_i$ happens to lie in the range $[\delta, 1-\delta]$ appropriate to that collusion size c. Conversely, a value for $p_i$ may be invalid for a particular collusion size c, i.e. having been taken from the range (0,1), the value of $p_i$ happens to lie outside of the range $[\delta, 1-\delta]$ appropriate to that collusion size c. In this way, the symbols generated for the i-th position in the fingerprint-codes provided to the receivers 104 may be valid for certain collusion sizes and may be invalid for other collusion sizes. In the above example, symbols generated for the i-th position of the fingerprint-codes are valid for a collusion-size of c if $p_i$ lies in the range $\delta \leq p_i \leq (1-\delta)$, where $\delta = 1/(d_\delta c)$; otherwise, they are invalid. However, for other embodiments of the invention, it will be appreciated that other criteria will apply as to when symbols for the i-th position of the fingerprint-codes are valid or are not valid for a particular collusion-size of c.

Therefore, in preferred embodiments of the invention, the symbols for the fingerprint-codes for the step S202 are generated independent of any collusion-size c (as set out above). The step S206 involves maintaining, for each receiver 104j and for one or more expected (maximum) collusion sizes c1, c2, ..., ct, a corresponding score $S'_{j,c1}$, $S'_{j,c2}$, ..., $S'_{j,ct}$. The score $S'_{j,c}$ indicates a likelihood that the j-th receiver 104 is a colluding-receiver under the assumption that the number of colluding-receivers is of size (at most) c. For each of the collusion-sizes c1, c2, ..., ct, there is a respective threshold $Z_{c1}$, $Z_{c2}$, ..., $Z_{ct}$ corresponding to the collusion-size. These respective thresholds are set as discussed above to ensure that a receiver 104 that is not a colluding-receiver 104 will only have a score (i.e. one or more of $S'_{j,c1}$, $S'_{j,c2}$, ..., $S'_{j,ct}$) that exceeds its corresponding threshold with at most the predetermined (desired) false positive probability $\varepsilon_1$. The step S206 comprises comparing each of the scores $S'_{j,1}$, $S'_{j,2}$,..., $S'_{j,ct}$ with the corresponding threshold $Z_{c1}$, $Z_{c2}$, ..., $Z_{ct}$ and identifying the j-th receiver 104 as a colluding-user if one or more of the scores $S'_{j,1}$, $S'_{j,2}$,..., $S'_{j,ct}$ exceeds the corresponding threshold $Z_{c1}$, $Z_{c2}$, ..., $Z_{ct}$.

To cater for the fact that the generation of the fingerprint-symbols for the i-th position in the fingerprint-codes may not be valid for a particular collusion-size, the step S206 only updates a score $S'_{j,c}$ based on a received i-th symbol $y_i$ of the suspect-code and the i-th fingerprint-symbol $x_{j,i}$ if symbols at the i-th position of the fingerprint-codes are valid for that collusion size c. In other words, updating the score $S'_{j,c}$ for a collusion-size c comprises disregarding a symbol $y_i$ obtained for the i-th position of the suspect-code if symbols generated for the i-th position of the fingerprint-codes are invalid for that collusion-size c.

In this way, a plurality of fingerprinting schemes (catering for different collusion sizes) may effectively be run in parallel - however, the same fingerprint-codes are supplied to the receivers 104. In other words, these embodiments enable coalitions of arbitrary size to be catered for, this being done without having to generate and supply to receivers 104 different fingerprint-codes that are specifically intended for respectively different collusion-sizes.

Figure 4 schematically illustrates an example computer system 400 which may be used to form a data processing system forming the whole or a part of the content distributor 100 and/or each receiver 104.

The system 400 comprises a computer 402. The computer 402 comprises: a storage medium 404, a memory 406, a processor 408, a storage medium interface 410, an output interface 412, an input interface 414 and a network interface 416, which are all linked together over one or more communication buses 418.

The storage medium 404 may be any form of non-volatile data storage device such as one or more of a hard disk drive, a magnetic disc, an optical disc, a ROM, etc. The storage medium 404 may store an operating system for the processor 408 to execute in order for the computer 402 to function. The storage medium 404 may also store one or more computer programs (or software or instructions or code) that form part of an embodiment of the invention.

The memory 406 may be any random access memory (storage unit or volatile storage medium) suitable for storing data and/or computer programs (or software or instructions or code) that form part of an embodiment of the invention.

The processor 408 may be any data processing unit suitable for executing one or more computer programs (such as those stored on the storage medium 404 and/or in the memory 406) which have instructions that, when executed by the processor 408, cause the processor 408 to carry out a method according to an embodiment of the invention and configure the system 400 to be a system according to an embodiment of the invention. The processor 408 may comprise a single data processing unit or multiple data processing units operating in parallel, in cooperation with each other, or independently of each other. The processor 408, in carrying out data processing operations for embodiments of the invention, may store data to and/or read data from the storage medium 404 and/or the memory 406.

The storage medium interface 410 may be any unit for providing an interface to a data storage device 422 external to, or removable from, the computer 402. The data storage device 422 may be, for example, one or more of an optical disc, a magnetic disc, a solid-state-storage device, etc. The storage medium interface 410 may therefore read data from, or write data to, the data storage device 422 in accordance with one or more commands that it receives from the processor 408.

The input interface 414 is arranged to receive one or more inputs to the system 400. For example, the input may comprise input received from a user, or operator, of the system 400; the input may comprise input received from a device external to or forming part of the system 400. A user may provide input via one or more input devices of the system 400, such as a mouse (or other pointing device) 426 and/or a keyboard 424, that are connected to, or in communication with, the input interface 414. However, it will be appreciated that the user may provide input to the computer 402 via one or more additional or alternative input devices. The system may comprise a microphone 425 (or other audio transceiver or audio input device) connected to, or in communication with, the input interface 414, the microphone 425 being capable of providing a signal to the input interface 414 that represents audio data (or an audio signal). The computer 402 may store the input received from the/each input device 424, 425, 426 via the input interface 414 in the memory 406 for the processor 408 to subsequently access and process, or may pass it straight to the processor 408, so that the processor 408 can respond to the input accordingly.

The output interface 412 may be arranged to provide a graphical/visual output to a user, or operator, of the system 400. As such, the processor 408 may be arranged to instruct the output interface 412 to form an image/video signal representing a desired graphical output, and to provide this signal to a monitor (or screen or display unit) 420 of the system 400 that is connected to the output interface 412. Additionally, or alternatively, the output interface 412 may be arranged to provide an audio output to a user, or operator, of the system 400. As such, the processor 408 may be arranged to instruct the output interface 412 to form an audio signal representing a desired audio output, and to provide this signal to one or more speakers 421 of the system 400 that is/are connected to the output interface 412.

For example, when the system 400 is a receiver 104, the output interface 412 may output to an operator a representation of a watermarked item of content 110 that has been received by the receiver 104.

Finally, the network interface 416 provides functionality for the computer 402 to download data from and/or upload data to one or more data communication networks (such as the Internet or a local area network).

It will be appreciated that the architecture of the system 400 illustrated in figure 4 and described above is merely exemplary and that other computer systems 400 with different architectures and additional and/or alternative components may be used in embodiments of the invention, and that not all of the components mentioned above may be present. For example, some or all of the input devices (e.g. the keyboard 424, the microphone 425 and the mouse 426) and/or the output devices (e.g. the monitor 420 and the speaker 421) may be integral with the computer 402, whilst others may be peripheral devices communicatively coupled to the computer 402 (e.g. via a cable and/or wirelessly).

It will be appreciated that embodiments of the invention may be implemented using a variety of different information processing systems. In particular, although figure 4 and the discussion thereof provide an exemplary computing architecture, this is presented merely to provide a useful reference in discussing various aspects of the invention. Of course, the description of the architecture has been simplified for purposes of discussion, and it is just one of many different types of architecture that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the system 400 may be any type of computer system, such as one or more of: a games console, a set-top box, a personal computer system, a mainframe, a minicomputer, a server, a workstation, a notepad, a personal digital assistant, and a mobile telephone.

It will be appreciated that, insofar as embodiments of the invention are implemented by a computer program, then a storage medium and a transmission medium carrying the computer program form aspects of the invention. The computer program may have one or more program instructions, or program code, which, when executed by a computer (or a processor) carries out an embodiment of the invention. The term "program," as used herein, may be a sequence of instructions designed for execution on a computer system, and may include a subroutine, a function, a procedure, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

ANNEX

The following sections provide various mathematical analysis and proofs in support of the above-mentioned embodiments. In these sections:

- Reference is made to "code matrix X", which is the matrix having n rows and I columns (n being the number of receivers 104 and I being the length of a fingerprint-code for a receiver 104), for which the j-th row is the fingerprint-code $\vec{x}_j$ for the j-th receiver 104. Thus, the element at the j-th row and i-th column of code matrix X is $x_{j,i}$.
- The symbol U is used to represent the whole set of receivers 104.
- The symbol $\sigma$ is used to refer to an accusation algorithm (relevant to the particular fingerprinting-scheme being referred to at the time).

- [BT08] refers to document "Improved versions of Tardos' fingerprinting scheme" (Oded Blayer et al., Des. Codes Cryptography, 48, pages 79-103, 2008).
- [SKC08] refers to document "Symmetric Tardos Fingerprinting Codes for Arbitrary Alphabet Sizes" (Boris Skoric et al., Des. Code Cryptography, 46(2), 2008, pages 137-166).

Chapter 8

The improved Tardos scheme

8.2 Construction

Let $h^{-1} : \left(\frac{1}{2}, \infty\right) \to (0, \infty)$ be defined by $h^{-1}(x) = (e^x - 1 - x)/x^2$. Let $h : (0, \infty) \to \left(\frac{1}{2}, \infty\right)$ denote its inverse function, so that $e^x \leq 1 + x + \lambda x^2$ if and only if $x \leq h(\lambda)$. Let $d_\alpha$, $r$, $s$, $g$ be positive constants with $r > \frac{1}{2}$, and let $d_\ell$, $d_z$, $d_\delta$, $d_\alpha$, $r$, $s$, $g$, $\eta$ satisfy the following four requirements.

$$d_\alpha \geq \frac{\sqrt{d_\delta}}{h(r)\sqrt{c}} \tag{R1}$$

$$\frac{d_z}{d_\alpha} - \frac{r d_\ell}{d_\alpha^2} \geq 1 \tag{R2}$$

$$\frac{2 - \frac{4}{d_\delta}}{\pi} - \frac{h^{-1}(s)s}{\sqrt{d_\delta}c} \geq g \tag{R3}$$

$$g d_\ell - d_z \geq \eta \sqrt{\frac{d_\delta}{s^2 c}} \tag{R4}$$

Let the Tardos scheme be constructed as below.

1. **Initialization**

(a) Take $\ell = d_\ell c^2 k$ as the code length, and take the parameters $\delta$ and $Z$ as $\delta = 1/(d_\delta c)$ and $Z = d_z ck$. Compute $\delta' = \arcsin(\sqrt{\delta})$ such that $0 < \delta' < \pi/4$.

(b) For each fingerprint position $i \in [\ell]$, choose $p_i$ independently from the distribution given by the following cumulative distribution function $F$:

$$F(p) = \frac{2 \arcsin(\sqrt{p}) - 2\delta'}{\pi - 4\delta'}$$

The probability density function $f$ of this distribution is given by:

$$f(p) = \frac{1}{(\pi - 4\delta')\sqrt{p(1 - p)}}$$

This function is biased towards $\delta$ and $1 - \delta$ and symmetric around 1/2.

2. **Codeword generation**

(a) For each position $i \in [\ell]$ and for each user $j \in [n]$, select the entry $X_{ji}$ of the code matrix X independently by $X_{ji} \sim \mathrm{Ber}(p_i)$.

3. **Accusation**

(a) For each position $i \in [\ell]$ and for each user $j \in [n]$, calculate the score $S_{ji}$ according to:

$$S_{ji} = S_{ji}(y_i, (\vec{x}_j)_i, p_i) = \begin{cases} +\sqrt{(1-p_i)/p_i} & \text{if } X_{ji} = 1 \text{ and } y_i = 1 \\ -\sqrt{p_i/(1-p_i)} & \text{if } X_{ji} = 0 \text{ and } y_i = 1 \\ -\sqrt{(1-p_i)/p_i} & \text{if } X_{ji} = 1 \text{ and } y_i = 0 \\ +\sqrt{p_i/(1-p_i)} & \text{if } X_{ji} = 0 \text{ and } y_i = 0 \end{cases} \tag{8.1}$$

(b) For each user $j \in [n]$, calculate the total accusation sum $S_j = \sum_{i=1}^{\ell} S_{ji}.$ User $j$ is accused if and only if $S_j > Z$.

Then the following properties hold.

**Theorem 8.1** (Soundness). *Let $j \in U$ be an arbitrary user, and let $C \subset U \setminus \{j\}$ be a coalition of any size not containing j. Let p be some pirate strategy employed by this coalition. Then*

$$\mathbb{P}[j \in \sigma(\rho(X))] < \epsilon_1/n.$$

*Therefore the probability of accusing at least one innocent user is at most $\varepsilon_1$.*

**Theorem 8.2** (Completeness). *Let $C \subseteq U$ be a coalition of size at most c, and let $\rho$ be any pirate strategy employed by this coalition. Then*

$$\mathbb{P}[C \cap \sigma(\rho(X)) = \emptyset] < \epsilon_2$$

*Therefore the probability of not accusing any guilty users is at most $\varepsilon_2$.*

In the following two Sections we will prove the soundness and completeness properties. The proofs are both very similar to the proofs in [BT08], except for some small adjustments to incorporate the symbol-symmetric assucation function. Then in Section 8.5 we will look at the asymptotic behaviour of the scheme, as c goes to infinity. In Section 8.6 we then give results similar to those in [BT08, Section 2.4.5] on how to find the optimal parameters $d_\delta$, $d_\alpha$, $d_z$, $d_\ell$, given the parameters *r*, *s*, *g*. Finally in Section 8.7 we use these formulas to calculate optimal parameters numerically, for different values of c and $\eta$.

**8.3 Soundness**

We will prove the soundness property as stated in Theorem 8.1 under the assumptions on the parameters stated earlier. For this proof we will only use the first two assumptions.

*Proof of Theorem 8.1.* We want to prove that the probability of accusing any particular innocent user is at most $\varepsilon_1/n$. Since a user is accused if and only if his score $S_j$ exceeds Z, we therefore need to prove that $\mathbb{P}[S_j > Z] \leq \epsilon_1/n$ for innocent users *j*.

First of all, we use $\alpha = 1/(d_\alpha c)$ and the Markov inequality to obtain

$$\mathbb{P}[S_j > Z] = \mathbb{P}\left[e^{\alpha S_j} > e^{\alpha Z}\right] \leq e^{-\alpha Z}\mathbb{E}\left[e^{\alpha S_j}\right].$$

Next we fill in $S_j = \sum_{i=1}^{\ell} S_{ji}$ to get

$$\mathbb{E}\left[e^{\alpha S_j}\right] = \mathbb{E}\left[\prod_{i=1}^{\ell} e^{\alpha S_{ji}}\right] = \prod_{i=1}^{\ell} \mathbb{E}\left[e^{\alpha S_{ji}}\right].$$

Since $S_{ji} < \sqrt{1/\delta} = \sqrt{d_\delta c}$ it follows that $\alpha S_{ji} < \sqrt{d_\delta}/(d_\alpha \sqrt{c})$. From Requirement (R1) we know that $\sqrt{d_\delta}/(d_\alpha \sqrt{c}) \leq h(r)$ for our choice of $r$, hence $\alpha S_{ji} < h(r)$. From the definition of $h$ we know that $e^w \leq 1 + w + rw^2$ exactly when $w \leq h(r)$. Using this with $w = \alpha S_{ji}$ we get

$$\mathbb{E}\left[e^{\alpha S_{ji}}\right] \leq \mathbb{E}\left[1 + \alpha S_{ji} + r(\alpha S_{ji})^2\right] = 1 + \alpha\mathbb{E}[S_{ji}] + r\alpha^2\mathbb{E}[S_{ji}^2].$$

We can easily calculate

$$\mathbb{E}[S_{ji}]$$

and

$$\mathbb{E}[S_{ji}^2],$$

as $y_i$ and $X_{ji}$ are independent for innocent users $j$. Writing $q_i = \sqrt{(1 - p_i)/p_i}$, if $y_i = 0$, then with probability $p_i$ we have $X_{ji} = 1$ and $S_{ji} = -q_i$, while with probability $1 - p_i$ we have $X_{ji} = 0$ and $S_{ji} = 1/q_i$. Similarly, if $y_i = 1$, then with probability $p_i$ we have $X_{ji} = 1$ and $S_{ji} = q_i$, while with probability $1 - p_i$ we have $X_{ji} = 0$ and $S_{ji} = -1/q_i$. Similarly,. So we get

$$\mathbb{E}[S_{ji}|y_i = 0] = p_i \cdot \left(-\sqrt{\frac{1 - p_i}{p_i}}\right) + (1 - p_i) \cdot \left(+\sqrt{\frac{p_i}{1 - p_i}}\right) = 0$$

$$\mathbb{E}[S_{ji}|y_i = 1] = p_i \cdot \left(+\sqrt{\frac{1 - p_i}{p_i}}\right) + (1 - p_i) \cdot \left(-\sqrt{\frac{p_i}{1 - p_i}}\right) = 0$$

$$\mathbb{E}[S_{ji}^2|y_i = 0, 1] = p_i \cdot \left(\frac{1 - p_i}{p_i}\right) + (1 - p_i) \cdot \left(\frac{p_i}{1 - p_i}\right) = 1.$$

So both expectation values are the same for each value of $y_i$, and we get

$$\mathbb{E}[S_{ji}] = 0 \qquad\qquad (8.2)$$

$$\mathbb{E}[S_{ji}^2] = 1. \qquad\qquad (8.3)$$

So it follows that

$$\mathbb{E}\left[e^{\alpha S_{ji}}\right] \leq 1 + r\alpha^2 \leq e^{r\alpha^2}.$$

Using all the above results we get

$$\mathbb{P}[S_j > Z] \leq e^{-\alpha Z}\left(\prod_{i=1}^{\ell} e^{r\alpha^2}\right) = e^{-\alpha Z + r\alpha^2 \ell}.$$

Since we need to prove that $\mathbb{P}[S_j > Z] \leq \epsilon_1/n$, the proof would be complete if $e^{-\alpha Z + r\alpha 2\ell} \leq e^{-k} \leq \varepsilon_1/n$. Filling in $\alpha = 1/(d_\alpha c)$, $Z = d_z ck$, $\ell = d_\ell c^2 k$ this means we would like that

$$\frac{-d_z ck}{d_\alpha c} + \frac{r d_\ell c^2 k}{d_\alpha^2 c^2} \leq -k.$$

Rewriting this equation leads exactly to Requirement (R2), which is assumed to hold. This completes the proof.
Note that this proof has barely changed, compared to the original proof in [BT08]. The only difference is that now the scores are counted for all positions $i$, instead of only those positions where $y_i = 1$. However, since in the proof in [BT08] this number of positions was then bounded by $\ell$, the result was the same there as well. This explains why the first two assumptions on the parameters are exactly the same as those in [BT08].

8.4 Completeness

For guilty users we have to look carefully where changes occur. We will walk through the proof of [BT08, Theorem 1.2] and note where the formulas change.
*Proof of Theorem 8.2.* For simplicity, we assume users 1,..., c are exactly the c colluders, and we will prove that with high enough probability the algorithm will accuse at least one of them. This then proves that for any coalition of size at most c, we will accuse at least one of the pirates with high probability.
First, we write the total accusation sum of all colluders together as follows.

$$S = \sum_{i=1}^{\ell}\sum_{j=1}^{c} S_{ji} = \sum_{i=1}^{\ell} y_i\left(x_i q_i - \frac{c - x_i}{q_i}\right) + \sum_{i=1}^{\ell}(1 - y_i)\left(\frac{c - x_i}{q_i} - x_i q_i\right).$$

Here $x_i$ is the number of ones on the $i$th positions of all colluders, $q_i = \sqrt{(1 - p_i)/p_i}$, and $y_i$ is the output symbol of the pirates on position $i$. Now if no colluder is accused, then all scores of all colluders are below $Z$. Hence if the total score $S$ exceeds $cZ$, then at least one of the users is accused. So it suffices to prove that $\mathbb{P}[S < cZ] \leq \epsilon_2$.

Now we use the Markov inequality and a constant $\beta = s\sqrt{\delta}/c > 0$ to get

$$\mathbb{P}[S < cZ] = \mathbb{P}\left[e^{-\beta S} > e^{-\beta cZ}\right] \leq e^{\beta cZ}\mathbb{E}_{\vec{y}, X, \vec{p}}\left[e^{-\beta S}\right]. \tag{8.4}$$

Writing out the expectation value over all values of $\vec{p}$ and $X$, and filling in the above definition of $S$, gives us

$$\mathbb{E}_{\vec{y},X,\vec{p}}\left[e^{-\beta S}\right] = \sum_X \prod_{i=1}^{\ell} \mathbb{E}_{y_i,p_i}\left[p_i^{x_i}(1-p_i)^{c-x_i}e^{-\beta y_i\left(x_iq_i-\frac{c-x_i}{q_i}\right)-\beta(1-y_i)\left(\frac{c-x_i}{q_i}-x_iq_i\right)}\right].$$

Since each $p_i$ is identically and independently distributed according to $F$, and $y_i$ is either 0 or 1, we can bound the above by

$$\mathbb{E}_{\vec{y},X,\vec{p}}\left[e^{-\beta S}\right] \leq \sum_X \prod_{i=1}^{\ell} \max{}^{*}(E_{0,x_i,p_i}, E_{1,x_i,p_i}),$$

where

$$E_{0,x_i,p_i} = \mathbb{E}_{p_i}\left[p_i^{x_i}(1-p_i)^{c-x_i}e^{-\beta\left(\frac{c-x_i}{q_i}-x_iq_i\right)}\right]$$

$$E_{1,x_i,p_i} = \mathbb{E}_{p_i}\left[p_i^{x_i}(1-p_i)^{c-x_i}e^{-\beta\left(x_iq_i-\frac{c-x_i}{q_i}\right)}\right],$$

and

$$\max{}^{*}(E_{0,x_i,p_i}, E_{1,x_i,p_i}) = \begin{cases} E_{0,x_i,p_i} & \text{if } x_i = 0; \\ E_{1,x_i,p_i} & \text{if } x_i = c; \\ \max(E_{0,x_i,p_i}, E_{1,x_i,p_i}) & \text{otherwise.} \end{cases}$$

In other words, $E_{0,x_i,p_i}$ calculates the expectation value for position $i$ when $y_i = 0$, while $E_{1,x_i,p_i}$ calculates the expectation value for position i when $y_i = 1$. If $x_i = 0$ then all pirates see a 0, hence by the marking assumption $y_i = 0$ and we have to take $E_{0,x_i,p_i}$. Similarly, if $x_i = c$, then the pirate output is necessarily a 1 and we have to take $E_{1,x_i,p_i}$. In all other cases, we bound the value by taking the worst case scenario, where the pirates choose exactly that symbol that

$$\mathbb{E}[e^{-\beta S}].$$

leads to the lowest expected increase in their total score, and therefore also the highest value of
The summation is done over all $\{0, 1\}$-matrices $X$, while the term inside the summation only depends on the number of ones in each column. So after switching the summation and the product, we can also simply tally all the terms which have the same contribution, to get

$$\mathbb{E}_{\vec{y},X,\vec{p}}\left[e^{-\beta S}\right] \leq \prod_{i=1}^{\ell} \sum_{x_i=0}^{c} \binom{c}{x_i} \max{}^{*}(E_{0,x_i,p_i}, E_{1,x_i,p_i}).$$

Remarking that the summations are actually equivalent and independent for all $i$, and introducing some more notation, we can write

$$\mathbb{E}_{\vec{y},X,\vec{p}}\left[e^{-\beta S}\right] \le \left(\sum_{x=0}^{c}\binom{c}{x}M_x\right)^{\ell}, \qquad (8.5)$$

where

$$M_x = \begin{cases} E_{0,x,p} & \text{if } x = 0; \\ E_{1,x,p} & \text{if } x = c; \\ \max(E_{0,x,p},E_{1,x,p}) & \text{otherwise,} \end{cases}$$

and $p$ is a random variable distributed according to $F$. For convenience we will also write $E_{0,x}$ and $E_{1,x}$ for $E_{0,x,p}$ and $E_{1,x,p}$ respectively, as the distribution of $p$ is the same for all values of $x$.

Now, using $\beta = s\sqrt{\delta}/c$, we bound the values $-\beta(xq - (c - x)/q)$ and $-\beta((c - x)/q - xq) = +\beta(xq - (c - x)/q)$ in the exponents of $E_{1,x}$ and $E_{0,x}$ as follows.

$$-s \le \frac{-\beta c}{\sqrt{\delta}} \le -\beta cq \le -\beta\left(xq - \frac{c-x}{q}\right) \le \frac{\beta c}{q} \le \frac{\beta c}{\sqrt{\delta}} \le s.$$

So $\pm\beta(xq-(c-x)/q) \le s$ for our choice of $\beta$. So we can use the inequality $e^w \le 1+w+h^{-1}(s)w^2$ which holds for all $w \le s$, with $w = \pm\beta(xq - (c - x)/q)$, to obtain

$$E_{0,x} \le \mathbb{E}_p\left[p^x(1-p)^{c-x}\left(1+\beta\left(xq - \frac{c-x}{q}\right) + h^{-1}(s)\beta^2\left(xq - \frac{c-x}{q}\right)^2\right)\right]$$

$$E_{1,x} \le \mathbb{E}_p\left[p^x(1-p)^{c-x}\left(1-\beta\left(xq - \frac{c-x}{q}\right) + h^{-1}(s)\beta^2\left(xq - \frac{c-x}{q}\right)^2\right)\right].$$

Introducing more notation, this can be rewritten to

$$E_{0,x} \le F_x + \beta E_{2,x} + h^{-1}(s)\beta^2 E_{3,x}$$

$$E_{1,x} \le F_x - \beta E_{2,x} + h^{-1}(s)\beta^2 E_{3,x},$$

where

$$F_x = \mathbb{E}_p\left[p^x(1-p)^{c-x}\right]$$

$$E_{2,x} = \mathbb{E}_p\left[p^x(1-p)^{c-x}\left(xq - \frac{c-x}{q}\right)\right]$$

$$E_{3,x} = \mathbb{E}_p \left[ p^x (1-p)^{c-x} \left( xq - \frac{c-x}{q} \right)^2 \right] \geq 0.$$

We first calculate $E_{2,x}$ explicitly. Note that taking $p$ from the Tardos distribution function is equivalent to taking some value $r$ uniformly at random from $[\delta', \frac{\pi}{2} - \delta']$ and taking $p = \sin^2(r)$. Writing the variables $p$ and $q$ in terms of $r$ thus gives us $p = \sin^2(r)$, $1 - p = \cos^2(r)$, $q = \cot(r)$, $1/q = \tan(r)$, so that $E_{2,x}$ can also be written as

$$E_{2,x} = \int_{\delta'}^{\frac{\pi}{2}-\delta'} \frac{\sin^{2x}(r)\cos^{2(c-x)}(r)(x\cot(r) - (c-x)\tan(r))dr}{\frac{\pi}{2} - 2\delta'}.$$

The primitive of the integrand is given by $I(r) = \sin^{2x}(r)\cos^{2(c-x)}(r)/(\pi - 4\delta')$, so we get

$$E_{2,x} = I\left(\frac{\pi}{2} - \delta'\right) - I(\delta') = \frac{(1-\delta)^x \delta^{c-x} - \delta^x (1-\delta)^{c-x}}{\pi - 4\delta'}. \tag{8.6}$$

We can also bound $E_{2,x}$ from above and below as

$$0 > \frac{-\delta^x(1-\delta)^{c-x}}{\pi - 4\delta'} \leq E_{2,x} \leq \frac{(1-\delta)^x \delta^{c-x}}{\pi - 4\delta'} > 0.$$

We can use these bounds to bound $M_x$, for $0 < x < c$, to get

$$M_x = \max(E_{0,x}, E_{1,x}) \leq F_x + h^{-1}(s)\beta^2 E_{3,x} + \frac{\beta}{\pi - 4\delta'} \max(\delta^x(1-\delta)^{c-x}, (1-\delta)^x\delta^{c-x}).$$

Since $\delta << 1 - \delta$, the maximum of the two terms is the first term when $x \leq c/2$, and it is the second term when $x > c/2$. For the positions where the marking assumption applies, i.e. $x = 0$ and $x = c$, we do not use the bounds on $E_{2,x}$, but use the exact formula from (8.6) to obtain

$$M_0 \leq F_0 - \beta \frac{(1-\delta)^c - \delta^c}{\pi - 4\delta'} + h^{-1}(s)\beta^2 E_{3,0}$$

$$M_c \leq F_c - \beta \frac{(1-\delta)^c - \delta^c}{\pi - 4\delta'} + h^{-1}(s)\beta^2 E_{3,c}.$$

Substituting the bounds on $M_x$ in the summation over $M_x$ from (8.5) gives us

$$\sum_{x=0}^{c} \binom{c}{x} M_x \leq M_0 + M_c + \sum_{x=1}^{c-1} \binom{c}{x} M_x$$

$$\leq \left( F_0 - \beta \frac{(1-\delta)^c - \delta^c}{\pi - 4\delta'} + h^{-1}(s)\beta^2 E_{3,0} \right)$$

$$+ \left( F_c - \beta \frac{(1-\delta)^c - \delta^c}{\pi - 4\delta'} + h^{-1}(s)\beta^2 E_{3,c} \right)$$

$$+ \sum_{x=1}^{c-1} \binom{c}{x} \left( F_x + \frac{\beta}{\pi - 4\delta'} \max(\delta^x(1-\delta)^{c-x}, (1-\delta)^x \delta^{c-x}) + h^{-1}(s)\beta^2 E_{3,x} \right)$$

$$\leq \sum_{x=0}^{c} \binom{c}{x} F_x - \beta \frac{2(1-\delta)^c}{\pi - 4\delta'} + h^{-1}(s)\beta^2 \sum_{x=0}^{c} \binom{c}{x} E_{3,x}$$

$$+ \frac{\beta}{\pi - 4\delta'} \left( 2\delta^c + \sum_{x=1}^{\lfloor c/2 \rfloor} \binom{c}{x} \delta^x(1-\delta)^{c-x} + \sum_{x=1}^{\lceil c/2 \rceil} \binom{c}{x} \delta^x(1-\delta)^{c-x} \right). \qquad (8.7)$$

For the summation over $E_{3,x}$, let us define a sequence of random variables $\{T_i\}_{i=1}^{c}$ according to $T_i = q$ with probability $p$ and $T_i = -1/q$ with probability $1 - p$. Using Equations (8.2) and (8.3) for $p_i = p$ and $q_i = q$, we get that

$$\mathbb{E}_p[T_i] = 0$$

and

$$\mathbb{E}_p[T_i^2] = 1.$$

Also, since $T_i$ and $T_j$ are independent for $i \neq j$, we have that

$$\mathbb{E}_p[T_i T_j] = 0$$

for $i \neq j$. Therefore we can write

$$\mathbb{E}_p \left[ \left( \sum_{i=1}^{c} T_i \right) \right] = \sum_{i=1}^{c} \mathbb{E}_p[T_i^2] + \sum_{1 \leq i \neq j \leq c} \mathbb{E}_p[T_i T_j] = c$$

But writing out the definition of the expected value, we see that the left hand side is actually the same as the summation over $E_{3,x}$, so

$$\mathbb{E}_p \left[ \left( \sum_{i=1}^{c} T_i \right) \right] = \sum_{x=0}^{c} \binom{c}{x} p^x (1-p)^{c-x} \left( xq - \frac{c-x}{q} \right)^2 = \sum_{x=0}^{c} \binom{c}{x} E_{3,x} = c$$

Also we trivially have that

$$\sum_{x=0}^{c} \binom{c}{x} F_x = \sum_{x=0}^{c} \binom{c}{x} \mathbb{E}_p \left[ p^x (1-p)^{c-x} \right] = \mathbb{E}_p \left[ \sum_{x=0}^{c} \binom{c}{x} p^x (1-p)^{c-x} \right] = \mathbb{E}_p [(p + (1-p))^c] = 1$$

For the summations over $\lceil c/2 \rceil$ and $\lfloor c/2 \rfloor$ terms we use the upper bound

$$\delta^c + \sum_{x=1}^{\lfloor c/2 \rfloor} \binom{c}{x} \delta^x (1-\delta)^{c-x} \le \delta^c + \sum_{x=1}^{\lceil c/2 \rceil} \binom{c}{x} \delta^x (1-\delta)^{c-x} \le \sum_{x=1}^{c} \binom{c}{x} \delta^x (1-\delta)^{c-x} \le \delta c.$$

Note that this bound is quite sharp; since $\delta \ll 1 - \delta$, the summation is dominated by the terms with low values of x. Adding the terms with c/2 < x < c to the summation has a negligible effect on the value of the summation.

Now applying the previous results to (8.7), and using $(1 - \delta)^c \ge 1 - \delta c$ for all c gives us that

$$\sum_{x=0}^{c} \binom{c}{x} M_x \le 1 - \beta \frac{2 - 4c\delta}{\pi - 4\delta'} + h^{-1}(s)\beta^2 c.$$

We would like to achieve that, for some g > 0,

$$\sum_{x=0}^{c} \binom{c}{x} M_x \le 1 - \beta \frac{2 - 4c\delta}{\pi - 4\delta'} + h^{-1}(s)\beta^2 c \le 1 - g\beta \le e^{-g\beta}. \qquad (8.8)$$

Filling in $\beta = s\sqrt{\delta}/c$ and $\delta = 1/(d_\delta c)$ and writing out the second inequality, this leads to the requirement that

$$\frac{2 - \frac{4}{d_\delta}}{\pi} - \frac{h^{-1}(s)s}{\sqrt{d_\delta}c} \ge g.$$

This is exactly Requirement (R3), which is assumed to hold. So applying the result from Equation (8.8) to Equations (8.4), (8.5) and (8.7) gives us that

$$\mathbb{P}[S < cZ] \le e^{\beta c Z} \mathbb{E}_{\vec{y}, X, \vec{p}} \left[ e^{-\beta S} \right] \le e^{\beta c Z} \left( \sum_{x=0}^{c} \binom{c}{x} M_x \right)^{\ell} \le e^{\beta c Z - g\beta\ell}.$$

Since we want that $\mathbb{P}[S < cZ] \le e^{-\eta k} \le (\epsilon_1/n)^\eta = \epsilon_2,$ we need that

$$\beta c Z - g\beta\ell \le -\eta k.$$

Filling in $\beta = s\sqrt{\delta}/c, \ell = d_\ell c^2 k, Z = d_z ck, \delta = 1/(d_\delta c)$ and writing out both sides, we get

$$g d_\ell - d_z \ge \eta \sqrt{\frac{d_\delta}{s^2 c}}.$$

This is exactly Requirement (R4), which was assumed to hold. This completes the proof. □

Compared to [BT08], we see that the third assumption has changed. We see that a 1 has changed to a 2, and a 2 has changed to a 4. The most important change is the 1 changing to a 2, since the term $\frac{1}{\pi}$ $\left(\text{now } \frac{2}{\pi}\right)$ is the most dominant factor (and the only positive term) on the left hand side. By increasing this by a factor 2, we get that $g \leq \frac{2}{\pi}$ instead of $g \leq \frac{1}{\pi}$. Especially for large c, this will play an important role and this will basically be the reason why the required codelength then decreased by a factor 4, compared to Blayer and Tassa's scheme.

While the other change (the $\frac{2}{d_\delta \pi}$ changing to $\frac{4}{d_\delta \pi}$) does not make a big impact on the optimal choice of parameters for large c, this change does influence the required codelength for smaller *c*. Because of this change, we now subtract more from the left hand side, so that the value of *g* is bounded sharper from above and cannot simply be taken twice as high.

Finally, after using the third assumption in the proof above, the analysis remained the same as in [BT08]. So the fourth assumption is also exactly the same as in [BT08].

**8.5 Asymptotics**

We now look at the asymptotic behaviour of the scheme as *c* goes to infinity. When *c* goes to infinity, the distributions of the scores of both guilty and innocent users converge to the Normal distribution with certain parameters. In [SKC08, Section 6) Skoric et al. investigated this Gaussian approximation, and concluded that with Tardos' choice of $g_0, g_1$ and *F*, the required codelength is $\ell \approx \frac{\pi^2}{2} c^2 \ln(n/\epsilon_1)$. This means that for sufficiently large *c* we will certainly need that $d_\ell \geq \frac{\pi^2}{2}$.

In Tardos' original paper, Tardos proved that $d_\ell = 100$ is sufficient for $c \geq 16$. This shows that either Tardos' choice of parameters was not optimal, or that the proof method is not tight.

In [SKC08] the symmetric accusations were introduced, showing that even $d_\ell > \pi^2$ is sufficient for proving soundness and completeness, for sufficiently large *c*. In [BT08] the analysis of the scheme, which was already tightened in [SKC08], was further tightened, but no symmetric accusations were used. Applying asymptotics to their scheme shows that using their analysis, $d_\ell > 2\pi^2$ is sufficient for proving security.

Here we will show that by combining the symmetric accusations from Skoric et al. with the tighter analysis from Blayer and Tassa, as we did above, we can prove security for $d_\ell > \frac{\pi^2}{2}$. This means that the gap of a factor 2 between provability and reality, as in [SKC08], has now been closed. This is also why we refer to our scheme as the optimal Tardos scheme, as for $c \to \infty$ our scheme achieves the theoretical optimal codelength.

**Theorem 8.3.** *For c >> 1 the above construction gives an $\varepsilon_1$-sound and $\varepsilon_2$-complete scheme with parameters*

$$\ell \approx \frac{\pi^2}{2} c^2 \lceil \ln(n/\epsilon_1) \rceil \qquad Z \approx \pi c \lceil \ln(n/\epsilon_1) \rceil \qquad (8.9)$$

*Proof.* In our scheme we will take optimal values of $d_\ell, d_x, d_\delta, d_\alpha, r, s, g$ such that all requirements are met and $d_\ell$ is minimized. Hence showing that *some* parameters $d_\ell, d_x, d_\delta, d_\alpha, r, s, g$ exist, which meet all requirements and have $d_\ell \downarrow \frac{\pi^2}{2}$ as $c \to \infty$ is sufficient for proving the Theorem. For the second requirement, note that we can write it as a quadratic inequality in $d_\alpha$, as

$$d_\alpha^2 + (-d_z)d_\alpha + rd_\ell \leq 0 \qquad (8.10)$$

The constant in front of $d_\alpha$ is positive, while the function has to be negative. So this requirement is met if and only if $d_\alpha$ lies between its two roots, which therefore must exist.

$$d_\alpha \in [d_{\alpha,-}, d_{\alpha,+}] = \left[\frac{d_z}{2} - \frac{1}{2}\sqrt{d_z^2 - 4rd_\ell}, \frac{d_z}{2} + \frac{1}{2}\sqrt{d_z^2 - 4rd_\ell}\right] \qquad (8.11)$$

Hence taking $d_\alpha = \frac{d_z}{2}$ always satisfies this equation. The only remaining requirement is then that the quadratic equation in $d_\alpha$ in fact has a real-valued solution. So we need that the term inside the square root is non-negative, i.e.

$$d_z^2 \geq 4rd_\ell \qquad (8.12)$$

For the first requirement we then see that with $d_\delta = O(\ln(c))$ and

$$r = \frac{1}{2} + \mathcal{O}(1/\ln(c)),$$

the right hand side converges to 0 as $c \to \infty$. Since the left hand side, $d_\alpha = \frac{d_z}{2}$, is positive (our $d_x$ will converge to $\pi > 0$), this requirement will certainly be satisfied for sufficiently large $c$.

For the third requirement, note that the terms $\frac{4}{d_\delta\pi}$ and $\frac{h^{-1}(s)s}{\sqrt{d_\delta c}}$ both converge to 0 as $c$ goes to infinity. This means that for sufficiently large $c$, the inequality will converge to

$$\frac{2}{\pi} \geq g \qquad (8.13)$$

For the fourth requirement, again note that the term on the right hand side disappears as c goes to infinity. So this inequality converges to

$$gd_\ell - d_z \geq 0 \qquad (8.14)$$

Taking $g \approx 2/\pi$ and solving these equations gives us

$$d_z \geq 2r\pi \qquad (8.15)$$

$$d_\ell \geq r\pi^2 \qquad (8.16)$$

With

$$r = \frac{1}{2} + \mathcal{O}(1/\ln(c)) \to \frac{1}{2} \text{ as } c \to \infty,$$

we thus get

$$d_z > \pi \qquad (8.17)$$

$$d_\ell > \frac{\pi^2}{2} \qquad (8.18)$$

By taking *c* sufficiently large, one can thus get $d_\ell$ arbitrarily close to $\frac{\pi^2}{2}$, as was to be shown. $\square$

Note that near the end of the above proof, we had the two equations

$$d_z \geq 2r\pi \qquad (8.19)$$

$$d_\ell \geq r\pi^2 \qquad (8.20)$$

Here we used that *r* can be taken in the neighborhood of $\frac{1}{2}$ to get the final result, $d_\ell > \frac{\pi^2}{2}$. In [SKC08] however, no such variable r was used, as it was simply fixed at 1. Taking r = 1 in these equations indeed gives

$$d_z \geq 2\pi \qquad (8.21)$$

$$d_\ell \geq \pi^2 \qquad (8.22)$$

as was the result in [SKC08, Section 5.2]. This thus shows where the proof by Skoric et al. lost the factor 2 in the asymptotic case; if they had taken *r* as a parameter in their analysis, they would have gotten the same asymptotic results as we did above.

Furthermore note that to make some terms in the third inequality disappear, we needed that $d_\delta \to \infty$ as $c \to \infty$. This means that in fact the offsets $\delta$ and 1 - $\delta$ converge to 0 and 1 faster than

$$\mathcal{O}(1/c).$$

This raises the question whether the parametrization $\delta = 1/(d_\delta c)$ is appropriate; perhaps $\delta = 1/(d_\delta \ln(c))$ or $\delta = 1/(d_\delta c^{1+\mu})$ would make more sense, as then $d_\delta$ may converge to a constant instead. Numerical searches for the optimal choice of parameters for $c \to \infty$ show that $d_\delta$ roughly grows as

$$\mathcal{O}(\sqrt[3]{c}),$$

which suggests one should take $\delta = 1/(d_\delta c^{4/3})$ for some constant $d_\delta$. Note that with

$$d_\delta = \mathcal{O}(\sqrt[3]{c}),$$

the terms $\sqrt{d_\delta}/(h(r)\sqrt{c})$ and $\frac{4}{d_\delta \pi}$ are both of order

$$\mathcal{O}(c^{-1/3}),$$

and both terms therefore converge to 0 at roughly the same speed. This possibly explains why

**8.6 Optimization**

Similar to the analysis done in the paper by Blayer and Tassa, we can also investigate the optimal choice of parameters such that all requirements are satisfied, and $d_\ell$ is minimized. As the requirements only changed on two positions, the formulas for the optimal values of $d_\delta, d_\alpha, d_z, d_\ell$ as given in [BT08, Section 2.4.5] also only changed slightly. By changing these two numbers in their formulas, we get the following optimal choice for our parameters, for given *g, r, s*:

$$\hat{d}_\delta = \left(\frac{1}{\frac{4}{\pi}-2g}\left(\sqrt{\frac{(h^{-1}(s)s)^2}{c}+\frac{16}{\pi}\left(\frac{2}{\pi}-g\right)}+\frac{h^{-1}(s)s}{\sqrt{c}}\right)\right)^2 \qquad (8.23)$$

$$\hat{d}_\alpha = \max\left(\frac{\sqrt{\hat{d}_\delta}}{h(r)\sqrt{c}},\frac{r}{g}+\sqrt{\left(\frac{r}{g}\right)^2+\frac{r}{g}\eta\sqrt{\frac{\hat{d}_\delta}{s^2c}}}\right) \qquad (8.24)$$

$$\hat{d}_z = \frac{g\hat{d}_\alpha^2+r\eta\sqrt{\frac{\hat{d}_\delta}{s^2c}}}{g\hat{d}_\alpha-r} \qquad (8.25)$$

$$\hat{d}_\ell = \frac{\eta\sqrt{\frac{\hat{d}_\delta}{s^2c}}+\hat{d}_z}{g} \qquad (8.26)$$

One can then numerically find the optimal choice of $r>\frac{1}{2}, s>0$ and $0<g<\frac{2}{\pi}$ such that $d_\ell$ is minimized.

**8.7 Results**

An optimal solution to the equations for $c \geq 2$ and $\eta = 1$ can be found numerically as follows:

$$d_\ell = 23.79, \quad d_z = 8.06, \quad d_\delta = 28.31, \quad d_\alpha = 4.58, \quad g = 0.49, \quad r = 0.67, \quad s = 1.07 \qquad (8.27)$$

This means that taking the constants as above, a codelength of $\ell < 24c^2\ln(n/\varepsilon_1)$ is sufficient to prove soundness and completeness for all $c \geq 2$ and $\varepsilon_2 \geq \varepsilon_1/n$. Compared to the original Tardos scheme, which had a codelength of $\ell = 100c^2\ln(n/\varepsilon_1)$, this gives an improvement of a factor more than 4. Furthermore we can prove that this scheme is $\varepsilon_1$-sound and $\varepsilon_2$-complete for *any* value of $c \geq 2$, while Tardos' original proof only works for $c \geq 16$.

Similarly, we can consider a more practical scenario where $\varepsilon_2 >> \varepsilon_1/n$ and numerically find optimal values. If $\varepsilon_2 = 1/2$ is sufficient and $\varepsilon_1 = 10^{-3}$ and $n = 10^6$, then $\eta \approx 0.033$, and the optimizations give us $d_\ell \approx 10.89$ and $d_z \approx 5.76$. So with this larger value of $\varepsilon_2$, a codelength of $\ell < 11c^2\ln(n/\varepsilon_1)$ is sufficient to prove the soundness and completeness properties for any $c \geq 2$. Also, if we let $c$ increase in the four requirements (i.e. if we only want provability for $c \geq c_0$ for some $c_0 > 2$), then the requirements become weaker and an even shorter codelength can be achieved. The following two tables show the optimal values of $d_\ell$ for several values of $c$ and $\eta$, for both the original Blayer-Tassa scheme and our optimal symmetric Blayer-Tassa-Tardos scheme.

$d_\ell$ in the Blayer-Tassa scheme.

| $c\backslash\eta$ | 1 | 0.5 | 0.2 | 0.1 | 0.05 | 0.02 | 0.01 |
|---|---|---|---|---|---|---|---|
| 2 | 81 | 62 | 48 | 42 | 38 | 35 | 34 |
| 3 | 69 | 54 | 43 | 38 | 35 | 33 | 32 |
| 4 | 62 | 49 | 40 | 36 | 34 | 31 | 30 |
| 5 | 57 | 46 | 38 | 35 | 32 | 30 | 30 |
| 6 | 54 | 44 | 37 | 34 | 31 | 30 | 29 |
| 7 | 51 | 42 | 36 | 33 | 31 | 29 | 28 |
| 8 | 49 | 41 | 35 | 32 | 30 | 29 | 28 |
| 9 | 47 | 40 | 34 | 31 | 30 | 28 | 28 |
| 10 | 46 | 39 | 33 | 31 | 29 | 28 | 27 |
| 20 | 38 | 33 | 30 | 28 | 27 | 26 | 26 |

(continued)

| $c\backslash\eta$ | 1 | 0.5 | 0.2 | 0.1 | 0.05 | 0.02 | 0.01 |
|---|---|---|---|---|---|---|---|
| 30 | 35 | 31 | 28 | 27 | 26 | 25 | 25 |
| 40 | 33 | 30 | 27 | 26 | 25 | 25 | 24 |
| 50 | 32 | 29 | 27 | 25 | 25 | 24 | 24 |
| $\infty$ | 20 | 20 | 20 | 20 | 20 | 20 | 20 |

$d_\ell$ in the optimal Tardos scheme.

| $c\backslash\eta$ | 1 | 0.5 | 0.2 | 0.1 | 0.05 | 0.02 | 0.01 |
|---|---|---|---|---|---|---|---|
| 2 | 24 | 18 | 14 | 12 | 11 | 10 | 10 |
| 3 | 20 | 16 | 13 | 11 | 10 | 10 | 9 |
| 4 | 18 | 14 | 12 | 10 | 10 | 9 | 9 |
| 5 | 17 | 13 | 11 | 10 | 9 | 9 | 9 |
| 6 | 15 | 13 | 11 | 10 | 9 | 9 | 8 |
| 7 | 15 | 12 | 10 | 9 | 9 | 8 | 8 |
| 8 | 14 | 12 | 10 | 9 | 9 | 8 | 8 |
| 9 | 14 | 11 | 10 | 9 | 8 | 8 | 8 |
| 10 | 13 | 11 | 9 | 9 | 8 | 8 | 8 |
| 20 | 11 | 9 | 8 | 8 | 7 | 7 | 7 |
| 30 | 10 | 9 | 8 | 7 | 7 | 7 | 7 |
| 40 | 9 | 8 | 7 | 7 | 7 | 7 | 7 |
| 50 | 9 | 8 | 7 | 7 | 7 | 7 | 7 |
| $\infty$ | 5 | 5 | 5 | 5 | 5 | 5 | 5 |

Note that the original Tardos scheme used $\ell = 100c^2k$ for all $c$ and $\eta$, which translates to always using $d_\ell = 100$. One can see in the table for the optimal Tardos scheme that in many cases, even for reasonably small $c$ and large $\eta$, this gives an improvement of a factor 10 or more compared to this original scheme. Compared to the Blayer-Tassa scheme, our optimal scheme gives an improvement of a factor slightly less than 4 in all cases.

Chapter 9

The dynamic Tardos scheme

9.1 Introduction

In this Chapter we will discuss a dynamic version of the Tardos scheme. Whereas the normal Tardos scheme discussed earlier belongs in the category of probabilistic static schemes, we will show how to construct a probabilistic dynamic scheme based on the Tardos scheme, and why it has advantages over the original Tardos scheme.

Since our dynamic Tardos scheme makes use of analysis from the static Tardos scheme, we will make use of the improved Tardos scheme from Chapter 8 as a building block. Not only does it achieve low provably secure codelengths, but also does the proof of completeness there make use of a variable

$$\beta = \mathcal{O}(\sqrt{\delta}/c)$$

instead of

$$\beta = \mathcal{O}(1/c),$$

as was done in Tardos' extended article to prove completeness for $c \leq 15$. The reason why this is useful will appear later.

**9.2 Construction**

Let us start with the construction, which can be summarized in a few lines. Instead of distributing all symbols of the codewords simultaneously, we give users one symbol at a time. And instead of looking at scores at time $\ell$, we now calculate scores $S_j(t) = \sum_{i=1}^{t} S_{ji}$ $S_{ji}$ at every time step. But most importantly: at any time $t$, we throw out all users with scores $S_j(t) > Z$.

Below is the construction, which now consists of two phases, as the codeword generation and accusation phases are mixed. In this scheme, we take $k = \lceil \log(2n/\varepsilon_1) \rceil$, which is different from our earlier choice $k = \lceil \log(n/\varepsilon_1) \rceil$. The factor 2 is put in the logarithm to compensate for the extra factor 2 we get when proving the soundness property. Note that $\lceil \log(2n/\varepsilon_1) \rceil - \lceil \log(n/\varepsilon_1) \rceil \approx \log(2) < 1$, so especially for big values of $n$ and $\varepsilon_1$ we will hardly notice the difference between the two definitions of $k$.

**1. Initialization**

(a) Take $\ell = d_\ell c^2 k$ as the code length, and take the parameters $\delta$ and $Z$ as $\delta = 1/(d_\delta c)$ and $Z = d_z ck$. Compute $\delta' = \arcsin(\sqrt{\delta})$ such that $0 < \delta' < \pi/4$.

(b) For each fingerprint position $1 \leq i \leq \ell$, choose $p_i$ independently from the distribution defined by the following cumulative distribution function F:

$$F(p) = \frac{2\arcsin(\sqrt{p}) - 2\delta'}{\pi - 4\delta'}$$

Its accosiated probability density function $f(p)$ is biased towards $\delta$ and $1 - \delta$ and symmetric around 1/2.

(c) Set every user's accumulated score $S_j(t)$ at 0.

**2. Codeword generation, accusation**

(a) For each position $1 \leq i \leq \ell$, do the following.

   i. For each active user $j$, select the $i$th entry of the codeword of user $j$ according to $(\vec{x}_j)_i \sim \text{Ber}(p_i)$, and distribute the symbols.

   ii. After receiving $y_i$, for each active user $j$ calculate the score $S_{ji}$ according to:

$$S_{ji} = \begin{cases} +\sqrt{(1-p_i)/p_i} & \text{if } (\vec{x}_j)_i = 1, y_i = 1 \\ -\sqrt{p_i/(1-p_i)} & \text{if } (\vec{x}_j)_i = 0, y_i = 1 \\ -\sqrt{(1-p_i)/p_i} & \text{if } (\vec{x}_j)_i = 1, y_i = 0 \\ +\sqrt{p_i/(1-p_i)} & \text{if } (\vec{x}_j)_i = 0, y_i = 0 \end{cases}$$

   iii. For each active user $j$, calculate the updated accusation sum as $S_j(i) = S_j(i-1) + S_{ji}$. If $S_j(i) > Z$, disconnect user $j$ immediately.

Ok, so how does this scheme work, and why does it help that we disconnect users inbetween? Well, for innocent users we expect that things do not change a lot, compared to the static Tardos scheme. The probability of accidentally throwing out an innocent user increases compared to the static scheme, since an innocent user could have had $S_j(t) > Z$ and $S_j(\ell) < Z$ for some $0 < t < \ell$. But we will show that, compared to the static Tardos scheme, the false positive probability increases by at most a factor 2.

For guilty users however, we get an important advantage, based on the proof construction from the original Tardos scheme. There, to prove that at least one guilty user gets accused, we proved that $S < cZ$ occurs only with low probability. In all other cases, by the pigeonhole principle, at least one of the scores will be above $Z$, hence at least one pirate is caught. But now, since we throw out users as soon as their scores exceed $Z$, we know that pirates will actually never get a score higher than $Z' = Z + \max_p S_{ji}(p)$, which is relatively close to $Z$. So the probability of catching *all colluders* is in fact related to $\mathbb{P}[S < cZ']$: if not all pirates are caught, then it follows that $S < cZ'$. And since $\mathbb{P}[S < cZ'] \approx \mathbb{P}[S < cZ]$ for $Z' \approx Z$, we see that the probability of *not catching all colluders* can now be bounded from above by roughly the same $\varepsilon_2$ as the one bounding the probability of *not catching any colluders* in the static scheme. So by following the Tardos analysis, we can show that the dynamic Tardos scheme will catch *all colluders* with high probability, and will catch no innocent users with high probability.

For the construction, we again used auxiliary variables $d_\ell$, $d_z$ and $d_\delta$ as we did in Chapter 8. We will follow the same proof methods from the static case to prove our results, again based on several assumptions. As it turns out, the following assumptions are sufficient.

Let $d_\alpha$, $r$, $s$, $g$ be positive constants with $r > \frac{1}{2}$ and let $d_\ell$, $d_z$, $d_\delta$, $d_\alpha$, $r$, $s$, $g$, $\eta$, $k$ satisfy the following four requirements.

$$d_\alpha \geq \frac{\sqrt{d_\delta}}{h(r)\sqrt{c}} \tag{R1}$$

$$\frac{d_z}{d_\alpha} - \frac{r d_\ell}{d_\alpha^2} \geq 1 \tag{R2}$$

$$\frac{2 - \frac{4}{d_\delta}}{\pi} - \frac{h^{-1}(s)s}{\sqrt{d_\delta c}} \geq g \tag{R3}$$

$$g d_\ell - d_z \geq \left(\eta + \frac{s}{k}\right)\sqrt{\frac{d_\delta}{s^2 c}} \tag{R4}$$

Let the dynamic Tardos scheme be constructed as above. Then the following properties hold. **Theorem 9.1** (Soundness). *Let $j \in U$ be an arbitrary user, and let $C \subseteq U\backslash\{j\}$ be a coalition of any size not containing j. Let p be some pirate strategy employed by this coalition. Then*

$$\mathbb{P}[j \in \sigma(\rho(X))] < \epsilon_1/n.$$

*Therefore the probability of accusing at least one innocent user is at most $\varepsilon_1$.*

**Theorem 9.2** (Special completeness). *Let $C \subseteq U$ be a coalition of size at most c, and let $\rho$ be any pirate strategy employed by this coalition. Then*

$$\mathbb{P}[C \not\subseteq \sigma(\rho(X))] < \epsilon_2$$

*Therefore the probability of not accusing all guilty users is at most $\varepsilon_2$.*

The completeness-property stated above is different from the completeness-property in the static setting. Here we require that *all* pirates are caught, instead of at least one.

### 9.3 Soundness

First we prove an upper bound on the probability that an innocent user accidentally gets accused. This bound relates the false positive probability in the dynamic Tardos scheme to the false positive probability in the static Tardos scheme. One can then use the proof of the static Tardos scheme to get an absolute upper bound on the false positive error probability.

**Lemma 9.3.** *Let $j \in U$ be an arbitrary user, and let $C \subseteq U\backslash\{j\}$ be a coalition of any size not containing $j$. Let $\rho$ be some pirate strategy employed by this coalition. Then*

$$\mathbb{P}[j \in \sigma(\rho(X))] \leq 2 \cdot \mathbb{P}[S_j(\ell) > Z] \qquad\qquad (9.1)$$

*In other words, the probability of disconnecting an innocent user $j$ in the dynamic scheme is at most a factor 2 bigger than the probability of disconnecting an innocent user $j$ in the static Tardos scheme.*

*Proof.* Let $j$ be some innocent user, and let its score at time $t$ be denoted by $S_j(t)$. Let A be the event that an innocent user $j$ gets accused in our dynamic Tardos scheme. In other words, A is the event that $S_j(t_0) \geq Z$ for some $t_0 \in \{0,\dots,\ell\}$. Finally let $B$ be the event that user $j$ gets accused in the static Tardos scheme with the same parameters, i.e. the event that $S_j(\ell) \geq Z$ if we were to use the same fingerprinting code in the dynamic case as in the static case.

Now $\mathbb{P}[A|B] = 1$, as an accusation in the static scheme automatically implies an accusation in the dynamic scheme. For $\mathbb{P}[B|A]$, the conditional gives us that there exists some time $t_0$ such that $S_j(t_0) = Z + \alpha_0$ for some $\alpha_0 \in [0, \sqrt{1/\delta}]$. Since

$$\mathbb{E}[S_j(t+1) - S_j(t)] = 0$$

and $|S_j(t+1) - S_j(t)| \leq \sqrt{1/\delta}$ with probability 1 for any time t, the process $\{S_j(t)\}_{t=0}^{\infty}$ describes a random walk with zero drift. In fact, the process $\{S_j(t)\}_{t=t_0}^{\infty}$ starting at time $t_0$ is also a random walk with zero drift. Therefore we have $\mathbb{P}[S_j(\ell) \geq S_j(t_0)] = 1/2$ and thus $\mathbb{P}[S_j(\ell) \geq Z | S_j(t_0) \geq Z] \geq 1/2.^{[1]}$ So $\mathbb{P}[B|A] \geq 1/2$.

Finally we use Bayes' Theorem, which says that for any two events $A$ and $B$, $\mathbb{P}[A]\mathbb{P}[B|A] = \mathbb{P}[B]\mathbb{P}[A|B]$. Applying this to our $A$ and $B$ gives us $\mathbb{P}[A] \leq 2 \cdot \mathbb{P}[B]$, hence $\mathbb{P}[j \in \sigma(\rho(X))] \leq 2 \cdot \mathbb{P}[S_j(\ell) > Z]$. $\square$

*Proof of Theorem 9.1.* We follow the analysis from Section 8.3, using Requirement (R1), to get

$$\mathbb{P}[S_j(\ell) > Z] \leq e^{-\alpha Z} \left( \prod_{i=1}^{\ell} e^{r\alpha^2} \right) = e^{-\alpha Z + r\alpha^2 \ell}. \qquad\qquad (9.2)$$

Using the Result from Lemma 9.3 we get

$$\mathbb{P}[j \in \sigma(\rho(X))] \leq 2 \cdot \mathbb{P}[S_j(\ell) > Z] \leq 2e^{-\alpha Z + r\alpha^2 \ell} \qquad\qquad (9.3)$$

We want to get that

$$\mathbb{P}[j \in \sigma(\rho(X))] \leq 2e^{-k} \leq \epsilon_1/n \qquad\qquad (9.4)$$

So the proof would be complete if

$$-\alpha Z + r\alpha^2 \ell \leq -k \qquad\qquad (9.5)$$

Rewriting this inequality gives exactly Requirement (R2), which was assumed to hold. This completes the proof. $\square$

### 9.4 Special completeness

**Lemma 9.4.** *Consider the following modification of the static Tardos fingerprinting game. First users are assigned codewords according to the static Tardos scheme. Then, instead of being forced to output the complete forgery $\vec{y}$, colluders are allowed to choose any position i and send to the distributor a symbol $y_i$, satisfying the marking assumption. Then the distributor sends to all users the value of $p_i$, and symbol $y_i$ can no longer be changed. This is repeated until all $\ell$ positions are filled out by the coalition.*

*In this scenario, we have:*

$$\mathbb{P}_{static}[S \leq cZ'] \leq \epsilon_2/2 \qquad (9.6)$$

*Proof.* The proof of completeness from Section 8.4 does not use the fact that colluders do not know $p_i$ when choosing $y_{i'}$, for $i \neq i'$. So we will simply follow the proof and replace the occurrences of $Z$ by $Z'$.

From the analysis of Section 8.4 and Requirement (R3) it follows that

$$\mathbb{E}_{\vec{y}, X, \vec{p}}\left[e^{-\beta S}\right] \leq e^{-g\beta\ell}. \qquad (9.7)$$

[1]If $[S_j(t_0) > S_j(\ell) > Z]$, then the event $\{S_j(\ell) \geq Z | S_j(t_0) \geq Z\}$ does take place but $\{S_j(\ell) \geq S_j(t_0)\}$ does not hold. This explains the use of a greater-equal sign instead of an equality sign.

Combining this with the Markov inequality as before, we get

$$\mathbb{P}[S < cZ'] \leq e^{\beta cZ'}\mathbb{E}_{\vec{y}, X, \vec{p}}\left[e^{-\beta S}\right] \leq e^{\beta cZ' - g\beta\ell}. \qquad (9.8)$$

Since we want that $\mathbb{P}[S < cZ'] \leq e^{-\eta k} \leq (\epsilon_1/2n)^\eta = \epsilon_2/2,$ we need that

$$\beta cZ' - g\beta\ell \leq -\eta k.$$

Filling in $\beta = s\sqrt{\delta}/c, \ell = d_\ell c^2 k, Z' = d_z ck + 1/\sqrt{\delta}, \delta = 1/(d_\delta c)$ and writing out both sides, we get

$$gd_\ell - d_z \geq \left(\eta + \frac{s}{k}\right)\sqrt{\frac{d_\delta}{s^2 c}}.$$

This is exactly requirement 4, which completes the proof. □

*Proof of Theorem 9.2.* Assume there exists some pirate strategy $\rho_d$ in the dynamic game such that with probability $p > \varepsilon_2$ at least one pirate survives up to time $\ell$. In these cases we have that the total sum of the pirates' scores at time $\ell$ is below $cZ'$, i.e. $S(\ell) < cZ'$. We now choose the following strategy $\rho_s$ for the modified static model, so that the score in the static model in these cases is also below $cZ'$ with probability more than 1/2. This means that with this strategy for the modified static model, with probability $p/2 > \varepsilon_2/2$, the total score will be below $cZ'$. From Lemma 9-4 we then get a contradiction, which means that our assumption was wrong; there are no strategies $\rho_d$ in the dynamic Tardos scheme such that with probability more than $\varepsilon_2$ not all colluders are accused. This then completes the proof.

After receiving all codewords in the static game, we first choose position 1 of strategy $\rho_s$. We make use of an oracle $\mathcal{O}$, which will play the dynamic Tardos game with anyone, using the good strategy $\rho_d$. We tell the oracle that no one is disconnected, and we send the oracle the first positions of our code. Then $\mathcal{O}$ returns a value $y_i$, and we forward it to the distributor. He sends us the value $p_1$, and we calculate scores $S_j(1)$ for each user. We now send $\mathcal{O}$ the second positions of our code, but only those for which $S_j(t)$ has not yet exceeded $Z$ in the past. Once a users score exceeds $Z$ at some time $t_0$, we set $S_j(t) = S_j(t_0)$ for all $t_0 \leq t \leq \ell$, and we add the scores $S_{ji}, j > t_0$ to some other score function $U_j(t)$.

After this, the oracle then sends us $y_2$, and we forward it to the distributor. He sends us $p_2$, we calculate the scores $S_j(2)$ and we again send the subset of the seen symbols to $\mathcal{O}$. We repeat this procedure, until all positions have been sent to the distributor.

Using this strategy, we have played a dynamic game with $\mathcal{O}$, acting as a distributor, with the same matrix $X$ that was used for the static game we played with the real distributor, acting as a coalition. If $X$ belongs to one of the cases for which $\rho_d$ lets at least one pirate survive, then $\sum S_j(\ell) < cZ'$. However, in the static game, the scores for each user are given by $S_j = S_j(\ell) + U_j(\ell)$, and the total coalition score is given by $S = S(\ell) + U(\ell)$.

If a user $j$ is disconnected at time $t_0$, then he no longer participates in the coalition. This means that for $i > t_0$, the output $y_i$ and the symbol $X_{ji}$ are independent. Hence the score $S_{ji}$ is then a random variable, which is bigger/smaller than 0 with probability 1/2. Since the score $U(\ell)$ is based on those symbols that were not taken into account for outputting $y_i$, the score $U(\ell)$ *is* also bigger/smaller than 0 with probability 1/2.

So concluding, we get that using the oracle $\mathcal{O}$, we can construct a strategy for the static game such that with probability at least $p/2 > \varepsilon_2/2$ not all users are caught. This completes the proof.  □

Some advantages of our construction are as follows.
1. With this scheme, we have certainty about catching *all* pirates, rather than *at least one* pirate.
2. The scheme uses a binary alphabet, which is the smallest possible alphabet.
3. The codelength needed (the time needed) is relatively short. It is at most

$$\mathcal{O}(c^2 \ln(n/\epsilon_1))$$

but depending on whether all pirates are caught earlier we may terminate sooner.
4. Codewords of users are independent, so it is impossible to frame a specific user.
5. Codeword positions are independent of earlier positions, so for generation of the codewords we do not need the feedback from the pirates. In other words, at each time one can

**Table 9.1:** *Optimal values of $d_\ell$, rounded to the nearest integer, for several values of c and $\eta = \ln(\varepsilon_2)/\ln(\varepsilon_1/n)$, and for $k = \ln(10^9)$.*

| $c\backslash\eta$ | 1 | 0.5 | 0.2 | 0.1 | 0.05 | 0.02 | 0.01 | 0 |
|---|---|---|---|---|---|---|---|---|
| 2 | 25 | 19 | 15 | 13 | 12 | 11 | 11 | 10 |
| 3 | 20 | 16 | 13 | 12 | 11 | 10 | 10 | 9 |
| 4 | 18 | 15 | 12 | 11 | 10 | 9 | 9 | 8 |
| 5 | 17 | 14 | 11 | 10 | 10 | 9 | 9 | 8 |
| 6 | 16 | 13 | 11 | 10 | 9 | 9 | 9 | 8 |
| 7 | 15 | 12 | 10 | 9 | 9 | 9 | 8 | 8 |
| 8 | 14 | 12 | 10 | 9 | 9 | 8 | 8 | 8 |
| 9 | 14 | 11 | 10 | 9 | 9 | 8 | 8 | 8 |
| 10 | 13 | 11 | 10 | 9 | 8 | 8 | 8 | 7 |
| 20 | 11 | 9 | 8 | 8 | 8 | 7 | 7 | 7 |
| 30 | 10 | 9 | 8 | 7 | 7 | 7 | | 7 |
| 40 | 9 | 8 | 8 | 7 | 7 | 7 | 7 | 7 |
| 50 | 9 | 8 | 7 | 7 | 7 | 7 | 7 | 6 |
| ∞ | 5 | 5 | 5 | 5 | 5 | 5 | 5 | 5 |

**Table 9.2:** *Optimal values of $d_\ell$, rounded to the nearest integer, for several values of c and $\eta = \ln(\varepsilon_2)/\ln(\varepsilon_1/n)$, and for $k = \ln(10^6)$.*

| $c\backslash\eta$ | 1 | 0.5 | 0.2 | 0.1 | 0.05 | 0.02 | 0.01 | 0 |
|---|---|---|---|---|---|---|---|---|
| 2 | 25 | 19 | 15 | 14 | 12 | 11 | 11 | 10 |
| 3 | 21 | 16 | 13 | 12 | 11 | 10 | 10 | 9 |
| 4 | 18 | 15 | 12 | 11 | 10 | 10 | 9 | 8 |

(continued)

| $c \backslash \eta$ | 1 | 0.5 | 0.2 | 0.1 | 0.05 | 0.02 | 0.01 | 0 |
|---|---|---|---|---|---|---|---|---|
| 5 | 17 | 14 | 11 | 10 | 10 | 9 | 9 | 8 |
| 6 | 16 | 13 | 11 | 10 | 9 | 9 | 9 | 8 |
| 7 | 15 | 12 | 10 | 10 | 9 | 9 | 8 | 8 |
| 8 | 14 | 12 | 10 | 9 | 9 | 8 | 8 | 8 |
| 9 | 14 | 12 | 10 | 9 | 9 | 8 | 8 | 8 |
| 10 | 13 | 11 | 10 | 9 | 8 | 8 | 8 | 7 |
| 20 | 11 | 9 | 8 | 8 | 8 | 7 | 7 | 7 |
| 30 | 10 | 9 | 8 | 7 | 7 | 7 | 7 | 7 |
| 40 | 9 | 8 | 8 | 7 | 7 | 7 | 7 | 7 |
| 50 | 9 | 8 | 7 | 7 | 7 | 7 | 7 | 6 |
| $\infty$ | 5 | 5 | 5 | 5 | 5 | 5 | 5 | 5 |

calculate the next value of $p_i$ and the symbols $(\vec{x_j})_i$ for each user, without having to wait for the output $\vec{y}_{i-1}$.

6. It is also possible to generate the whole code and the codewords in advance, and store these codewords at the clientside. The scheme only needs to be able to disconnect a user from the system during the process. This is also the only reason why this scheme does not work in a static environment; then the pirates could sacrifice one user for all positions, while here after some steps you want to disconnect that user and force the others to contribute. So the fact that this scheme is in a sense only *semi-dynamic* could give practical advantages over a full dynamic scheme.

7. One does not need to store the codewords or the values of $p_i$, but only the current accusation scores for each user in this scheme. So the total storage theoretically required for this scheme is constant for each user.

8. Suppose in a static scheme you need a codelength of $\ell = 10000$ to catch at least one pirate with $\varepsilon_2 = 1/100$ error, while with the same parameters and $\ell = 1000$ the error probability $\varepsilon_2$ is bounded by 1/2. Then in the static scheme you always need length 10000, while in the dynamic scheme at least half of the runs will take at most 1000 runs until all pirates are disconnected. In the other half of the cases the time needed is still at most 10000, and the overall error probability of not catching all colluders is still the same. So not only do we catch all pirates, but on average the time needed may also be reduced drastically.

**Chapter 10**

**The universal Tardos scheme**

**10.1 Introduction**

We discussed probabilistic static schemes, where we were given values of $n$, $c$, $\varepsilon_1$, $\varepsilon_2$, and where we were looking for schemes which are collusion-resistant against $c$ colluders with $n$ users in total and maximum error rate of $\varepsilon_1$ and $\varepsilon_2$ respectively. The most important thing to notice here is that $c$ is given in advance; the maximum collusion size is given, and we construct a code specifically for a coalition of this size.

Deterministic dynamic schemes are schemes that catch any coalition of any size c in polynomial time in $c$. One advantage of these schemes is thus that $c$ does not need to be known in advance; during the process we can figure out what $c$ is, and by just adjusting the alphabet size and the time (length) we are able to catch any coalition. This also makes more sense in practice; pirates do not announce their collusion size, so $c$ is usually unknown.

So one natural question one could ask is: Can we construct a static scheme that works even when $c$ is unknown? For deterministic static schemes the answer is simply no. Any scheme that is resistant against c colluders has at least codelength $\Omega(c^2)$, hence for $c \to \infty$ the codelength has to go to infinity to always be sure to catch a guilty user. However, for probabilistic static schemes, the answer is not simply no. One could try to construct a universal code that does not depend on $c$, and see if we can say something about the error probability of our scheme for given $\ell$ and some unknown $c$. Of course as $\ell$ is fixed and $c$ goes to infinity, the error probability goes to 1, but with $\ell$ sufficiently large compared to $c$ one might still be able to bound the error probability for any $c$.

Note that this is really something non-trivial. One might argue that, say, the Tardos scheme that is resistant against 50 colluders is actually resistant against any collusion of size *at most* 20, so that we can catch smaller coalitions with that scheme as well. However, the proof then only works for the codelength $\ell$ that belongs to the value of $c = 20$. In other words, we cannot use the Tardos code with $\ell = 100 \cdot 20^2 \cdot \ln(n/\varepsilon_1)$ for 20 colluders, and take only $100 \cdot 3^2 \cdot$

ln($n/\varepsilon_1$) of these symbols to catch a coalition of size 3. Then we also need all $100 \cdot 20^2 \cdot$ ln($n/\varepsilon_1$) symbols to make the proof work.

As it turns out, we can indeed construct such a universal code based on the Tardos code, by moving the dependence on c from the code to the score function. In that way, we can always use the same code regardless of *c*, and catch a coalition of any size with this code as long as the codelength is long enough.

## 10.2 Construction

Let us briefly go back to the original Tardos code. Looking closely, we see that there is a chain of dependencies which make the code dependent on c: We take $X_{ji} \sim \mathrm{Ber}(p_i)$, we take $p_i \sim F = F_\delta$ and we take $\delta = 1/(300c)$. So the values of $X_{ji}$ (indirectly) depend on the value of *c*. Can't we simply take $\delta$ as some number that does not depend on c? Well, for the proof of soundness we use that $\alpha S_{ji} \leq \alpha\sqrt{(1-\delta)/\delta} \leq \alpha\sqrt{1/\delta} \leq \sqrt{3} < 1.74.$ In other words, the score

functions $g_0(p) = -\sqrt{p/(1-p)}$ and $g_1(p) = +\sqrt{(1-p)/p}$ need to be bounded from above by some value (depending on *c*) for the proof to work. This implies that $\delta$ has to be sufficiently large; if it were smaller, then the values of *p* could be too close to 0 and the score functions would go to $\pm\infty$.

On the other hand, we also need that $\delta$ is sufficiently small. In the proof of completeness we introduce integrals at some point to calculate an expected value, and because of the bounds $\delta$ and 1 - $\delta$ a function rolls out that depends on $\delta$. Later on we show that this term is sufficiently small, by using that $\delta$ is as small as 1/(300$c$).

So getting rid of the code-dependence on *c* is not that simple. The code indirectly depends on $\delta$, and this $\delta$ has to be sufficiently small but also sufficiently large for the proof to work. So let us again look at the probability density function we need for a specific value of *c*.

$$f_c(p) = \frac{1}{(\pi - 4\delta'_c)\sqrt{p(1-p)}}$$

The important observation now is that this function $f_c(p)$ is actually almost the same for different values of *c*; for different *c* we merely use a different scaling of this function to make sure the integral sums up to 1. We can find a simple relation between $f_c(p)$ and $f_{\hat{c}}(p)$ as below.

$$f_c(p) = \frac{\pi - 4\delta'_{\hat{c}}}{\pi - 4\delta'_c} f_{\hat{c}}(p)$$

In particular, writing $f(p) = \lim_{c\to\infty} f_c(p) = \frac{1}{\pi\sqrt{p(1-p)}},$ which is a function that does not depend on *c*, we get the relation:

$$f_c(p) = \frac{\pi}{\pi - 4\delta'_c} f(p)$$

The function $f_c(p)$ and the term $\pi - 4\delta'_c$ are chosen such that integrating $f_c$ from $\delta_c$ to 1 - $\delta_c$ gives exactly 1, i.e. this is a probability density function. Using the above relation, this means that integrating *f* from $\delta_c$ to 1 - $\delta_c$ gives only

$$\int_{\delta_c}^{1-\delta_c} f(p) = \frac{\pi - 4\delta'_c}{\pi} = 1 - \frac{4\delta'_c}{\pi}$$

Since $\delta'_c = \arcsin(\sqrt{\delta_c}) = \arcsin(\sqrt{1/(300c)})$ is very small, integrating $f(p)$ from $\delta_c$ to 1 - $\delta_c$ gives roughly 1. So the area below the curve between the offsets $\delta_c$ and 1 - $\delta_c$ is roughly one. So what we could do, is simply use the function *f* for our codeword generation, regardless of *c*. Then, during the accusation phase, we first pick a *c* for which we want to calculate scores. For this $c$, we then need that the values of $p_i$ were taken according to $f_c$. Therefore for this value of $c$ we simply disregard all fingerprint positions for which $p_i$ was not in the range $[\delta_c, 1 - \delta_c]$. We just calculated the losses here, and saw that we are actually throwing away only a small percentage of the data. Then for the remaining positions, the values of $p_i$ are actually according to the distribution $f_c$, since $f_c$ is just a rescaled version of $f$ between the offsets $\delta_c$ and $1 - \delta_c$. The mechanics for the Tardos scheme thus remain the same, and the proofs go analogously.

A detail we now want to check exactly is how much we are really throwing away for each $c$, for our accusation functions. For this we give a plot of the values of $1 - \frac{4\delta_c'}{\pi}$ for different values of $c$. Multiplying these values by 100 gives the percentage of the fingerprint positions that are used for this c. With $c \to \infty$ this rate goes to 1 as then all fingerprint positions can be used, while the minimum is at $c = 2$ when only 94.8% of the data can be used and 5.2% has to be thrown away. For $c \geq 3$ the loss is less than 5 percent; for $c \geq 4$ the loss is less than 4 percent; for $c \geq 7$ the loss is less than 3 percent; for $c \geq 14$ the loss is less than 2 percent; and for $c \geq 55$ the loss is less than 1 percent.

Similarly, one could check for given $\ell$ how large $\ell'$ has to be such that after removing the data outside the boundaries we still have $\ell$ positions left. For $c \geq 3$ we need at most 5 percent more data; for $c \geq 4$ we need at most 4 percent more; for $c \geq 7$ we need at most 3 percent more; for $c \geq 15$ we need at most 2 percent more; and for $c \geq 56$ we need at most 1 percent more fingerprinting positions.

One way to implement the above into a scheme is the following. We keep counters $\ell_2, ..., \ell_c, ...$ for all values of $c$, counting how many values of $p_i$ ($1 \leq i \leq t$) are between $\delta_c$ and $1 - \delta_c$, i.e. how many of the fingerprinting positions so far are useful for a specific value of $c$. This basically means that $\ell_c$ is the effective codelength of the code so far for catching $c$ colluders. As we saw above, $\ell_c$ is slightly smaller than the real codelength $\ell$ up to this point, and $\ell_i \leq \ell_j$ for $i < j$.

Then, once $\ell_2$ is sufficiently large, e.g. $\ell_2 = 100 \cdot 2^2 \cdot \ln(n/\varepsilon_1)$, we calculate the scores for each user for these useful values of $p_i$. If we catch the colluders we are done, and else we continue. We do the same for $c = 3$, ... until we find the collusion. This way we will catch any collusion of size at most $c$ in at most $Ac^2\ln(n/\varepsilon_1)(1 + r)$ time, with error probability at most $\varepsilon_2$. The probability of accusing no innocent users is then at least $(1 - \varepsilon_1)^c \approx 1 - c\varepsilon_1$, i.e. the false positive rate increases by a factor $c$. However, the codelength barely increases compared to the case for known c, especially when c is large.

Another way to implement the scheme is using the above outline, but by using $\varepsilon_1/i^2$ as the allowed false positive error probability for any guess $i$ for the number of colluders. Then most of the asymptotics remain the same, but the probability of not accusing any innocent users is then at least

$$\prod_{i=2}^{c}(1 - \epsilon_1/i^2) \approx 1 - (1 + 1/4 + 1/9 + \ldots + 1/c^2)\epsilon_1 \geq 1 - (\pi^2/6)\epsilon_1.$$

## 10.3 Construction

Let us now give the construction in full, with a full explanation of what is going on afterwards. Let $n \geq 2$ be a positive integer, and let $\varepsilon_1, \varepsilon_2 \in (0,1)$ be the desired upper bounds for the soundness and completeness error probabilities respectively. Let $\vec{v}(i)$ be the characteristic vector such that $v_c = 1$ if $p_i \in [\delta_c, 1 - \delta_c]$ and $v_c = 0$ otherwise. Then the universal Tardos traitor tracing scheme works as follows.

### 1. Initialization

(a) Take some vector $\vec{\kappa}$ such that $\sum_{c=1}^{\infty} \kappa_c \leq 1$.

(b) Take the vector $\vec{\kappa}$ according to $k_c = \ln(n/\kappa_c \varepsilon_1)$.

(c) Take parameters $\overrightarrow{\lambda, \zeta, d}$ such that for some parameters $\overrightarrow{\alpha, \rho, \gamma, \sigma}$, for each $c$ the following requirements are satisfied:

$$\alpha_c \geq \frac{\sqrt{d_c}}{h(\rho_c)\sqrt{c}}, \qquad (\text{US1})$$

$$\frac{\zeta_c}{\alpha_c} - \frac{\rho_c \lambda_c}{\alpha_c^2} \geq 1 + \frac{\ln(2)}{k_c}, \qquad (\text{US2})$$

$$\frac{2-\frac{4}{d_c}}{\pi}-\frac{h^{-1}(\sigma_c)\sigma_c}{\sqrt{d_c c}}\geq\gamma_c, \qquad\qquad (UC1)$$

$$\gamma_c\lambda_c-\zeta_c\geq\left(\eta+\frac{\sigma_c+\ln(2)}{k_c}\right)\sqrt{\frac{d_c}{\sigma_c^2 c}}. \qquad\qquad (UC2)$$

(d) Take the codelength vector $\vec{\ell}$ according to $\ell_c = \lambda_c c^2 k_c$.

(e) Take the accusation offset vector $\vec{Z}$ according to $Z_c = \zeta_c c k_c$.

(f) Take the cutoff vector $\vec{\delta}$ according to $\delta_c = 1/(d_c c)$.

(g) Set the initial score vector $\vec{S}_j$ for each user $j$ according to $(S_j)_c = 0$ for all $c$.

(h) Set the initial time vector $\vec{t}$ according to $t_c = 0$.

## 2. Generation/Distribution/Accusation

For each time $i \geq 1$ do the following.

(a) Select $p_i \in [0, 1]$ from the distribution defined by the functions $F_\infty(p)$ and $f_\infty(p)$:

$$F_\infty(p) = \frac{2\arcsin(\sqrt{\widetilde{p}})}{\pi}, \quad f_\infty(p) = \frac{1}{\pi\sqrt{p(1-p)}}. \qquad\qquad (10.4)$$

(b) For each user $j$, select $X_{ji}$ according to $\mathbb{P}[X_{ji}=1] = 1 - \mathbb{P}[X_{ji}=0] = p_i$.

(c) Send to each connected user $j$ the $i$th symbol $X_{ji}$.

(d) Intercept the pirate output $y_i$, or terminate if there is none.

(e) Calculate the scores for position $i$, according to:

$$S_{ji} = \begin{cases} +\sqrt{(1-p_i)/p_i} & \text{if } X_{ji}=1, y_i=1, \\ -\sqrt{p_i/(1-p_i)} & \text{if } X_{ji}=0, y_i=1, \\ -\sqrt{(1-p_i)/p_i} & \text{if } X_{ji}=1, y_i=0, \\ +\sqrt{p_i/(1-p_i)} & \text{if } X_{ji}=0, y_i=0. \end{cases} \qquad\qquad (10.5)$$

(f) Update the scores of each user according to $\vec{S}_j := \vec{S}_j + S_{ji}\vec{v}_i$.

(g) Update the times according to $\vec{t} := \vec{t} + \vec{v}_i$.

(h) If $(S_j)_c > Z_c$ and $t_c \leq \ell_c$ for some index $c$, then disconnect user $j$.

Let us explain a bit more what we are actually doing here. First, we take some vector $\vec{\kappa}$ which must sum to at most one. The purpose of these constants is the following. For each $c$, we will bound the false positive probability by what is inside the logarithm of $k_c$, i.e. $\kappa_c \cdot \varepsilon_1/n$. However, since we run all these schemes simultaneously, the total false positive probability for a single user is bounded from above by summing over all false positive probabilities for each c. So the probability that an innocent user is ever accused is bounded by $\sum_{c=1}^\infty \kappa_c \varepsilon_1/n = \varepsilon_1/n \sum_{c=1}^\infty \kappa_c$. Since we want this to be bounded from above by $\varepsilon_1/n$, we get the requirement that $\sum_{c=1}^\infty \kappa_c \leq 1$. One way to realize this is to take e.g. $\kappa_c = (1/2)^c$, so that $\kappa_c$ decreases exponentially in $c$. However, then we get

$$k_c = \ln(n/\kappa_c \epsilon_1) = \ln(2^c n/\epsilon_1) = \mathcal{O}(c \ln(n/\epsilon_1)),$$

so that

$$\ell_c = \mathcal{O}(c^3 \ln(n/\epsilon_1))$$

which is not what we want. Fortunately we can also take e.g. $\kappa_c = 6/\pi^2 c^2$ (using that $\sum_{i=1}^{\infty} 1/c^2 = \pi^2/6$), so that

$$k_c = \mathcal{O}(\ln(n/\epsilon_1))$$

and

$$\ell_c = \mathcal{O}(c^2 \ln(n/\epsilon_1)).$$

If c is expected to be small, then to make $\ell_1$, $\ell_2$, $\ell_3$,... as small as possible, it is better to take

$$\kappa_c = \mathcal{O}(1/c^N)$$

for some large $N$, so that most of the weight is at the beginning. However, if $c$ may be large, then

$$\kappa_c = \mathcal{O}(1/c^{1+\epsilon})$$

may be a better choice, so that for large $c$, $\kappa_c$ is not that small. So there is an obvious tradeoff here, and the optimal solution depends on the scenario.

Now let us continue with the construction. The constants $k_c$ play the role of $k = \ln(n/\epsilon_1)$ in the previous chapters, except now there is this extra term inside the logarithm, making the values of $k$ different for each $c$. The parameters $\vec{\lambda}$, $\vec{\zeta}$, $\vec{d}$, $\vec{\alpha}$, $\rho$, $\gamma$, $\vec{\sigma}$ play the roles of $d_\ell$, $d_z$, $d_\delta$, $d_\alpha$, $r$, $g$, $s$ respectively, except that now these are also vectors. The renaming is done for convenience, to avoid double indices. Note that (US1), (US2), (UC1), (UC2) are the same as (S1), (S2*), (C1'), (C2*) from the previous chapter, only with variables renamed. Next we also take $\ell_c$, $Z_c$, $\delta_c$ for each $c$ differently, using these variables $\lambda_c$,..., $\sigma_c$. Finally we initialize all scores for all users at 0, and the counter of used positions for each $c$ is set at 0. These counters $t_c$ will count how many of the $p_i$s up to now were between $\delta_c$ and $1 - \delta_c$, i.e. how many positions were not discarded for this value of $c$.

Then comes the actual distribution/accusation phase. For each time, we first generate a value $p_i$ according to $F_\infty$ (which does not depend on $c$). This $p_i$ is then used to generate symbols $X_{ji}$, as is usual in the Tardos scheme. The symbols are distributed, and if a pirate transmitter is still active, we assume we will intercept some pirate output $y_i$[1]. Then, for each user $j$ we calculate the value $S_{ji}$ (which in fact also does not depend on $c$), but for updating the scores we now only increase those scores $(S_j)_c$ for which $p_i \in [\delta_c, 1 - \delta_c]$. This is done simply by adding $S_{ji} \cdot \vec{v_i}$, since $\vec{v_i}$ has the nice property of indicating for which values of c the scores should be updated. Similarly, the counters are updated simply by adding $\vec{v_i}$ to $\vec{t}$ (adding 1 only for those c for which these symbols were used), and for each user $j$ and coalition size c we check whether the cth score of user $j$ exceeded the cth threshold $Z_c$. Note that in most cases, $(S_j)_c \approx (S_j)_{c+1}$ while $Z_c$ and $Z_{c+1}$ may be quite far apart.

[1]If no output is received, then we are happy. Either we can wait and repeat the same symbols until output is received (which only means the pirates have lost part of the content for their distribution), or we can at some point terminate, concluding that we must have caught all pirates. Of course this also depends on the scenario, e.g. if before the pirate output stopped no user was disconnected, then a pirate is still active and one may want to continue to wait.

After this, the process repeats for the next value of $i$, generating new symbols, distributing them, updating scores and disconnecting users. The process terminates if, as mentioned above, no pirate output is received anymore, but again, depending on the application, one may want to have different rules for termination (e.g. after a fixed number of positions the process simply has to stop).

**10.4 Results**

Let us now formally prove results above this scheme. Using the above construction, we get the following results, which can be easily proved using results from previous chapters.

**Theorem 10.1.** *Let the universal Tardos scheme be constructed as above. Then the probability of ever accusing an innocent user is at most $\varepsilon_1/n$, hence the probability of never disconnecting any innocent users is at least* $1 - \varepsilon_1$.

*Proof.* We chose the parameters $\lambda_c, \ldots, \sigma_c$ such that they satisfy the requirements from the dynamic Tardos scheme with parameter c and error probability $\varepsilon_{1,c} = \kappa_c \varepsilon_1$. Hence for each c we know that the probability of having $(S_j)_c > Z_c$ before the time $i$ when $t_c = \ell_c$ is at most $\kappa_c \varepsilon_1/n$. So the probability that the user is ever accused is bounded from above by:

$$\mathbb{P}[j \in \sigma] \leq \sum_{c=1}^{\infty} \kappa_c \frac{\epsilon_1}{n} \leq \frac{\epsilon_1}{n}. \tag{10.6}$$

The proof can again be completed by noting that $(1 - \varepsilon_1/n)^n \geq 1 - \varepsilon_1$. □

**Theorem 10.2.** *Let the universal Tardos scheme be constructed as above. Let C be a coalition of some a priori unknown size c. Then the probability that by the time $i$ when $t_c = \ell_c$ some members of the coalition are still active is bounded from above by $\varepsilon_2$.*

*Proof.* We chose the parameters $\lambda_c, \ldots, \sigma_c$ such that they satisfy the requirements from the dynamic Tardos scheme with parameter c, so the result follows from the proofs given in the previous Chapter. □

**Theorem 10.3.** *Let the universal Tardos scheme be constructed as above. Let $T_c$ be the time at which we see the $\ell_c$th value of $p_i$ between $[\delta_c, 1 - \delta_c]$. Then $T_c - \ell_c$ is distributed according to a negative binomial distribution, with parameters $r = \ell_c$ and $p = \frac{4}{\pi}\delta'_c$. Hence $T_c$ has mean $\mu = \ell_c/(1-p)$ and variance $\sigma^2 = \ell_c p/(1-p)^2$, and $\mathbb{P}[T_c \geq \mu + a]$ for $a > 0$ decreases exponentially in a.*

*Proof.* The fact that $T_c - \ell_c$ follows a negative binomial distribution can be easily verified by checking the definition of the negative binomial distribution, while we are waiting for $r = \ell_c$ successes, with each success happening with probability $p = 1 - \mathbb{P}(p_i \in [\delta_c, 1 - \delta_c]) = \frac{4}{\pi}\delta'_c$. Finally the mean and variance of the negative binomial, as well as the size of the tails, are well known. □

To summarize the results, we see that the number of symbols $T_c$ needed to reach $\ell_c$ useful symbols is a random variable with mean $\ell_c/(1 - \frac{4}{\pi}\delta'_c)$ and exponentially small tails, and one we reach this time $T_c$, we know that with probability $1 - \varepsilon_2$ we will have caught all guilty users of the coalition, if the coalition had size at most $c$. Furthermore the probability of ever disconnecting an innocent user is at most $\varepsilon_1$.

**Example** Let us use the sequence $\kappa_c = 6/(\pi^2 c^2)$, such that $\sum_{c=1}^{\infty} \kappa_c = 1$. Then for fixed c we get $\ell_c = \lambda_c c^2 \ln(nc^2\pi^2/6\varepsilon_1)$, so for constant $\lambda_c$ we get

$$\ell_c = \mathcal{O}(c^2 \ln(n/\epsilon_1)).$$

Let $n = 1000$ and $\varepsilon_1 = \varepsilon_2 = 0.01$. Then we can take the parameters as in Tables 10.1 and 10.2, giving codelengths

$$\ell_c = \mathcal{O}(c^2 \ln(n/\epsilon_1)).$$

**Example** Again let us use the sequence $\kappa_c = 6/(\pi^2 c^2)$. Let $n = 100$ and $c = 3$, and let $\varepsilon_1 = 0.01$ and $\varepsilon_2 = 0.5$. Figures 10.2, 10.3, 10.4, 10.5 graphically show a simulation of this situation, where the pirates used a pirate-symmetric strategy. The graphs show the scores of users set against the time, with different lines corresponding to different users. However, since we have to keep multiple scores for each user, every user now also has multiple lines. But in most cases these lines overlap, while Figure 10.2 shows one of the rare exceptions where the different scores for each user are actually different.

| c | $k_c$ | $\ell_c$ | $Z_c$ | $\delta_c$ |
|---|---|---|---|---|
| 2 | 13.3969 | 1385 | 229.433 | 0.0187624 |
| 3 | 14.2079 | 2772 | 329.503 | 0.0122054 |
| 4 | 14.7832 | 4567 | 427.245 | 0.0089459 |
| 5 | 15.2295 | 6753 | 523.522 | 0.0070081 |
| 6 | 15.5941 | 9319 | 618.780 | 0.0057293 |
| 7 | 15.9024 | 12258 | 713.285 | 0.0048252 |
| 8 | 16.1695 | 15562 | 807.211 | 0.0041540 |
| 9 | 16.4051 | 19227 | 900.678 | 0.0036371 |
| 10 | 16.6158 | 23249 | 993.774 | 0.0032275 |
| 15 | 17.4267 | 48610 | 1455.52 | 0.0020273 |
| 20 | 18.0021 | 82535 | 1913.66 | 0.0014505 |
| 25 | 18.4484 | 124860 | 2369.97 | 0.0011159 |
| 30 | 18.8130 | 175479 | 2825.32 | 0.0008991 |
| 35 | 19.1213 | 234317 | 3280.18 | 0.0007482 |
| 40 | 19.3884 | 301320 | 3734.83 | 0.0006376 |
| 45 | 19.6240 | 376445 | 4189.45 | 0.0005534 |
| 50 | 19.8347 | 459660 | 4644.17 | 0.0004873 |

**Table 10.1:** *The parameters for the universal Tardos scheme, for n = 1000 and $\varepsilon_1 = \varepsilon_2 = 0.01$, using the sequence $(\kappa_c) = (6/\pi^2 c^2)$. Since $k_c = \ln(n/\kappa_c \varepsilon_1)$ with $\kappa_c$ decreasing in c, $k_c$ is increasing in c. To catch a coalition of size 50, we roughly need at most 460000 usable symbols, which is less than 58 kB. Note thatit is also clear from the table that $Z_c$ grows linearly in c*

$$c \ (Z_c \asymp \mathcal{O}(ck_c)),$$

*while $\ell_c$ grows quadratically in c*

$$(\ell_c \asymp \mathcal{O}(c^2 k_c)).$$

**Table 10.2:** *The parameters $\vec{\lambda}...\vec{\sigma}$ for the universal Tardos scheme with n = 1000 and $\varepsilon_1 = \varepsilon_2 = 0.01$, satisfying the four conditions and minimizing $\lambda_c$ for every c. Note again that as in the previous chapter, $\lambda_c$ converges to $\pi^2/2 \approx 4.93$, $\zeta_c$ converges to $\pi \approx 3.14$, $\alpha_c$ converges to $\pi/2 \approx 1.57$, $\rho_c$ converges to 0.5 and $\gamma_c$ converges to $2/\pi \approx 0.64$, while $d_c$ and $\sigma_c$ will (slowly) diverge.*

| c | $\lambda_c$ | $\zeta_c$ | $d_c$ | $\alpha_c$ | $\rho_c$ | $\sigma_c$ | $\gamma_c$ |
|---|---|---|---|---|---|---|---|
| 2 | 25.8332 | 8.56291 | 26.6491 | 4.60329 | 0.663136 | 1.03032 | 0.486256 |
| 3 | 21.6741 | 7.73053 | 27.3104 | 4.13024 | 0.647677 | 1.10635 | 0.498434 |
| 4 | 19.3054 | 7.22518 | 27.9456 | 3.84325 | 0.637387 | 1.16136 | 0.506936 |
| 5 | 17.7352 | 6.87511 | 28.5383 | 3.64457 | 0.629786 | 1.20459 | 0.513419 |
| 6 | 16.5994 | 6.61338 | 29.0904 | 3.49612 | 0.623819 | 1.24024 | 0.518626 |
| 7 | 15.7300 | 6.40768 | 29.6066 | 3.37950 | 0.618941 | 1.27062 | 0.522958 |
| 8 | 15.0374 | 6.24022 | 30.0917 | 3.28459 | 0.614838 | 1.29708 | 0.526654 |
| 9 | 14.4691 | 6.10027 | 30.5498 | 3.20531 | 0.611313 | 1.32055 | 0.529868 |
| 10 | 13.9920 | 5.98090 | 30.9841 | 3.13770 | 0.608233 | 1.34162 | 0.532703 |
| 15 | 12.3972 | 5.56816 | 32.8850 | 2.90412 | 0.597011 | 1.42349 | 0.543242 |
| 20 | 11.4618 | 5.31510 | 34.4700 | 2.76105 | 0.589638 | 1.48224 | 0.550334 |
| 25 | 10.8289 | 5.13861 | 35.8468 | 2.66134 | 0.584245 | 1.52816 | 0.555600 |
| 30 | 10.3639 | 5.00597 | 37.0735 | 2.58644 | 0.580043 | 1.56590 | 0.559745 |

(continued)

| c | $\lambda_c$ | $\zeta_c$ | $d_c$ | $\alpha_c$ | $\rho_c$ | $\sigma_c$ | $\gamma_c$ |
|---|---|---|---|---|---|---|---|
| 35 | 10.0034 | 4.90131 | 38.1862 | 2.52736 | 0.576629 | 1.59796 | 0.563136 |
| 40 | 9.71326 | 4.81581 | 39.2086 | 2.47912 | 0.573773 | 1.62584 | 0.565989 |
| 45 | 9.47304 | 4.74415 | 40.1575 | 2.43870 | 0.571330 | 1.65050 | 0.568440 |
| 50 | 9.26981 | 4.68288 | 41.0450 | 2.40414 | 0.569204 | 1.67263 | 0.570580 |

**Figure 10.2:** *An example of the multiple scores for a single user. The dashed lines correspond to the times when $t_1 = \ell_1$, $t_2 = \ell_2$ and $t_3 = \ell_3$, while the thresholds $Z_1, Z_2, Z_3, Z_4$ are not in range and therefore are not shown here. In this case, around time $t \approx 185$, we had a rare event; the value $p_i$ was either in the interval $[\delta_4, \delta_3]$ or in the interval $[1 - \delta_3, 1 - \delta_4]$, and although an extreme percentage of users received the same symbol here, the user received the other, unlikely symbol. Since the pirates outputted the most common symbol, the score of the user dropped drastically for $c \geq 4$, while for $c = 2, 3$ this position was disregarded (due to the fact that $p_i \notin [\delta_3, 1 - \delta_3]$). Note that this is a very rare event; we had to run several simulations on a hundred users to get one of these rare events to occur. In most cases, the graphs for a fixed user, for different values of c, are almost indistinguishable, since on positions which are disregarded for some c, all users usually receive the same symbol.*

## 10.5 Discussion

So the scheme we saw above is able to catch coalitions of any a priori unknown size c in

$$\mathcal{O}\big(c^2 \ln(n/\epsilon_1)\big)$$

time, with arbitrary high probability. This is already a huge improvement over earlier results from Tassa [Tas05]. However, this is not all, as this scheme has many more advantages.

First of all, as we also saw with the dynamic Tardos scheme, the code is independent of the pirate output. The only thing we use the pirate output for is to disconnect users inbetween. This means that we could theoretically generate the whole vector $p_i$ and the whole code matrix $X$ in advance, instead of inbetween rounds. This means we will never have to worry about the time between receiving pirate output and sending new symbols, as this can be done instantly. Also, this means that one could try to somehow store the part of the matrix belonging to user $j$ (i.e. $\vec{x}_j$) at the client side of user $j$, instead of distributing symbols one at a time. If this can somehow be made secure, so that users cannot tamper with their codewords, then this would save the distributor of having to send symbols to each user over and over. Instead, he could then send the whole codeword at the start, and then start the process of distributing content and disconnecting users. This could be a real advantage of this scheme, as private messages to each user are generally costly.

**Figure 10.3:** *The scores of a single pirate over time. The blue straight lines correspond to the thresholds $Z_c$, while the colored lines correspond to the scores for different values of $c$. The score for some $c = i$ only exists on the interval $[0, \ell_i)$, e.g. the green line for $c = 2$ starts at $t = 0$ (but overlaps with the blue line on the interval $[0, \ell_1)$) and stops at the second dashed line, around $t \approx 370$. At $t \approx 1160$ this pirate hits the ceiling and is disconnected from the system.*

48

**Figure 10.4:** *The scores of all three pirates in the system. Note that in this case, the scheme failed to find and disconnect all pirates before time $\ell_3$, as two pirates are still active then (although their scores are close to the threshold $Z_3$). This means that this simulation of the scheme falls in the $\epsilon_2$-tail of exceptions, as the probability of not catching all pirates by time $\ell_3$ is at most $\epsilon_2$ (in this case $\epsilon_2 \approx 1/2$). Also note that as the pirate that is caught first does not receive any symbols anymore, his score remains constant after that.*

**Figure 10.5:** *The average pirate score (i.e. $A(t) = \frac{1}{|C|}\sum_{j \in C} S_j(t)$) over time. Regardless of the strategy used, this line will be close to linear in $t$, which intuitively shows that the scheme will eventually catch all pirates, as the thresholds only grow as $\mathcal{O}(\sqrt{t})$. So even if the scheme fails to catch all $c$ pirates before time $\ell_c$, with even higher probability all $c$ pirates will be caught before time $\ell_{c+1}$.*

**Figure 10.6:** *All scores of all 100 users in the system. If you look very closely, you will see a bit of purple around (200, −40) and (700, −50), which corresponds to the one user whose different scores did not completely overlap (see Figure 10.3). Notice that innocent users' scores are quite far below the thresholds $Z_c$, and behave like simple one-dimensional random walks. The cloud of scores will get wider and wider over time (also with width roughly $\mathcal{O}(\sqrt{t})$), but $Z$ (as a function of c) is such that it grows fast enough over time to avoid ever hitting innocent users with high probability.*

Secondly, note that the whole construction is basically identical for every time $i$. The symbols are always generated using the same distribution function $f_\infty$, and the score function never changes either. So in fact, if e.g. at some time $i_0$ a second pirate broadcast is detected, one could start a second universal Tardos scheme, running simultaneously with the first one. Both traitor tracing algorithms could use the same symbols for their score functions, and both coalitions can be traced simultaneously. The probability that an innocent user is accused in one of the two schemes is then bounded by $2\varepsilon_1$ rather than $\varepsilon_1$, but this can be solved by simply taking $\epsilon'_1 = \epsilon_1/2$. One could start generalizing this, and make statements like any set of coalitions (with cardinality constant in $c$, $n$) of size at most c can be traced in

$$\mathcal{O}(c^2 \ln(n/\epsilon_1))$$

time, taking $\epsilon'_1$ as $\varepsilon_1$ divided by the cardinality of the set of coalitions. In any case, this shows that we can trace multiple coalitions simultaneously, even if the pirate broadcasts do not start at the same time.

Thirdly, note that for some fixed values of c and $\varepsilon_1$, we get some threshold value $Z_c$ and a length $\ell_c$ to use for this dynamic Tardos scheme. If however we used a different value $\epsilon'_1$, we would have had a different value of $Z_c$ and a different codelength $\ell_c$, but the process would be the same. This means that in our scheme, before time $\ell_c(\epsilon'_1)$ we could also check whether user scores exceed $Z_c(\epsilon'_1)$. In other words: besides running the dynamic Tardos scheme for each c, for some fixed $\varepsilon_1$, we could also simultaneously run the dynamic Tardos scheme for each c, for some other fixed $\epsilon'_1$. Here we do get in trouble when really running these schemes simultaneously (since you have to decide whether you disconnect a suspect or not), but one could use these other thresholds $Z_c(\epsilon'_1)$ to calculate some sort of probability that a user is guilty. First the pirate would cross a 90% barrier (i.e. the probability that innocent users cross this line is < 10%), then a 95% barrier, and when he crosses a 99% barrier he is disconnected. Then already before the user is disconnected, we can give a statistic to indicate the 'suspiciousness' of this user. If a user then does not cross the final barrier, one could still decide whether to disconnect him later.

Finally, another advantage of this scheme is another consequence of the fact that the scheme is identical for every $i$, namely that we can concatenate several instances of this process to form one larger process. For example, suppose one movie is broadcast, and during the tracing process for this movie no users or only few users are caught. Then the pirates remain active, and when another movie is broadcast (possibly soon after, or only weeks after) they could start broadcasting again. By initializing the scores of users by the scores they had at the end of the first movie (and also loading the counters $t_c$), one could start the tracing process with the pirates probably already having a pretty high score. So then the pirates will sooner hit the roof and be disconnected, than if we had to start over with scores 0 for everyone.

**Claims**

1.  A fingerprinting method **characterised by** comprising, for each round in a series of rounds:

    providing to each receiver (104) in a set of receivers a respective version (110) of a source item of content (102), the source item of content corresponding to the round, wherein for the round there is a corresponding part of a respective fingerprint-code for the receiver, the part comprising one or more symbols, wherein the version provided to the receiver represents those one or more symbols;
    obtaining, from a suspect item of content (114) one or more corresponding symbols as a corresponding part of a suspect-code;
    for each receiver in the set of receivers, updating a corresponding score that indicates a likelihood that the receiver is a colluding-receiver, wherein a colluding-receiver is a receiver that has been provided with a version of a source item of content that has been used to generate a suspect item of content, wherein said updating is based on the fingerprint-code for the receiver and the suspect-code;
    for each receiver in the set of receivers, if the score for the receiver exceeds a threshold, updating the set of receivers by removing the receiver from the set of receivers so that the receiver is not provided with a further version of a source item of content, wherein the threshold is set such that the probability that a receiver that is not a colluding-receiver has a score exceeding the threshold is at most a predetermined probability.

2.  The method of claim 1, wherein each symbol assumes a symbol value from a predetermined set of symbol values; and wherein the i-th symbol of the fingerprint-code for a receiver is generated as an independent random variable such that, for each symbol value in the predetermined set of symbol values, the probability that the i-th symbol of the fingerprint-code for a receiver assumes that symbol value is a corresponding probability value set for the i-th symbol position of the fingerprint-codes for the receivers.

3.  The method of claim 1 or 2, wherein if an obtained symbol corresponds to the i-th symbol position in the fingerprint-codes then updating the score for a receiver comprises incrementing the score if that obtained symbol matches the i-th symbol in the fingerprint-code for that receiver and decrementing the score if that obtained symbol does not match the i-th symbol in the fingerprint-code for that receiver.

4.  The method of any one of claims 1 to 3, wherein each symbol assumes a symbol value from a predetermined set of symbol values, the predetermined set comprising only two symbol values.

5.  The method of claim 2, wherein the probability that the i-th symbol of a fingerprint-code for a receiver assumes a first symbol value is $p_i$ and the probability that the i-th symbol of a fingerprint-code for a receiver assumes a second symbol value is $1-p_i$, wherein if an obtained symbol corresponds to the i-th symbol position in the fingerprint-codes then updating the score for a receiver comprises incrementing the score by $\sqrt{(1-p_i)/p_i}$ if that obtained symbol is the first symbol value and the i-th symbol in the fingerprint-code for that receiver is the first symbol value and decrementing the score by $\sqrt{p_i/(1-p_i)}$ if that obtained symbol is the first symbol value and the i-th symbol in the fingerprint-code for that receiver is the second symbol value.

6.  The method of claim 5, wherein if an obtained symbol corresponds to the i-th symbol position in the fingerprint-codes then updating the score for a receiver comprises incrementing the score by $\sqrt{p_i/(1-p_i)}$ if that obtained symbol is the second symbol value and the i-th symbol in the fingerprint-code for that receiver is the second symbol value and decrementing the score by $\sqrt{(1-p_i)/p_i}$ if that obtained symbol is the second symbol value and the i-th symbol in the fingerprint-code for that receiver is the first symbol value.

7. The method of claim 2, wherein the probability that the i-th symbol of a fingerprint-code for a receiver assumes a first symbol value is $p_i$ and the probability that the i-th symbol of a fingerprint-code for a receiver assumes a second symbol value is $1-p_i$, wherein the value $p_i$ is generated as an independent random variable having a probability density function of:

$$f(p) = \frac{1}{(\pi - 4\delta')\sqrt{p(1-p)}} \text{ for } \delta \le p \le (1-\delta)$$

wherein $\delta' = \arcsin\left(\sqrt{\delta}\right)$ such that $0 < \delta' < \pi/4$, $\delta = 1/(\delta_c c)$, c is an expected number of colluding-receivers, and $\delta_c$ is a predetermined constant.

8. The method of any one of claims 1 to 6, in which each symbol for each fingerprint-code is generated independent of an expected number of colluding-receivers.

9. The method of claim 8, when dependent on claim 2 wherein the probability that the i-th symbol of a fingerprint-code for a receiver assumes a first symbol value is $p_i$ and the probability that the i-th symbol of a fingerprint-code for a receiver assumes a second symbol value is $1-p_i$, wherein the value $p_i$ is generated as an independent random variable having a probability density function of:

$$f(p) = \frac{1}{\pi\sqrt{p(1-p)}} \text{ for } 0 < p < 1$$

10. The method of claim 8 or 9, wherein updating a score for a receiver comprises, for one or more collusion-sizes, updating a score for the receiver for that collusion-size that indicates a likelihood that the receiver is a colluding-receiver under the assumption that the number of colluding-receivers is that collusion-size;
wherein the method comprises, for each receiver in the set of receivers, if a corresponding score for that receiver exceeds a threshold corresponding to the collusion-size for that score, updating the set of receivers by removing that receiver from the set of receivers, wherein the thresholds are set such that the probability that a receiver that is not a colluding-receiver has a score exceeding the corresponding threshold is at most the predetermined probability.

11. The method of claim 10, wherein updating the score for a collusion-size comprises disregarding a symbol obtained for the i-th position of the suspect-code if symbols generated for the i-th position of the fingerprint-codes are invalid for that collusion-size.

12. The method of claim 11, in which symbols generated for the i-th position of the fingerprint-codes are invalid for a collusion-size c if the generation of symbols for the i-th position of the fingerprint-codes independent of an expected number of colluding-receivers used a parameter value that would be inapplicable when generating symbols for the i-th position of fingerprint-codes dependent on an expected collusion-size of c.

13. The method of claim 11 or 12, when dependent on claim 9, wherein symbols for the i-th position of the fingerprint-codes are invalid for a collusion-size of c if $p_i$ lies outside of the range $[\delta, 1-\delta]$, where $\delta = 1/(\delta_c c)$ and $\delta_c$ is a predetermined constant.

14. The method of any one of the preceding claims, in which either:

   (a) the method comprises generating a fingerprint-code for a receiver in advance of the series of rounds; or
   (b) said providing comprises generating the part of the fingerprint-code for the receiver.

15. The method of any one of the preceding claims, in which the version of the source item of content provided to a receiver is formed by watermarking a copy of the source item of content with the part of the fingerprint-code for the receiver.

16. An apparatus comprising a processor (408) arranged to carry out a fingerprinting method, **characterised in that** the method comprises, for each round in a series of rounds:

> providing to each receiver (104) in a set of receivers a respective version (110) of a source item of content (102), the source item of content corresponding to the round, wherein for the round there is a corresponding part of a respective fingerprint-code for the receiver, the part comprising one or more symbols, wherein the version provided to the receiver represents those one or more symbols;
> obtaining, from a suspect item of content (114) one or more corresponding symbols as a corresponding part of a suspect-code;
> for each receiver in the set of receivers, updating a corresponding score that indicates a likelihood that the receiver is a colluding-receiver, wherein a colluding-receiver is a receiver that has been provided with a version of a source item of content that has been used to generate a suspect item of content, wherein said updating is based on the fingerprint-code for the receiver and the suspect-code;
> for each receiver in the set of receivers, if the score for the receiver exceeds a threshold, updating the set of receivers by removing the receiver from the set of receivers so that the receiver is not provided with a further version of a source item of content, wherein the threshold is set such that the probability that a receiver that is not a colluding-receiver has a score exceeding the threshold is at most a predetermined probability.

17. A computer program **characterised in that**, when executed by a processor (408), the computer program causes the processor to carry out a fingerprinting method comprising, for each round in a series of rounds:

> providing to each receiver (104) in a set of receivers a respective version (110) of a source item of content (102), the source item of content corresponding to the round, wherein for the round there is a corresponding part of a respective fingerprint-code for the receiver, the part comprising one or more symbols, wherein the version provided to the receiver represents those one or more symbols;
> obtaining, from a suspect item of content (114) one or more corresponding symbols as a corresponding part of a suspect-code;
> for each receiver in the set of receivers, updating a corresponding score that indicates a likelihood that the receiver is a colluding-receiver, wherein a colluding-receiver is a receiver that has been provided with a version of a source item of content that has been used to generate a suspect item of content, wherein said updating is based on the fingerprint-code for the receiver and the suspect-code;
> for each receiver in the set of receivers, if the score for the receiver exceeds a threshold, updating the set of receivers by removing the receiver from the set of receivers so that the receiver is not provided with a further version of a source item of content, wherein the threshold is set such that the probability that a receiver that is not a colluding-receiver has a score exceeding the threshold is at most a predetermined probability.

18. A data carrying medium carrying a computer program according to claim 17.

**Patentansprüche**

1. Fingerabdruckverfahren, **dadurch gekennzeichnet, dass** es, für jede Runde in einer Serie von Runden, umfasst:

> Bereitstellen für jeden Empfänger (104) in einem Satz von Empfängern einer entsprechenden Version (110) eines Quellinhaltselements (102), wobei das Quellinhaltselement der Runde entspricht, wobei für die Runde ein entsprechender Teil eines entsprechenden Fingerabdruckcodes für den Empfänger vorhanden ist, wobei der Teil ein oder mehrere Symbole umfasst, wobei die dem Empfänger bereitgestellte Version dieses eine oder diese mehreren Symbole darstellt;
> Erhalten eines oder mehrerer entsprechender Symbole als entsprechender Teil eines Verdachtscodes;
> für jeden Empfänger in dem Satz von Empfängern, Aktualisieren einer entsprechenden Punktzahl, die eine Wahrscheinlichkeit angibt, dass der Empfänger ein kolludierender Empfänger ist, wobei ein kolludierender Empfänger ein Empfänger ist, der mit einer Version eines Quellinhaltselements bereitgestellt wurde, das verwendet wurde, um ein Verdachtsinhaltselement zu erzeugen, wobei die Aktualisierung auf dem Fingerabdruckcode für den Empfänger und dem Verdachtscode basiert;
> für jeden Empfänger in dem Satz von Empfängern, wenn die Punktzahl für den Empfänger einen Schwellenwert überschreitet, Aktualisieren des Satzes von Empfängern durch Entfernen des Empfängers aus dem Satz von Empfängern, so dass der Empfänger nicht mit einer weiteren Version eines Quellinhaltselements bereitgestellt ist, wobei der Schwellenwert so eingestellt ist, dass die Wahrscheinlichkeit, dass ein Empfänger, der kein kolludierender Empfänger ist, eine Punktzahl aufweist, die den Schwellenwert überschreitet, höchstens eine vorbestimmte Wahrscheinlichkeit ist.

2. Verfahren nach Anspruch 1, wobei jedes Symbol einen Symbolwert aus einem vorbestimmten Satz von Symbolwerten annimmt; und
wobei das i-te Symbol des Fingerabdruckcodes für einen Empfänger als unabhängige Zufallsvariable erzeugt wird, so dass für jeden Symbolwert in dem vorbestimmten Satz von Symbolwerten die Wahrscheinlichkeit, dass das i-te Symbol des Fingerabdruckcodes für einen Empfänger annimmt, dass der Symbolwert ein entsprechender Wahrscheinlichkeitswert für die i-te Symbolposition der Fingerabdruckcodes für die Empfänger ist.

3. Verfahren nach Anspruch 1 oder 2, wobei, wenn ein erhaltenes Symbol der i-ten Symbolposition in den Fingerabdruckcodes entspricht, das Aktualisieren des Ergebnisses für einen Empfänger das Inkrementieren des Ergebnisses, wenn das erhaltene Symbol mit dem i-ten Symbol in dem Fingerabdruckcode für diesen Empfänger übereinstimmt, und das Dekrementieren des Ergebnisses, wenn das erhaltene Symbol mit dem i-ten Symbol in dem Fingerabdruckcode für diesen Empfänger nicht übereinstimmt.

4. Verfahren nach einem der Ansprüche 1 bis 3, wobei jedes Symbol einen Symbolwert aus einem vorbestimmten Satz von Symbolwerten annimmt, wobei der vorbestimmte Satz nur zwei Symbolwerte umfasst.

5. Verfahren nach Anspruch 2, wobei die Wahrscheinlichkeit, dass das i-te Symbol eines Fingerabdruckcodes für einen Empfänger einen ersten Symbolwert annimmt, $p_i$ ist und die Wahrscheinlichkeit, dass das i-te Symbol eines Fingerabdruckcodes für einen Empfänger einen zweiten Symbolwert annimmt, $1-p_i$ ist, wobei, wenn ein erhaltenes Symbol der i-ten Symbolposition in den Fingerabdruckcodes entspricht, das Aktualisieren der Punktzahl für einen Empfänger das Inkrementieren der Punktzahl um $\sqrt{(1-p_i)/p_i}$ umfasst, wenn dieses erhaltene Symbol der erste Symbolwert ist und das i-te Symbol in dem Fingerabdruckcode für diesen Empfänger der erste Symbolwert ist, und das Dekrementieren der Punktzahl um $\sqrt{p_i/(1-p_i)}$, wenn das erhaltene Symbol der erste Symbolwert ist und das i-te Symbol in dem Fingerabdruckcode für diesen Empfänger der zweite Symbolwert ist.

6. Verfahren nach Anspruch 5, wobei, wenn ein erhaltenes Symbol der i-ten Symbolposition in den Fingerabdruckcodes entspricht, dann das Aktualisieren der Punktzahl für einen Empfänger das Inkrementieren der Punktzahl um $\sqrt{p_i/(1-p_i)}$ umfasst, wenn das erhaltene Symbol der zweite Symbolwert und das i-te Symbol in dem Fingerabdruckcode für diesen Empfänger der zweite Symbolwert ist, und das Dekrementieren der Punktzahl um $\sqrt{(1-p_i)/p_i}$, wenn dieses erhaltene Symbol der zweite Symbolwert ist und das i-te Symbol in dem Fingerabdruckcode für diesen Empfänger der erste Symbolwert ist.

7. Verfahren nach Anspruch 2, wobei die Wahrscheinlichkeit, dass das i-te Symbol eines Fingerabdruckcodes für einen Empfänger einen ersten Symbolwert annimmt, $p_i$ ist und die Wahrscheinlichkeit, dass das i-te Symbol eines Fingerabdruckcodes für einen Empfänger einen zweiten Symbolwert annimmt, $1-p_i$ ist, wobei der Wert $p_i$ als unabhängige Zufallsvariable mit einer Wahrscheinlichkeitsdichtefunktion von:

$$f(p) = \frac{1}{(\pi - 4\delta')\sqrt{p(1-p)}} \text{ für } \delta \leq p \leq (1-\delta)$$

erzeugt wird, wobei $\delta' = \arcsin(\sqrt{\delta})$, derart, dass $0 < \delta' < \pi/4$, $\delta = 1/(\delta_c c)$, c eine erwartete Anzahl von kolludierenden Empfängern ist und $\delta_c$ eine vorbestimmte Konstante ist.

8. Verfahren nach einem der Ansprüche 1 bis 6, bei dem jedes Symbol für jeden Fingerabdruckcode unabhängig von einer erwarteten Anzahl von kolludierenden Empfängern erzeugt wird.

9. Verfahren nach Anspruch 8, wenn von Anspruch 2 abhängig, wobei die Wahrscheinlichkeit, dass das i-te Symbol eines Fingerabdruckcodes für einen Empfänger einen ersten Symbolwert annimmt, $p_i$ ist und die Wahrscheinlichkeit, dass das i-te Symbol eines Fingerabdruckcodes für einen Empfänger einen zweiten Symbolwert annimmt, 1-$p_i$ ist, wobei der Wert $p_i$ als unabhängige Zufallsvariable mit einer Wahrscheinlichkeitsdichtefunktion von:

$$f(p) = \frac{1}{\pi\sqrt{p(1-p)}} \text{ für } 0 < p < 1$$

erzeugt wird.

10. Verfahren nach Anspruch 8 oder 9, wobei das Aktualisieren einer Punktzahl für einen Empfänger für eine oder mehrere Kollusionsgrößen das Aktualisieren einer Punktzahl für den Empfänger für diese Kollusionsgröße umfasst, die eine Wahrscheinlichkeit angibt, dass der Empfänger ein kolludierender Empfänger ist, unter der Annahme, dass die Anzahl der kolludierenden Empfänger diese Kollusionsgröße ist;
wobei das Verfahren, für jeden Empfänger in dem Satz von Empfängern, wenn ein entsprechender Wert für diesen Empfänger einen Schwellenwert überschreitet, der der Kollusionsgröße für diesen Wert entspricht, das Aktualisieren des Satzes von Empfängern durch Entfernen dieses Empfängers aus dem Satz von Empfängern umfasst, wobei die Schwellen so eingestellt sind, dass die Wahrscheinlichkeit, dass ein Empfänger, der kein kolludierender Empfänger ist, einen Wert aufweist, der den entsprechenden Schwellenwert überschreitet, höchstens die vorbestimmte Wahrscheinlichkeit ist.

11. Verfahren nach Anspruch 10, wobei das Aktualisieren der Punktzahl für eine Kollusionsgröße das Nichtbeachten eines Symbols umfasst, das für die i-te Position des Verdachtscodes erhalten wurde, wenn Symbole, die für die i-te Position der Fingerabdruckcodes erzeugt wurden, für diese Kollusionsgröße ungültig sind.

12. Verfahren nach Anspruch 11, bei dem Symbole, die für die i-te Position der Fingerabdruckcodes erzeugt werden, für eine Kollusionsgröße c ungültig sind, wenn die Erzeugung von Symbolen für die i-te Position der Fingerabdruckcodes unabhängig von einer erwarteten Anzahl von kolludierenden Empfängern einen Parameterwert verwendet, der bei der Erzeugung von Symbolen für die i-te Position der Fingerabdruckcodes abhängig von einer erwarteten Kollusionsgröße von c nicht anwendbar wäre.

13. Verfahren nach Anspruch 11 oder 12, wenn abhängig von Anspruch 9, wobei Symbole für die i-te Position der Fingerabdruckcodes für eine Kollusionsgröße von c ungültig sind, wenn $p_i$ außerhalb des Bereichs $[\delta, 1 - \delta]$ liegt, wobei $\delta = 1/(\delta_c c)$ und $\delta_c$ eine vorbestimmte Konstante ist.

14. Verfahren nach einem der vorangehenden Ansprüche, bei dem entweder:

(a) das Verfahren das Erzeugen eines Fingerabdruckcodes für einen Empfänger vor der Serie von Runden umfasst; oder
(b) wobei das Bereitstellen das Erzeugen des Teils des Fingerabdruckcodes für den Empfänger umfasst.

15. Verfahren nach einem der vorangehenden Ansprüche, bei dem die Version des einem Empfänger zur Verfügung gestellten Quellinhalts durch Wasserzeichenmarkieren einer Kopie des Quellinhaltselements mit dem Teil des Fingerabdruckcodes für den Empfänger gebildet wird.

16. Vorrichtung, umfassend einen Prozessor (408), der angeordnet ist, um ein Fingerabdruckverfahren auszuführen, **dadurch gekennzeichnet, dass** das Verfahren, für jede Runde in einer Serie von Runden, Folgendes umfasst:

Bereitstellen einer entsprechenden Version (110) eines Quellinhaltselements (102) für jeden Empfänger (104) in einem Satz von Empfängern, wobei das Quellinhaltselement der Runde entspricht, wobei für die Runde ein entsprechender Teil eines entsprechenden Fingerabdruckcodes für den Empfänger vorhanden ist, wobei der Teil ein oder mehrere Symbole umfasst, wobei die dem Empfänger bereitgestellte Version dieses eine oder mehrere Symbole darstellt;
Erhalten eines oder mehrerer entsprechender Symbole aus einem Verdachtsinhaltselement (114) als entsprechender Teil eines Verdachtscodes;

für jeden Empfänger in dem Satz von Empfängern, Aktualisieren einer entsprechenden Punktzahl, die eine Wahrscheinlichkeit angibt, dass der Empfänger ein kolludierender Empfänger ist, wobei ein kolludierender Empfänger ein Empfänger ist, der mit einer Version eines Quellinhaltselements bereitgestellt wurde, das zum Erzeugen eines Verdachtsinhaltselements verwendet wurde, wobei die Aktualisierung auf dem Fingerabdruckcode für den Empfänger und dem Verdachtscode basiert;

für jeden Empfänger in dem Satz von Empfängern, wenn die Punktzahl für den Empfänger einen Schwellenwert überschreitet, Aktualisieren des Satzes von Empfängern durch Entfernen des Empfängers aus dem Satz von Empfängern, so dass der Empfänger nicht mit einer weiteren Version eines Quellinhaltselements bereitgestellt ist, wobei der Schwellenwert so eingestellt ist, dass die Wahrscheinlichkeit, dass ein Empfänger, der kein kolludierender Empfänger ist, eine Punktzahl aufweist, die den Schwellenwert überschreitet, höchstens eine vorbestimmte Wahrscheinlichkeit ist.

**17.** Computerprogramm, **dadurch gekennzeichnet, dass** das Computerprogramm, wenn es von einem Prozessor (408) ausgeführt wird, bewirkt, dass der Prozessor ein Fingerabdruckverfahren durchführt, das für jede Runde in einer Serie von Runden umfasst:

Bereitstellen einer entsprechenden Version (110) eines Quellinhaltselements (102) für jeden Empfänger (104) in einem Satz von Empfängern, wobei das Quellinhaltselement der Runde entspricht, wobei für die Runde ein entsprechender Teil eines entsprechenden Fingerabdruckcodes für den Empfänger vorhanden ist, wobei der Teil ein oder mehrere Symbole umfasst, wobei die dem Empfänger bereitgestellte Version dieses eine oder mehrere Symbole darstellt;

Erhalten eines oder mehrerer entsprechender Symbole aus einem Verdachtsinhaltselement (114) als entsprechender Teil eines Verdächtigungscodes;

für jeden Empfänger in dem Satz von Empfängern, Aktualisieren einer entsprechenden Punktzahl, die eine Wahrscheinlichkeit angibt, dass der Empfänger ein kolludierender Empfänger ist, wobei ein kolludierender Empfänger ein Empfänger ist, der mit einer Version eines Quellinhaltselements bereitgestellt wurde, das verwendet wurde, um ein Verdachtsinhaltselement zu erzeugen, wobei die Aktualisierung auf dem Fingerabdruckcode für den Empfänger und dem Verdachtscode basiert;

für jeden Empfänger in dem Satz von Empfängern, wenn die Punktzahl für den Empfänger einen Schwellenwert überschreitet, Aktualisieren des Satzes von Empfängern durch Entfernen des Empfängers aus dem Satz von Empfängern, so dass der Empfänger nicht mit einer weiteren Version eines Quellinhaltselements bereitgestellt ist, wobei der Schwellenwert so eingestellt ist, dass die Wahrscheinlichkeit, dass ein Empfänger, der kein kolludierender Empfänger ist, eine Punktzahl aufweist, die den Schwellenwert überschreitet, höchstens eine vorbestimmte Wahrscheinlichkeit ist.

**18.** Datenträgermedium, das ein Computerprogramm nach Anspruch 17 trägt.

## Revendications

**1.** Procédé de prise d'empreintes numériques **caractérisé en ce qu'**il comprend, pour chaque cycle d'une série de cycles, les étapes ci-dessous consistant à :

fournir, à chaque destinataire (104) parmi un ensemble de destinataires, une version respective (110) d'un élément de contenu source (102), l'élément de contenu source correspondant au cycle, dans lequel, pour le cycle, il existe une partie correspondante d'un code d'empreinte numérique respectif pour le destinataire, la partie comprenant un ou plusieurs symboles, dans lequel la version fournie au destinataire représente ledit un ou lesdits plusieurs symboles ;

obtenir, à partir d'un élément de contenu suspect (114), un ou plusieurs symboles correspondants, sous la forme d'une partie correspondante d'un code suspect ;

pour chaque destinataire parmi l'ensemble de destinataires, mettre à jour un score correspondant qui indique une probabilité que le destinataire soit un destinataire complice, dans lequel un destinataire complice est un destinataire auquel a été fournie une version d'un élément de contenu source qui a été utilisé en vue de générer un élément de contenu suspect, dans lequel ladite étape de mise à jour est basée sur le code d'empreinte numérique pour le destinataire et sur le code suspect ;

pour chaque destinataire parmi l'ensemble de destinataires, si le score pour le destinataire dépasse un seuil, mettre à jour l'ensemble de destinataires, en retirant le destinataire de l'ensemble de destinataires, de sorte que le destinataire ne se voit pas remettre une version supplémentaire d'un élément de contenu source, dans lequel le seuil est défini de sorte que la probabilité qu'un destinataire, qui n'est pas un destinataire complice, présente un score dépassant le seuil correspond tout au plus à une probabilité prédéterminée.

2. Procédé selon la revendication 1, dans lequel chaque symbole prend une valeur de symbole parmi un ensemble prédéterminé de valeurs de symbole ; et
dans lequel le i-ème symbole du code d'empreinte numérique pour un destinataire est généré sous la forme d'une variable aléatoire indépendante de sorte que, pour chaque valeur de symbole parmi l'ensemble prédéterminé de valeurs de symbole, la probabilité que le i-ème symbole du code d'empreinte numérique pour un destinataire prenne cette valeur de symbole correspond à une valeur de probabilité correspondante définie pour la i-ème position de symbole des codes d'empreintes numériques pour les destinataires.

3. Procédé selon la revendication 1 ou 2, dans lequel, si un symbole obtenu correspond à la i-ème position de symbole dans les codes d'empreintes numériques, alors l'étape de mise à jour du score pour un destinataire comprend l'étape consistant à incrémenter le score si ce symbole obtenu correspond au i-ème symbole dans le code d'empreinte numérique pour ce destinataire, et l'étape consistant à décrémenter le score si ce symbole obtenu ne correspond pas au i-ème symbole dans le code d'empreinte numérique pour ce destinataire.

4. Procédé selon l'une quelconque des revendications 1 à 3, dans lequel chaque symbole prend une valeur de symbole parmi un ensemble prédéterminé de valeurs de symbole, l'ensemble prédéterminé comprenant uniquement deux valeurs de symbole.

5. Procédé selon la revendication 2, dans lequel la probabilité que le i-ème symbole d'un code d'empreinte numérique pour un destinataire prenne une première valeur de symbole est « $p_i$ » et la probabilité que le i-ème symbole d'un code d'empreinte numérique pour un destinataire prenne une seconde valeur de symbole est « $1-p_i$ », dans lequel si un symbole obtenu correspond à la i-ème position de symbole dans les codes d'empreintes numériques, alors l'étape de mise à jour du score pour un destinataire comprend l'étape consistant à incrémenter le score par $\sqrt{(1-p_i)/p_i}$ si ce symbole obtenu correspond à la première valeur de symbole et si le i-ème symbole dans le code d'empreinte numérique pour ce destinataire correspond à la première valeur de symbole, et l'étape consistant à décrémenter le score par $\sqrt{p_i/(1-p_i)}$ si ce symbole obtenu correspond à la première valeur de symbole et si le i-ème symbole du code d'empreinte numérique pour ce destinataire correspond à la seconde valeur de symbole.

6. Procédé selon la revendication 5, dans lequel, si un symbole obtenu correspond à la i-ème position de symbole dans les codes d'empreintes numériques, alors l'étape de mise à jour du score pour un destinataire comprend l'étape consistant à incrémenter le score par $\sqrt{p_i/(1-p_i)}$ si ce symbole obtenu correspond à la seconde valeur de symbole et si le i-ème symbole dans le code d'empreinte numérique pour ce destinataire correspond à la seconde valeur de symbole, et l'étape consistant à décrémenter le score par $\sqrt{(1-p_i)/p_i}$ si ce symbole obtenu correspond à la seconde valeur de symbole et si le i-ème symbole dans le code d'empreinte numérique pour ce destinataire correspond à la première valeur de symbole.

7. Procédé selon la revendication 2, dans lequel la probabilité que le i-ème symbole d'un code d'empreinte numérique pour un destinataire prenne une première valeur de symbole est « $p_i$ » et la probabilité que le i-ème symbole d'un code d'empreinte numérique pour un destinataire prenne une seconde valeur de symbole est « $1-p_i$ », dans lequel la valeur « $p_i$ » est générée sous la forme d'une variable aléatoire indépendante présentant une fonction de densité de probabilité comme suit :

$$f(p) = \frac{1}{(\pi - 4\delta')\sqrt{p(1-p)}} \quad \text{for } \delta \le p \le (1-\delta)$$

dans laquelle $\delta' = \arcsin(\sqrt{\delta})$ de sorte que $0 < \delta' < \pi/4$, $\delta = 1/(\delta_c c)$, « c » est un nombre attendu de destinataires complices, et « $\delta_c$ » est une constante prédéterminée.

**8.** Procédé selon l'une quelconque des revendications 1 à 6, dans lequel chaque symbole pour chaque code d'empreinte numérique est généré indépendamment d'un nombre attendu de destinataires complices.

**9.** Procédé selon la revendication 8, lorsqu'elle dépend de la revendication 2, dans lequel la probabilité que le i-ème symbole d'un code d'empreinte numérique pour un destinataire prenne une première valeur de symbole est « $p_i$ » et la probabilité que le i-ème symbole d'un code d'empreinte numérique pour un destinataire prenne une seconde valeur de symbole est « $1-p_i$ », dans lequel la valeur « $p_i$ » est générée sous la forme d'une variable aléatoire indépendante présentant une fonction de densité de probabilité comme suit :

$$f(p) = \frac{1}{\pi\sqrt{p(1-p)}} \quad \text{pour } 0 < p < 1$$

**10.** Procédé selon la revendication 8 ou 9, dans lequel l'étape de mise à jour d'un score pour un destinataire consiste à, pour une ou plusieurs tailles de complicité, mettre à jour un score pour le destinataire pour cette taille de complicité qui indique une probabilité que le destinataire soit un destinataire complice dans l'hypothèse où le nombre de destinataires complices correspond à cette taille de complicité ;
dans lequel le procédé comprend, pour chaque destinataire parmi l'ensemble de destinataires, si un score correspondant pour ce destinataire dépasse un seuil correspondant à la taille de complicité pour ce score, l'étape consistant à mettre à jour l'ensemble de destinataires, en retirant ce destinataire de l'ensemble de destinataires, dans lequel les seuils sont définis de sorte que la probabilité qu'un destinataire, qui n'est pas un destinataire complice, présente un score dépassant le seuil correspondant, correspond tout au plus la probabilité prédéterminée.

**11.** Procédé selon la revendication 10, dans lequel l'étape de mise à jour du score pour une taille de complicité comprend l'étape consistant à ignorer un symbole obtenu pour la i-ème position du code suspect, si des symboles générés pour la i-ème position des codes d'empreintes numériques sont invalides pour cette taille de complicité.

**12.** Procédé selon la revendication 11, dans lequel des symboles générés pour la i-ème position des codes d'empreintes numériques sont invalides pour une taille de complicité « c » si la génération de symboles pour la i-ème position des codes d'empreintes numériques, non dépendante d'un nombre attendu de destinataires complices, a fait appel à une valeur de paramètre qui serait inapplicable dans le cadre d'une génération de symboles pour la i-ème position des codes d'empreintes numériques dépendante d'une taille de complicité attendue de « c ».

**13.** Procédé selon la revendication 11 ou 12, lorsqu'elle dépend de la revendication 9, dans lequel des symboles pour la i-ème position des codes d'empreintes numériques sont invalides pour une taille de complicité de « c » si « $p_i$ » se situe en dehors de la plage $[\delta, 1-\delta]$, où $\delta = 1/(\delta_c c)$ et où « $\delta_c$ » est une constante prédéterminée.

**14.** Procédé selon l'une quelconque des revendications précédentes, dans lequel, soit :

(a) le procédé comprend l'étape consistant à générer un code d'empreinte numérique pour un destinataire préalablement à la série de cycles ; ou
(b) ladite étape de fourniture comprend l'étape consistant à générer la partie du code d'empreinte numérique pour le destinataire.

**15.** Procédé selon l'une quelconque des revendications précédentes, dans laquelle la version de l'élément de contenu source fournie à un destinataire est formée par le filigranage d'une copie de l'élément de contenu source avec la partie du code d'empreinte numérique du destinataire.

**16.** Appareil comprenant un processeur (408) agencé de manière à mettre en œuvre un procédé de prise d'empreintes numériques, **caractérisé en ce que** le procédé comprend, pour chaque cycle d'une série de cycles, les étapes ci-dessous consistant à :

fournir, à chaque destinataire (104) parmi un ensemble de destinataires, une version respective (110) d'un élément de contenu source (102), l'élément de contenu source correspondant au cycle, dans lequel, pour le cycle, il existe une partie correspondante d'un code d'empreinte numérique respectif pour le destinataire, la partie comprenant un ou plusieurs symboles, dans lequel la version fournie au destinataire représente ledit un ou lesdits plusieurs symboles ;

obtenir, à partir d'un élément de contenu suspect (114), un ou plusieurs symboles correspondants, sous la forme d'une partie correspondante d'un code suspect ;

pour chaque destinataire parmi l'ensemble de destinataires, mettre à jour un score correspondant qui indique une probabilité que le destinataire soit un destinataire complice, dans lequel un destinataire complice est un destinataire auquel a été fournie une version d'un élément de contenu source qui a été utilisé en vue de générer un élément de contenu suspect, dans lequel ladite étape de mise à jour est basée sur le code d'empreinte numérique pour le destinataire et sur le code suspect ;

pour chaque destinataire parmi l'ensemble de destinataires, si le score pour le destinataire dépasse un seuil, mettre à jour l'ensemble de destinataires, en retirant le destinataire de l'ensemble de destinataires, de sorte que le destinataire ne se voit pas remettre une version supplémentaire d'un élément de contenu source, dans lequel le seuil est défini de sorte que la probabilité qu'un destinataire, qui n'est pas un destinataire complice, présente un score dépassant le seuil correspond tout au plus à une probabilité prédéterminée.

17. Programme informatique **caractérisé en ce que**, lorsqu'il est exécuté par un processeur (408), le programme informatique amène le processeur à mettre en œuvre un procédé de prise d'empreintes numériques comprenant, pour chaque cycle d'une série de cycles, les étapes ci-dessous consistant à :

fournir, à chaque destinataire (104) parmi un ensemble de destinataires, une version respective (110) d'un élément de contenu source (102), l'élément de contenu source correspondant au cycle, dans lequel, pour le cycle, il existe une partie correspondante d'un code d'empreinte numérique respectif pour le destinataire, la partie comprenant un ou plusieurs symboles, dans lequel la version fournie au destinataire représente ledit un ou lesdits plusieurs symboles ;

obtenir, à partir d'un élément de contenu suspect (114), un ou plusieurs symboles correspondants, sous la forme d'une partie correspondante d'un code suspect ;

pour chaque destinataire parmi l'ensemble de destinataires, mettre à jour un score correspondant qui indique une probabilité que le destinataire soit un destinataire complice, dans lequel un destinataire complice est un destinataire auquel a été fournie une version d'un élément de contenu source qui a été utilisé en vue de générer un élément de contenu suspect, dans lequel ladite étape de mise à jour est basée sur le code d'empreinte numérique pour le destinataire et sur le code suspect ;

pour chaque destinataire parmi l'ensemble de destinataires, si le score pour le destinataire dépasse un seuil, mettre à jour l'ensemble de destinataires, en retirant le destinataire de l'ensemble de destinataires, de sorte que le destinataire ne se voit pas remettre une version supplémentaire d'un élément de contenu source, dans lequel le seuil est défini de sorte que la probabilité qu'un destinataire, qui n'est pas un destinataire complice, présente un score dépassant le seuil correspond tout au plus à une probabilité prédéterminée.

18. Support porteur de données portant un programme informatique selon la revendication 17.

Figure 1

200

```
┌─────────────────────────────────┐
│ For each active receiver, provide symbols │
│ forming part of a fingerprint-code for that │
│ receiver to that receiver (e.g. provide a │
│ watermarked item of content representing │
│ those symbols to the receiver) │
└─────────────────────────────────┘
```
S202

```
┌─────────────────────────────────┐
│                                 │
│   Receive/obtain part of a suspect code   │
│                                 │
└─────────────────────────────────┘
```
S204

```
┌─────────────────────────────────┐
│                                 │
│     Perform fingerprint analysis on     │
│         the suspect-code          │
│                                 │
└─────────────────────────────────┘
```
S206

```
┌─────────────────────────────────┐
│                                 │
│ Remove any identified colluding users from │
│       the set of active users.        │
│                                 │
└─────────────────────────────────┘
```
S208

No ◆ End? ◇ S210

Yes

( Done )

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2249507 A

### Non-patent literature cited in the description

- Combining Tardos Fingerprinting Codes and Fingercasting. **STEFAN KATZENBEISSER et al.** Information Hiding. Springer Berlin Heidelberg, 11 June 2007, 294-310
- On the Design and Optimization of Tardos Probabilistic Fingerprinting Codes. **TEDDY FURON et al.** Information Hiding. Springer Berlin Heidelberg, 19 May 2008, 341-356
- **PETER ROELSE.** Dynamic subtree tracing and its application in pay-TV systems. *International Journal of Information Security,* 01 June 2011, vol. 10 (3), 173-187
- **GABOR TARDOS.** Optimal Probabilistic Fingerprint-codes. *STOC'03: Proceedings of the thirty fifth annual ACM symposium on Theory of computing,* 2003, 116-125
- **BORIS SKORIC et al.** Symmetric Tardos Fingerprinting Codes for Arbitrary Alphabet Sizes. *Des. Code Cryptography,* 2008, vol. 46 (2), 137-166
- **BORIS SKORIC et al.** Tardos Fingerprinting is better than we thought. *CoRR, abs/cs/0607131,* 2006
- **ODED BLAYER et al.** Improved versions of Tardos' fingerprinting scheme. *Des. Codes Cryptography,* 2008, vol. 48, 79-103
- **ANTONINO SIMONE et al.** Accusation Probabilities in Tardos Codes: the Gaussian Approximation is better than we thought. *Cryptology ePrint Archive, Report,* 2010, vol. 472, 2010
- **KOJI NUIDA et al.** An Improvement of Discrete Tardos Fingerprinting Codes. *Designs, Codes and Cryptography,* 2009, vol. 52, 339-362
- **DAN BONEH et al.** Collusion-Secure Fingerprinting for Digital Data. *IEEE Transactions on Information Theory,* 1998, 452-465